(19) Europäisches Patentamt
European Patent Office
Office européen des brevets

(11) Publication number: **0 421 761 A2**

(12) **EUROPEAN PATENT APPLICATION**

(21) Application number: **90310825.6**

(51) Int. Cl.5: **G11B 7/24**

(22) Date of filing: **03.10.90**

(30) Priority: **03.10.89 JP 256991/89**
**03.10.89 JP 256993/89**
**06.10.89 JP 260177/89**
**06.10.89 JP 260178/89**
**18.10.89 JP 268878/89**

(43) Date of publication of application:
**10.04.91 Bulletin 91/15**

(84) Designated Contracting States:
**DE FR GB IT NL**

(71) Applicant: **TEIJIN LIMITED**
**6-7, Minamihonmachi 1-chome Chuo-ku**
**Osaka-shi Osaka 541(JP)**

(72) Inventor: **Kawaguchi, Takeyuki**
**888-64, Katakura-cho**
**Hachioji-shi, Tokyo(JP)**
Inventor: **Shiro, Takashi**
**Esupuri Hino 310, 3-10-5, Shinmei**
**Hino-shi, Tokyo(JP)**
Inventor: **Daido, Takahiro**
**Teijin Musashino-ryo, 3-5-18, Tamadaira**
**Hino-shi, Tokyo(JP)**
Inventor: **Sasaki, Katsushi**
**2-20-202, Nakamachi**
**Koganei-shi, Tokyo(JP)**
Inventor: **Iwata, Kaoru**
**1296-54, Katakura-cho**
**Hachioji-shi, Tokyo(JP)**

(74) Representative: **Votier, Sidney David et al**
**CARPMAELS & RANSFORD 43, Bloomsbury Square**
**London WC1A 2RA(GB)**

(54) **Optical data storage medium formed of UV-curable resin and process for the production thereof.**

(57) An erasable optical data storage medium and a process for preparation thereof. The medium comprises a substrate and a dual layer formed on the substrate, the dual layer having characteristic features that:

(A) one layer of the dual layer is a first layer comprising a first resin which exhibits rubbery elasticity at 20° C and a first dyestuff having absorption in a visible light or near infrared ray region;

(B) the other layer of the dual layer is a second layer comprising a second resin which exhibits a glass state at 20° C, exhibits a rubbery state at an elevated temperature and can be reversibly transformed between the glass state and, the rubbery state and a second dyestuff having absorption in a visible light or near infrared ray region; and

(C) one of the above first resin and the above second resin is a UV curable resin and the other of these two resins is a different UV curable resin or a thermosetting resin.

EP 0 421 761 A2

# OPTICAL DATA STORAGE MEDIUM FORMED OF UV-CURABLE RESIN AND PROCESS FOR THE PRODUCTION THEREOF

This invention relates to an optical data storage medium formed of a UV-curable resin and a process for the production thereof. More specifically, it relates to an erasable optical data storage medium which utilizes a thermal deformation under heat in a UV-curable resin and a process for the production thereof.

Many optical data storage media using an organic dyestuff have been proposed (Japanese Laid-Open Patent Publications Nos. 163891/1986, 268487/1986, 56191/1987, 122787/1987, 39286/1987 and 72594/1988). Many optical media using a combination of an organic dyestuff with an organic polymer have been also proposed (Japanese Laid-Open Patent Publications Nos. 90291/1987, 62794/1988 and 191691/1988). Since, however, the recording mechanism of these data storage media is based on an irreversible deformation (formation of pits in many cases) which is caused on the recording media by means of heat generated when the dyestuff absorbs light (laser beam in many cases), it is very difficult or impossible to erase recorded information. That is, in the former data storage medium using an organic dyestuff alone, recording is carried out by means of pit formation involving evaporation and dissipation of the dyestuff, and therefore, pits formed once cannot be erased. In the latter optical data storage medium using a combination of a polymer with a dyestuff, recording is carried out by means of pit formation achieved with a flow deformation of the polymer, and it is therefore difficult to effectively erase record pits after once formed.

On the other hand, U.S. Patent 4,719,615, and its corresponding European Patent 136070 and Japanese Laid-Open Patent Publication No. 69846/1985 disclose an erasable optical data storage medium comprising (a) a layer of a first material, (b) a second layer of a second material adjacent to said first material, (c) said first and second layers cooperating as a medium for forming an optically detectable deformation therein by thermal expansion of said material without liquefaction or gasification of said first or second material, when said first layer is locally heated with light radiation of a first preselected wavelength, (d) said first material and said second material being sufficiently bonded to each other to enable said second layer to hold said first material in stretched, expanded conditions upon cessation of light radiation and cooling of said first material, retaining said optically detectable deformation, said second layer being sufficiently strong and rigid to hold said first material in stretched, expanded conditions.

The above U.S. Patent 4,719,615 discloses that said first material has (1) a low thermal conductivity, (2) a high coefficient of thermal expansion and (3) a glass transition temperature, Tg, considerably lower than that of the second material, and that examples of the first material are butyl rubbers, silicone rubbers, natural rubbers, ethylene copolymers, polyurethanes and styrene-butadiene rubbers. It is also disclosed in said Patent that examples of the second material are cellulose esters, polystyrenes, polysulfones, polycarbonates, polyacrylates, poly(vinylacetates), polyamides, acrylic polymers, silicone copolymers, epoxy resins, alkyd resins, styrene copolymers, cellulose ethers and polyvinyl alcohol.

U.S. Patent 4,852,075 discloses a method of writing and erasing data in an optical data storage medium having a first layer of a first elastic material and a second layer of a second material having a glass transition temperature, said method comprising;

(a) heating said first material to thermally expand said first material within its elastic limit,

(b) raising said second material above its glass transition temperature and permitting said expanding first material to deform said second layer causing an optically detectable deformation,

(c) cooling said second material below its glass transition temperature while said first material is in expanded conditions,

(d) causing said second layer to hold said first material in expanded conditions, and

(e) heating said second material above its glass transition temperature and allowing the elastic properties of said expanded, cooled first material to pull said second layer flat, erasing said optically detectable deformation.

The above U.S. Patent 4,852,075 merely describes the same compounds for the first and second materials as those described in U.S. Patent 4,719,615.

U.S. Patent 4,901,304 and its corresponding Japanese Laid-Open Patent Publication No. 136338/1988 disclose an optical data storage medium comprising (a) a data recording layer of a single integrated material and (b) said data recording layer having a first zone and a second zone, each of said zones being treated so as to cause different optical properties.

The above publications disclose polyurethane as the single integrated material.

U.S. Patent 4,825,430 and its corresponding European Patent 271,977 and Japanese Laid-Open Patent Publication No. 164042/1988 disclose an erasable optical data storage medium which is adapted to form

non-vesicular data bumps projecting into the compression layer when exposed to a write laser beam of predetermined wavelength projected through the substrate and the compression layer.

U.S. Patent 4,825,430 and its corresponding European Patent 271,977 and Japanese Laid-Open Patent Publication No. 164042/1988 disclose that the medium comprises a retention layer formed of a polymerized thermoset epoxy resin and an expansion layer formed of a polyurethane material.

U.S. Patent 4,852,077 discloses an optical data storage medium comprised of a plurality of layers including first and second light-transmissive layers and a signal surface susceptible to the formation of optically readable signals. As examples of the materials to constitute a plurality of layers above, it merely discloses a variety of rubbers, a variety of thermoplastic polymers and substances such as gelatin glue, casein, etc.

U.S. Patent 4,879,709 discloses an optical data storage medium comprising a rigid substrate, an expansion layer, which is absorptive of light at a first wavelength, and a retention layer, said retention layer being absorptive of light at a second wavelength distinct from said first wavelength and further at least 50 % absorptive of light at said first wavelength passing through it in a single pass.

As materials to constitute the above expansion layer and retention layer, the above U.S. Patent merely discloses the same materials as those disclosed in U.S. Patent 4,852,077.

U.S. Patent 4,896,314 and its corresponding European Patent 338,776 and Japanese Laid-Open Patent Publication No. 11385/1990 disclose an optical data storage medium which includes a triple layer recording structure having an expansion layer, a retention layer and a very thin reflective layer interposed between the retention and expansion layers.

The above patent or publication specifically disclose an expansion layer formed of polyurethane and a retention layer formed of epoxy.

U.S. Patent 4,780,867 and its corresponding European Patent 262,960 and Japanese Laid-Open Patent Publication No. 136337/1988 disclose an erasable optical data storage medium comprising a first layer and a second layer, in which data is stored as follows: The first layer is heated such that the first layer is thermally expanded within its elasticity limit, and at the same time, that the second layer is imparted, first, with elastic shear transformation and then with viscoelastic transformation without elevating the temperature of the second layer up to its glass transition temperature or above. And, the first layer is locally contracted such that the elastic shear transformation is reduced whereby the first layer is held in a locally expanded state due to the viscoelastic transformation of the second layer.

The above patent and publication specifically disclose a medium comprising the first layer, i.e. the expansion layer formed of polyurethane (Solithane 113) and the second layer, i.e. the retention layer formed of polyester (Kodel).

European Patent No. 320,834 and its corresponding Japanese Laid-Open Patent Publication No. 294238/1989 disclose an optical recording medium comprising (a) a dimensionally stable planar substrate having laminated to a surface thereof (b) an active layer comprising (1) a lower polymeric expansion layer laminated directly to the surface of the substrate and bonded to the expansion layer and (2) a retention layer. This optical recording medium has characteristic features in that the expansion layer contains a polymethine dye having a specific structure. As examples of the polymeric material for the expansion layer, the above patent and publication disclose elastomers such as butyl rubbers, silicone rubbers, natural rubbers, ethylene copolymers and styrene-butadiene copolymers. As specific examples of the polymeric material for the retention layer, there are disclosed amorphous polymers having the thermosetting or thermoplastic properties such as cellulose acetate, cellulose acetate-butyrate, polystyrene, polysulfonamide, polycarbonate, cellulose nitrate, hydroabiethyl alcohol, poly(ethyl-methacrylate), poly(vinylbutyral), aromatic polyester, polyamide, epoxy resins, acrylic polymers, polyvinyl acetate, silicone resins, alkyd resins, styrene-butadiene copolymers, vinyl chloride-vinyl acetate copolymers, nitrocellulose, ethylcellulose, polyvinyl alcohol, gelatin glue, casein and egg albumin.

European Patent 323,678 discloses a recording element of which both synthetic resin layers of the double layer comprise a dye which absorbs the laser light used, in which a bump is formed in the recording layer by exposure to laser light of a lower energy level and in which a bump which comprises a groove at the surface is formed by exposure to laser light of a higher energy level.

As the synthetic resin for the first layer of the double layer, the above publication discloses elastomers such as polyurethane elastomers. As the synthetic resin for the second layer, there are disclosed crosslinked polymers such as polystyrene, polycarbonate, polyacrylates, polymethacrylates, silicone resins, alkyd resins and epoxy resins.

International Patent Publication WO89/07312 discloses an optical data storage medium including a substrate with a first expansion layer, a second refractive layer bonded to the first layer, and a third retention layer bonded to the second layer, opposite to the first layer.

As materials suitable for all the layers except the refractive layer, the above publication discloses rubbers such as butyl rubbers, silicone rubbers, natural rubbers, styrene-butadiene rubbers; polymers such as cellulose acetate, cellulose acetate-butyrate, polystyrene, polysulfonamide, polycarbonate, cellulose nitrate, poly(ethyl-methacrylate), poly(vinyl butyral), aromatic polyesters, polyamides, acrylic polymers, polyvinyl acetate, silicone resins, alkyd resins, styrene-butadiene copolymers, vinyl chloride-vinyl acetate copolymers, nitrocellulose, ethylcellulose and polyvinyl alcohol; and substances such as gelatin glue, casein, egg albumin and dihydroabiethyl alcohol.

Further, the above publication discloses an epoxy family of resins as a material particularly suitable for the retention layer.

As described above, optical data storage media described in the above U.S. Patent 4,719,615 and subsequent prior arts comprise an expansion layer which forms a dome-like projected portion (bump) under heat by irradiation with laser beam and a retention layer which holds such a bump form.

In the above medium, data is stored as follows. Irradiation with laser beam is carried out at an absorption wavelength ($\lambda_1$) of a dyestuff pre-contained in the expansion layer so that the expansion layer forms a bump, and the retention layer holds a form of the bump. And, data is erased as follows. Irradiation with laser beam is carried out at an absorption wavelength ($\lambda_2$) of a dyestuff pre-contained in the retention layer so that the retention layer is heated to a temperature of its Tg or higher and that the bump form can be hardly held.

In order to effectively store data in the above dual medium using a retention layer comprising a dyestuff and a polymer, i.e. in order to heighten the bump as much as possible, a polymer having as high as possible a glass transition temperature is used for the retention layer. That is because the retention layer falls into a glass state in a high degree of thermal expansion. In contrast, in order to effectively erase data, a polymer having as low as possible a glass transition temperature is used for the retention layer to the contrary. Further, in order to obtain an erasable medium, it is undesirable that the retention layer undergoes an irreversible deformation, i.e. flow deformation of the polymer, with laser beam irradiation. From this viewpoint, three-dimensionally crosslinkable polymers such as thermoset epoxy resins are preferred as a resin for the retention layer as described in some of the above prior arts.

On the other hand, in order to effectively store data in a dual medium using an expansion layer comprising a dyestuff and a polymer, the use of an expansion layer having a higher coefficient of expansion modulus is desirable. And, in order to effectively erase data, the use of an expansion layer having a higher elastic recovery ratio is desirable. In other words, it is desirable that when the erasing beam irradiation releases an elastic force of the retention layer holding a bump form, the expansion layer contracts and recovers its original state, i.e. pre-recorded state.

In contrast, when the expansion layer undergoes plastic deformation or has a glass transition temperature equivalent to or higher than room temperature, no effective erasure occurs. In view of the foregoing, a three-dimensionally crosslinkable elastic polymer is preferred as a resin for the expansion layer.

Therefore, it is an object of this invention to provide an erasable optical data storage medium comprising a substrate and a dual layer formed on the substrate.

It is another object of this invention to provide an erasable optical data storage medium comprising a dual layer of which at least one layer comprises a UV-curable resin.

It is further another object of this invention to provide an erasable optical data storage medium comprising a dual layer whose first, expansion layer comprises a first resin which exhibits rubbery elasticity at 20 °C and a first dyestuff having absorption in a visible light or near infrared ray region.

It is further another object of this invention to provide an erasable optical data storage medium comprising a dual layer whose second, retention layer comprises a second resin which exhibits a glass state at 20 °C, exhibits a rubbery state at an elevated temperature and can be reversibly transformed between the glass state and the rubbery state and a second dyestuff having absorption in a visible light or near infrared ray region.

It is still another object of this invention to provide an erasable optical data storage medium which repetitively permits smooth and accurate writing, erasing and reading of data.

Further, it is another object of this invention to provide an industrially advantageous process for the production of the erasable optical data storage medium of this invention.

The other objects and advantages of this invention will be apparent from the following description.

According to this invention, the above objects and advantages of this invention are achieved, first, by an erasable optical data storage medium comprising a substrate and a dual layer formed on the substrate, the dual layer having the following characteristic features (A) to (C):

(A) one layer of the dual layer is a first layer comprising a first resin which exhibits rubbery elasticity at 20 °C and a first dyestuff having absorption in a visible light or near infrared ray region;

(B) the other layer of the dual layer is a second layer comprising a second resin which exhibits a glass state at 20° C, exhibits a rubbery state at an elevated temperature and can be reversibly transformed between the glass state and the rubbery state and a second dyestuff having absorption in a visible light or near infrared ray region; and

(C) one of the above first resin and the above second resin is a UV curable resin and the other of these two resins is a different UV curable resin or a thermosetting resin.

The erasable optical data storage medium of this invention basically comprises a substrate and a dual layer formed on the substrate as described above.

The above dual layer comprises a first layer and a second layer. The first layer is a so-called expansion layer, and has a property with which to form a bump in an irradiated region when heated by irradiation with laser beam.

In this invention, the above first layer comprises a first resin which exhibits rubbery elasticity at 20° C and a first dyestuff which has absorption in a visible light or near infrared ray region.

The second layer is a so-called retention layer, and has a property with which to retain a bump formed in the expansion layer.

In this invention, the above second layer comprises a second resin which exhibits a glass state at 20° C, exhibits a rubbery state at an elevated temperature and can be transformed between the glass state and the rubber state and a second dyestuff which has absorption in a visible light or near infrared ray region.

Further, in this invention, one of the above first resin and the above second resin is required to be a UV curable resin, and the other of these two resins is required to be a UV curable resin or a thermosetting resin. Namely, there are three resin combinations: one combination is that both the first and second resins are UV curable resins, the second combination is that the first resin is a UV curable resin and the second resin is a thermosetting resin, and the third combination is that the first resin is a thermosetting resin and the second resin is a UV curable resin.

Differing from the thermosetting resin, the UV curable resin can be advantageously used to form a layer on a substrate without causing thermal deterioration of the dyestuff, since it does not require a large amount of heat in the curing step when the resin is produced. In other words, since the deterioration of the dyestuff in the curing step can be prevented by use of the UV curable resin, there can be provided an optical data storage medium which permits writing and erasing data with high sensitivity.

Further, the UV cured resin can be produced at a higher production rate by irradiating the UV curable resin with UV ray. As a result, the UV curable resin permits production of an optical data storage medium with high productivity. And, since the curing with UV ray makes it easy to control initiation and termination of the curing reaction, it is made easy to control the physical properties such as elastic modulus and glass transition temperature of the resultant layer.

Of these combinations, the combination at least including a UV curable resin as the second resin is preferable, and the combination including UV curable resins as both of the first and second resins is more preferable.

The constituent requirements of this invention will be explained hereinafter.

First resin for first, expansion layer

The first resin which forms a first layer and exhibits rubbery elasticity at 20° C preferably has an elastic modulus, at 20° C, of 0.01 to 10 $kg/mm^2$. When the elastic modulus exceeds the above preferable upper limit, it tends to be difficult to a great extent to fix a bump formed with a laser beam irradiation for writing by a second, retention layer. When the elastic modulus is less than the above preferable lower limit, it tends to be difficult to a great extent to erase the data bump by flattening the bump with laser beam irradiation for erasing.

The first resin has an elastic recovery ratio preferably of at least 80 %, more preferably of at least 90 %. The elastic recovery ratio is defined by the equation of $\{1-(L'-L_o)/0.1L_o\} \times 100$ % wherein $L_o$ is a predetermined length of a sample, $01L_o$ is an amount of deformation when the sample is elongated by 10 % by exerting an external force (tensile force) on the sample, and $L'-L$ is an amount of residual deformation after the external force is removed. That is, the first resin is a resin having this elastic recovery ratio preferably of at least 80 %, more preferably of at least 90 %. When a medium uses a first resin having such a high elastic recovery ratio, it tends to be possible to erase the bump nearly completely by flattening it with a laser beam irradiation for erasing.

Further, in order to form a bump effectively when writing, it is desirable that the first resin has a volume expansion coefficient preferably of at least $1 \times 10^{-5}/°C$, more preferably of at least $1 \times 10^{-4}/°C$. When the

volume expansion coefficient is as above, a sufficiently large bump, advantageously, can be formed at a writing time, that is, a sufficiently large C/N ratio can be achieved.

The above first resin preferably has a glass transition temperature of not more than 20° C, as it exhibits rubbery elasticity at 20° C. When laser beam irradiation for erasing is carried out, the flattening for erasion of a bump is terminated or fixed at the glass transition temperature of the first resin having the formed bump. Therefore, the glass transition temperature of not more than 20° C (room temperature) is advantageous.

Preferred examples of the first resin as a material for the above first, expansion layer are a UV curable resin containing a UV curable component which mainly comprises a urethane or ester compound having an acryloyl group or a methacryloyl group, preferably such a urethane compound, particularly preferably polyurethane, and a thermosetting resin containing a thermosetting component which mainly comprises a thermosetting polyurethane or polyurea.

Examples of the urethane compound having an acryloyl or methacryloyl group are compounds formed by acrylating or methacrylating both of terminal hydroxyl groups of a soft segment [e.g. a linear aliphatic poly(oligo)ether, aliphatic poly(oligo)ester or poly(oligo)diene having a hydroxyl group on each of its ends] through a urethane bond.

Examples of the ester compound having an acryloyl or methacryloyl group are compounds formed by acrylating or methacrylating both of terminal carboxyl groups of a soft segment [e.g. a linear aliphatic poly-(oligo)ether, aliphatic poly(oligo)ester or poly(oligo)diene having a carboxyl group on each of its ends] through an ester bond.

Preferred examples of the linear aliphatic polyether are polyethylene glycol, polypropylene glycol, polytrimethylene glycol and polytetramethylene glycol.

Advantageously usable as the linear aliphatic polyester is a polymer or copolymer of an aliphatic diol such as ethylene glycol, trimethylene glycol, tetramethylene glycol, hexamethylene glycol, octamethylene glycol or diethylene glycol with an aliphatic dicarboyxlic acid such as adipic acid, sebacic acid, maleic acid or fumaric acid. Further, poly( E-caprolactone) can be also used as a linear aliphatic polyester.

Preferred examples of the polydiene are a polymer or copolymer of at least one kind of dienes such as butadiene, isoprene and chloroprene. These polydienes may contain one or both of 1,2-bond and 1,4-bond. The polydiene has a number average molecular weight preferably of 100 to 5,000, more preferably of 200 to 3,000, and such polydienes can be advantageously used. These polydiene can be preliminarily reacted with diisocyanate and used as a linear oligo-form compound.

Examples of the diisocyanate are aromatic, alicyclic and aliphatic diisocyanates such as 1,4-phenylene diisocyanate, tolylene diisocyanate, 4,4′-diphenylmethane diisocyanate, 4,4′-oxydiphenylene diisocyanate, 1,4-cyclohexane diisocyanate, tetramethylene diisocyanate, octamethylene diisocyanate, and the like.

The urethane compound having an acryloyl or methacryloyl group can be produced by reacting a two terminal hydroxyl groups-containing soft segment of the above soft segments with a (meth)acrylate having a hydroxyl group and a diisocyanate. This reaction is advantageously carried out as follows. At first, the soft segment and the diisocyanate are reacted with each other in such amounts that the equivalent weight of the diisocyanate is larger than that of the hydroxyl group of the soft segment, whereby a reaction product having a terminal isocyanato group is obtained. Then, the reaction product is reacted with the (meth)-acrylate having a hydroxyl group.

The ester compound having an acryloyl or methacryloyl group can be produced by reacting a two terminal hydroxyl groups-containing soft segment of the above soft segments with a (meth)acrylic acid or by reacting a two terminal carboyxlic groups-containing soft segment with a (meth)acrylate having a hydroxyl group.

Preferred examples of the said (meth)acrylate having a hydroxyl group are monohydroxy (meth)-acrylates such as 2-hydroxyethyl (meth)acrylate, 2-hydroxypropyl (meth)acrylate, trimethylolpropane di-(meth)acrylate and pentaerythritol tri(meth)acrylate, and glycerin di(meth)acrylate.

In this invention, the urethane compound and ester compound obtained as above preferably have a number average molecular weight of 300 to 10,000.

According to this invention, the following has been made clear. Of the urethane compounds and ester compounds obtained as above, a difunctional compound concerning its (meth)acrylate groups, e.g. a compound of a soft segment having two terminals to each of which 2-hydroxyethyl (meth)acrylate is bonded through a urethane bond and a trifunctional or polyfunctional compound concerning its (meth)acrylate groups, e.g. a compound of a soft segment having two terminals to each of which pentaerythritol triacrylate is bonded through a urethane bond are used in combination, whereby the glass transition temperature and elastic modulus of the resultant UV curable resin (first resin) can be easily controlled and its cure rate can be increased.

Further, polyfunctional urethane or ester compounds obtained by using the following low molecular weight polyol can be also used as a compound which functions similarly to the above polyfunctional compounds containing a soft segment.

Preferred examples of the low molecular weight polyol used in such polyfunctional urethane or ester compounds are aliphatic polyols such as ethylene glycol, trimethylene glycol, propylene glycol, tetramethylene glycol, hexamethylene glycol, diethylene glycol, trimethylol propane, pentaerythritol and dipentaerythritol.

The urethane compound of such an aliphatic polyol can be produced by using the above aliphatic polyol in place of the soft segment in the above process for the production of the polyfunctional compound having the soft segment.

Examples of the ester compound of such an aliphatic polyol are ethylene glycol di(meth)acrylate, tetramethylene di(meth)acrylate, trimethylolpropane tri(meth)acrylate, pentaerythritol tetra(meth)acrylate and dipentaerythritol hexa(meth)acrylate.

The above urethane compound and/or ester compound containing the soft segment which is/are difunctional in respect of (meth)acrylate groups thereof and the other polyfunctional compound above are advantageously usable in a weight ratio of 2/8 to 8/2, preferably 3/7 to 7/3 in view of coatability in addition to the above properties and cure rate of the resultant UV curable resin (first resin).

Further, in another aspect of this invention, a fluorine-containing (meth)acrylate is used in combination with the above urethane compound or ester compound as a UV curable component for the first resin of this invention, whereby the solvent resistance of the first layer can be further improved.

Preferred as the above fluorine-containing (meth)acrylate is a compound of the following formula

$$CH_2=\overset{\overset{\displaystyle R^1}{|}}{C}-COO-(CH_2)_n-(CF_2)_m-R^2$$

wherein $R^1$ is a hydrogen atom or a methyl group, $R^2$ is a hydrogen atom, a fluorine atom or an alkyl group having 1 to 3 carbon atoms, n is an integer of 1 to 3, and m is an integer of 1 to 10.

The above fluorine-containing (meth)acrylate is advantageously used in such an amount that is preferably 1 to 30 % by weight, more preferably 3 to 20 % by weight, based on the above urethane compound or ester compound of the soft segment. When the amount of the fluorine-containing (meth)-acrylate is less than 1 % by weight, the first layer is not sufficiently improved in solvent resistance to be achieved by the use of the fluorine-containing (meth)acrylate. When the amount thereof exceeds 30 % by weight, reduction in elasticity of the first layer is liable to occur. Thus, the amount thereof outside the above range is undesirable.

The first resin in this invention may be a thermosetting resin containing a thermosetting component which mainly comprises thermosetting polyurethane or polyurea.

The thermosetting polyurethane as a thermosetting component can be produced, e.g. by reacting a soft segment having a terminal hydroxyl group with a polyfunctional isocyanate or by reacting a precursor having a terminal isocyanato group with a polyfunctional alcohol.

As the soft segment having a terminal hydroxyl group, preferred are those linear aliphatic polyethers, aliphatic polyesters and polydienes which are described above concerning the UV curable thermosetting component.

Preferred examples of the polyfunctional isocyanate are those aromatic, alicyclic and aliphatic diisocyanates which are described above concerning the UV curable thermosetting component, a trimethylol propane/tolylene diisocyanate adduct having a trimethylol propane/tolylene diisocyanate molar ratio of 1/3, and a polymethylene polyphenylene polyisocyanate having, e.g. the following formula

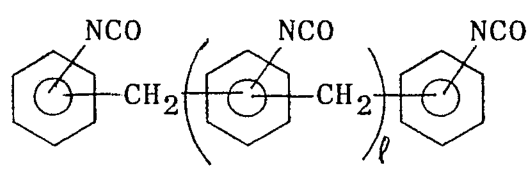

,

wherein ℓ is 0 or a positive integer.

The precursor having a terminal isocyanato group can be produced by reacting a soft segment having a terminal hydroxyl group as above with a polyfunctional isocyanate in such amounts that the equivalent weight of the isocyanato group is over that of the hydroxyl group.

Preferred examples of the polyfunctional alcohol are ethylene glycol, diethylene glycol, trimethylene glycol, tetramethylene glycol, glycerin, trimethylolpropane, pentaerythritol, etc.

The thermosetting polyurea as a thermosetting component can be produced by reacting the above precursor having a terminal isocyanato group with a polyfunctional amine.

Preferred examples of the polyfunctional amine are aliphatic, alicyclic and aromatic amines such as diethylenetriamine, triethylenetetramine, methylenedianiline, oxydianiline and methylenebisorthochloroaniline.

Second resin for second, retention layer

The second resin which forms the second layer and which exhibits a glass state at 20° C and a rubbery state at an elevated temperature has a glass transition temperature preferably of 60 to 150° C, more preferably of 70 to 120° C.

As described previously, the second resin has functions of retaining a bump formed in the first layer and releasing the bump at an erasing time. In order for the second resin to carry out these two functions effectively, the second resin is essentially required to exhibit a glass state at 20° C in which it has a sufficient elastic modulus to hold a bump and to exhibit a rubber state at an elevated temperature in which it has so low an elastic modulus as not to prevent the first layer from forming the bump under heat.

The second resin is required to transform itself reversibly between a glass state and a rubbery state in order to achieve the above two functions.

The second resin has an elastic modulus, at 20° C, preferably of at least 50 kg/mm$^2$, more preferably of at least 80 kg/mm$^2$, particularly preferably of at least 100 kg/mm$^2$. The upper limit of the preferred elastic modulus of the second resin is about 800 kg/mm$^2$. Further, the second resin exhibits an elastic modulus, at a temperature higher by 80° C than its glass transition temperature, preferably of not more than 1/10, more preferably of not more than 1/20, of its elastic modulus at 20° C.

Preferred examples of the above second resin as a material for the second, retention layer are (a) a UV curable resin containing a UV curable component which mainly comprises a acryloyl or methacryloyl-terminated epoxy oligomer, (b) a UV curable resin containing a UV curable component which mainly comprises modified epoxy novolak having an acryloyl or methacryloyl group, (c) a UV curable resin containing a UV curable component which mainly comprises a polycarbonate having an unsaturated hydrocarbon group, (d) a UV curable resin containing a UV curable component which mainly comprises a modified phenoxy resin having an unsaturated hydrocarbon group, and (e) thermosetting resins such as a cured product of an epoxy resin.

Of the above resins as the second resin, preferred are (b) the UV curable resin containing a UV curable component which mainly comprises modified epoxy novolak having an acryloyl or methacryloyl group and (c) the UV curable resin containing a UV curable component which mainly comprises a polycarbonate having an unsaturated hydrocarbon group.

Preferred examples of the acryloyl or methacryloyl-terminated epoxy oligomer as a UV curable component for the UV curable resin (a) are an oligomer of the following formula (a1)

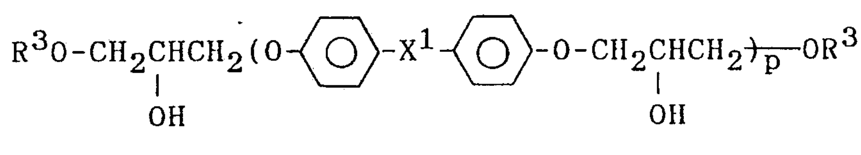

wherein $X^1$ is $SO_2$, an alkylene group having 1 to 5 carbon atoms or a 5- or 6-membered cycloalkylene group having 5 to 10 carbon atoms, $R^3$ is a (meth)acryloyl group, and p is a number of 1 to 20;
and an oligomer of the following formula (a2)

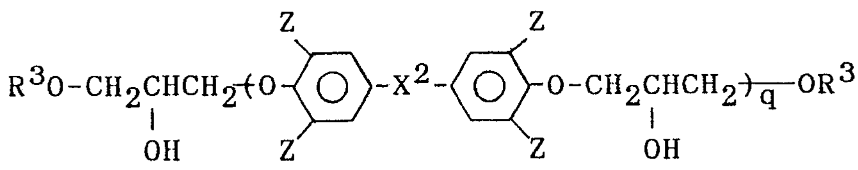

wherein $X^2$ is $SO_2$, an alkylene group having 1 to 5 carbon atoms or a 5- or 6-membered cycloalkylene group having 5 to 10 carbon atoms, $R^3$ is a (meth)acryloyl group, Z is a hydrogen atom, a halogen atom or an alkyl group having 1 to 3 carbon atoms, and q is a number of 1 to 20, provided that at least two of the four Z's are halogen atom(s) and/or alkyl group(s) having 1 to 3 carbon atoms.

The oligomers of the above formulae (a1) and (a2) in which $R^3$ is an acryloyl group are preferred, since they are highly reactive. Further, the oligomers of the above formulae (a1) or (a2) in which $X^1$ or $X^2$ is a methylene or 2,2-propylene group are preferred since they give a UV curable resin which exhibits a high glass transition temperature and has high recording properties without any decrease in erasing properties.

Examples of the modified epoxy novolak having an acryloyl or methacryloyl group, as a UV curable component for the UV curable resin (b) are a compound of the following formula (b1)

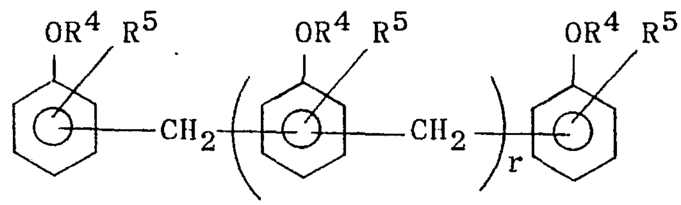

wherein $R^4$ is a group having the formula of

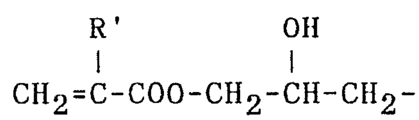

in which $R'$ is a hydrogen atom or a methyl group, $R^5$ is a hydrogen atom, a halogen atom or a methyl group, and r is a number of 1 to 20.

The compounds of the above formula (b1) in which $R'$ is a hydrogen atom are preferred, since they are highly reactive.

Examples of the polycarbonate having an unsaturated hydrocarbon group as a UV curable component for the UV curable resin (c) are

a polycarbonate comprising a recurring unit of the following formula (c1)

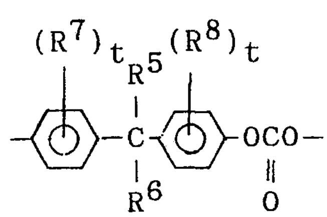

wherein $R^5$ and $R^6$ are independently a hydrogen atom, a saturated hydrocarbon group having 1 to 8 carbon atoms and optionally having a halogen atom, or a cyclic hydrocarbon group having 5 to 10 carbon atoms, $R^7$ and $R^8$ are independently a monovalent aliphatic unsaturated hydrocarbon group having 2 to 8 carbon atoms, and t is 0, 1 or 2, provided that the two t's cannot be zero together;

a polycarbonate comprising a recurring unit of the following formula (c2)

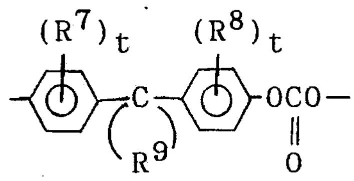

wherein $R^7$, $R^8$ and t are as defined in the above formula (c1), and $R^9$ is a divalent unsaturated hydrocarbon group having 4 to 10 carbon atoms;
a polycarbonate comprising a recurring unit of the following formula (c3)

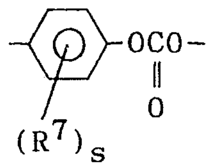

wherein $R^7$ is as defined above and s is 1 or 2;
a polycarbonate comprising a recurring unit of the following formula (c4)

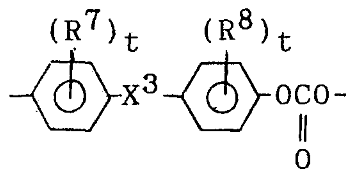

wherein $R^7$, $R^8$ and t are as defined above, and $X^3$ is an alkylene group having at least two carbon atoms between two phenylene rings to which the alkylene is attached, a phenylene group, a cycloalkylene group, an aralkylene group, -O-, -S-, $-SO_2-$,

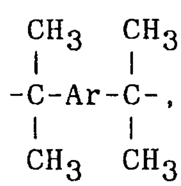

$-SO_2-Ar-SO_2-$, or -O-Z-O- in which Ar is an arylene group having 6 to 12 carbon atoms and optionally having a substituent on the ring, and Z is an alkylene group having 2 to 4 carbon atoms;
a polycarbonate comprising a recurring unit of the following formula (c5)

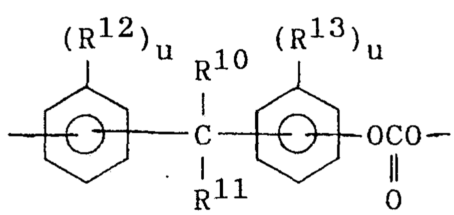

wherein $R^{10}$ is a monovalent aliphatic unsaturated hydrocarbon group having 2 to 8 carbon atoms, $R^{11}$ is a

hydrogen atom, an alkyl group having 1 to 10 carbon atoms, a cycloalkyl group having 5 to 10 carbon atoms, an aryl group having 6 to 10 carbon atoms, or a monovalent aliphatic unsaturated hydrocarbon group having 2 to 8 carbon atoms, $R^{12}$ and $R^{13}$ are identical or different and are independently a halogen atom or an alkyl group having 1 to 20 carbon atoms, and u is 0 or an integer of 1 to 4; and

a polycarbonate comprising a recurring unit of the following formula (c6)

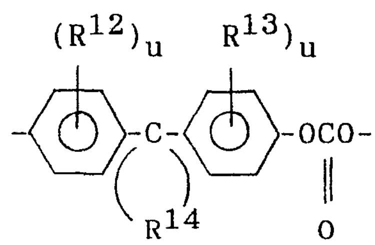

wherein $R^{12}$, $R^{13}$ and u are as defined above, and $R^{14}$ is a divalent unsaturated hydrocarbon group having 4 to 10 carbon atoms.

The polycarbonate used in this invention contains at least one of the above recurring units (c1) to (c6) in an amount, preferably, of at least 10 % by weight, more preferably of at least 20 % by weight, further preferably of 40 % by weight.

In the above formula (c1), the saturated hydrocarbon group having 1 to 8 carbon atoms and optionally having a halogen atom, represented by $R^5$ and $R^6$, may be linear or branched, and examples thereof are methyl, ethyl, n-propyl, iso-propyl, n-butyl, iso-butyl, pentyl, hexyl and octyl groups. These saturated hydrocarbon groups may be substituted with a halogen atom such as fluorine, chlorine, bromine, or the like. Similarly, examples of the cyclic hydrocarbon group having 5 to 10 carbon atoms, represented by $R^5$ and $R^6$ are cyclopentyl and cyclohexyl groups.

In the above formula (c1), the monovalent aliphatic unsaturated hydrocarbon group having 2 to 8 carbon atoms, represented by $R^7$ and $R^8$, may be linear or branched, and preferred examples thereof are vinyl, isopropenyl, allyl, propenyl, 1,4-butadienyl and 1,3-pentadienyl groups. Of these aliphatic unsaturated hydrocarbon groups, preferred are groups, an alkylene group in particular, having 2 to 6 carbon atoms.

In the above formula (c2), as the divalent saturated hydrocarbon group having 4 to 10 carbon atoms, represented by $R^9$, preferred is a hydrocarbon group which forms together with a carbon atom to which the hydrocarbon group bonds, for example a cyclopentylidene, cyclohexylidene or bicyclo[2,2,1]-heptylidene group.

In the formula (c3), examples of the group represented by $R^7$ are the same as those described concerning the formula (c1).

In the formula (c4), preferred examples of the alkylene group, represented by $X^3$, having at least two carbon atoms between two phenylene groups to which the alkylene group is bonded are ethylene, trimethylene, 2,2-dimethyl-1,3-propylene, etc.

Further, preferred examples of the cycloalkylene group represented by $X^3$ are cyclohydrocarbons having 5 to 10 carbon atoms such as cyclopentylene and cyclohexylene groups. And, preferred examples of the aralkylene group represented by $X^3$ are

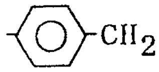

and

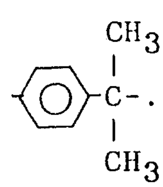

Further, other preferred examples of the groups represented by $X^3$ are

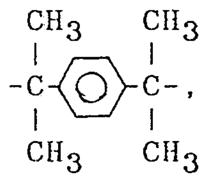, 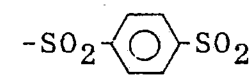, $-O-(CH_2)_2-O-$ and

$-O-(CH_2)_4-O-$.

In the above formula (5c), the monovalent aliphatic unsaturated hydrocarbon group having 2 to 8 carbon atoms, represented by $R^{10}$ and $R^{11}$, may be linear or branched, and examples thereof are as specified concerning $R^7$ and $R^8$ in the above formula (c1).

Preferred examples of the groups further represented by $R^{11}$ are linear or branched alkyl groups having 1 to 10 carbon atoms such as methyl, ethyl, isopropyl and isobutyl; cycloalkyl groups such as cyclopentyl and cyclohexyl; and aryl groups having 6 to 10carbon atoms such as phenyl, tolyl, xylyl and naphthyl.

In the above formula (c5), $R^{12}$ and $R^{13}$ may be, for example, halogen atoms such as chlorine and bromine and alkyl groups having 1 to 20 carbon atoms such as methyl, ethyl, propyl, isopropyl, butyl, isobutyl and tert-butyl.

In the above formula (c6), $R^{14}$ is a divalent unsaturated hydrocarbon group having 4 to 10 carbon atoms. As such, preferred is an unsaturated hydrocarbon group which forms, for example, 2-cyclopentene-1,1-diyl, 2-cyclohexene-1,1-diyl, 2,4-cyclohexadiene-1,1-diyl, 3,5,5-trimethylene-2-cyclohexene-1,1-dinyl, or the like together with the carbon atom to which it is bonded.

As described above, the polycarbonate as a UV curable component containst at least one of the recurring units of the above formulae (c1) to (c6) in an amount of at least 10 % by weight.

The following formulae (c7) to (c10) show recurring units other than those of the above formulae (c1) to (c6).

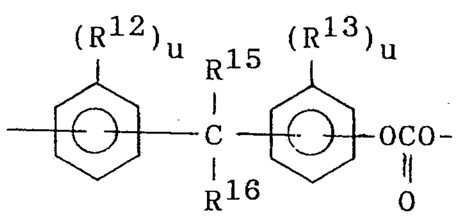

... (c7)

wherein $R^{12}$ and $R^{13}$ and u are as defined in the formula (c5), and $R^{15}$ and $R^{16}$ are identical or different and are independently a hydrogen atom, an alkyl group having 1 to 10 carbon atoms, a cycloalkyl group having 5 to 10 carbon atoms or an aryl group having 6 to 10 carbon atoms.

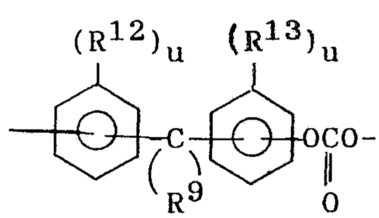

... (c8)

wherein $R^{12}$, $R^{13}$ and u are as defined in the above formula (c5), and $R^9$ is as defined in the above formula (c2).

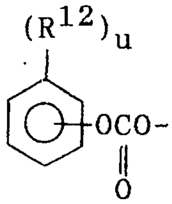

... (c9)

wherein $R^{12}$ and u are as defined in the above formula (c5).

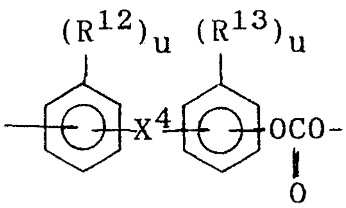

... (c10)

wherein $R^{12}$, $R^{13}$ and u are as defined in the above formula (c5), and $X^4$ is a phenylene group, a cycloalkylene group, an aralkylene group, -O-, -S- or $-SO_2-$.

Specific examples of the groups represented by $R^{15}$ and $R^{16}$ in the above formula (c7) and specific examples of the groups represented by $X^4$ in the above formula (c10) are believed to be understood, respectively, according to examples for $R^{11}$ in the formula (c5) and examples for $X^3$ in the formula (c4).

Polycarbonates having the above recurring units can be produced according to processes known per se, e.g. a process described in "Plastic Zairyo Koza" [5], Polycarbonate, pages 9 to 14, published by Nikkan Kogyo Shimbunsha.

For example, the polycarbonate can be produced, preferably, (1) by reacting a corresponding dihydroxy compound with phosgene, (2) by reacting a corresponding dihydroxy compound with a bischloroformate of a dihydroxy compound, or (3) by reacting a corresponding dihydroxy compound with a carbonate diester such as carbonate di($C_1$-$C_5$)alkylester or with a carbonate diaryl ester.

In this invention, a polycarbonate produced by using phosgene is advantageously used, since it is excellent in transparency and can be produced at a low cost. Such a polycarbonate has preferably a number average molecular weight of 10,000 to 100,000.

As the modified phenoxy resin having an unsaturated hydrocarbon group as a UV curable component for the UV curable resin (d), preferred is a modified phenoxy resin in which at least part of the hydroxyl groups (OH) of a phenoxy resin comprising a recurring unit of the following formula (d1)

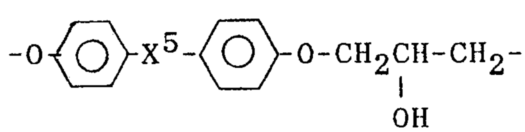

wherein $X^5$ is an aliphatic hydrocarbon group having 1 to 10 carbon atoms or an alicyclic hydrocarbon group having 5 to 10 carbon atoms,
is replaced by a cinnamate ester-type functional group of the following formula

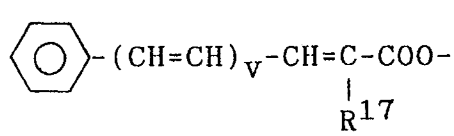

wherein v is 0 or 1, and $R^{17}$ is a hydrogen atom or a cyano group,
or by a (meth)acrylate ester-type functional group of the following formula

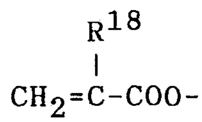

wherein $R^{18}$ is a hydrogen atom or a methyl group.

When the above cinnamate ester-type functional group is subjected to the irradiation of UV ray, its carbon-carbon double bonds cause cyclization-addition reaction to form a cyclobutane ring. The cinnamate ester-type functional group of the above formula in which $R^{17}$ is a cyano group rather than a hydrogen atom exhibits higher activity to UV ray having a longer wavelength, and it also exhibits high compatibility with a dyestuff having a higher polarity. Further, the cinnamte ester-type functional group of the above formula in which v is 1 rather than 0 has higher activity to UV ray having a longer wavelength.

The above (meth)acrylate ester-type functional group further exhibits excellent optical activity to UV ray when a photoinitiator is used in combination. And, the acrylate ester functional group is more preferred since it exhibits a higher reaction rate than the methacrylate ester functional group.

The amount of the cinnamate ester-type functional group and/or the (meth)acrylate ester-type functional group to be introduced is required to be efficiently selected in consideration of glass transition point of the modified phenoxy resin, compatibility with dyestuff, reactivity under UV ray irradiation, crosslinking density of the resultant cured resin. In general, it is desirable to introduce the above functional group(s) in an amount preferably 5 to 80 % by weight, more preferably 10 to 50 % by weight on the basis of the hydroxyl group of the phenoxy resin.

As described above, the second resin of this invention can further be a cured product (e) of a thermosetting resin such as an epoxide resin.

Preferred examples of such an epoxide resin are a resin of the following formula (e1)

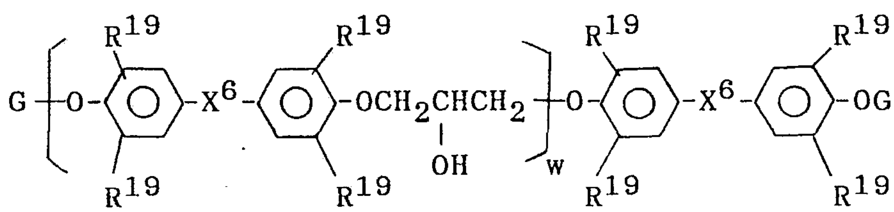

wherein $R^{19}$ is a hydrogen or halogen atom, $X^6$ is an aliphatic hydrocarbon group having 1 to 10 carbon atoms, an alicyclic hydrocarbon group having 5 to 10 carbon atoms or $SO_2$, G is a glycidyl group, and w is a number of 0 to 20, and

a resin of the following formula (e2)

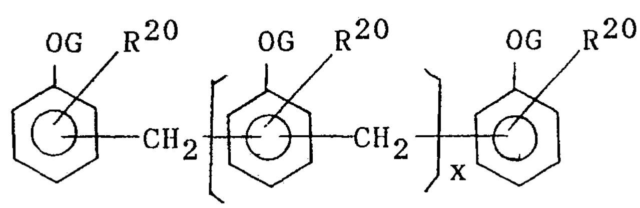

wherein G is as defined in the above formula (e1), $R^{20}$ is a hydrogen atom or a methyl group, and x is a number of 5 to 20.

In the above formula (e1), as a halogen atom represented by $R^{19}$, preferred are chlorine and bromine.

Preferred examples of the group represented by $X^6$ are aliphatic hydrocarbon groups having 1 to 10 carbon atoms such as methylene and 2,2-propylene; alicyclic hydrocarbon groups having 5 to 10 carbon atoms such as 1,1-cyclopentylene and 1,1-cyclohexylene; and $-SO_2-$. In the formula (e1), w is 0 to 20 and preferably 0 to 15.

In the above formula (e2), $R^{20}$ is a hydrogen atom or a methyl group.

The properties (such as glass transition temperature and elastic modulus) and curing reactivity of the cured product of the epoxy resin used in this invention depend on a curing agent. The curing agent is

required to be selected in consideration of these properties and compatibility with a dyestuff to be used. For example, an amine and an anhydride are used as a curing agent. Preferred examples of the amine are aliphatic, alicyclic and aromatic polyamines such as diethylenetriamine, triethylenetetramine, tetraethylenepentamine, diaminocyclohexane, methylenedianiline, oxydianiline and tolylenediamine. Also preferred are heteroatom-containing amines such as a polyamideamine, versamide and a spiro ring-containing amine of the following formula.

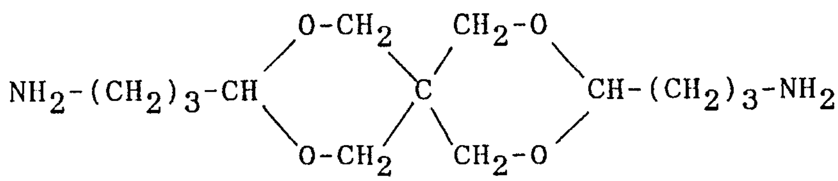

On the other hand, preferred examples of the above anhydride curing agent are maleic anhydride, succinic anhydride, phthalic anhydride, tetrahydrophthalic anhydride, methyltetrahydrophthalic anhydride, pyromellitic anhydride, glutaric anhydride, trilmellitic anhydride, methyl Nadic anhydride and chlorendic anhydride.

The amount of these curing agents for use is determined depending upon the epoxy value of the epoxy resin to be used.

First dyestuff and second dyestuff having absorption in a visible light or near infrared ray region

The first dyestuff is that which forms the first, expansion layer together with the first resin, and the second dyestuff is that which forms the second, retention layer together with the second resin.

The first dyestuff has a function of effectively absorbing laser beam under irradiation and transforming it into heat during a writing process. And, the second dyestuff has a like function during an erasing process. In general, the laser beam used in the writing process differs from that used in the erasing process. Therefore, the first dyestuff and the second dyestuff usually differ from each other although they have absorption in a visible light or infrared ray region, preferably in a near infrared ray region.

As a laser, there can be used a variety of lasers such as argon laser, helium laser and laser diode. Of these, a laser diode is easily available and less expensive, and therefore it is preferred.

An available laser diode usually has an oscillation wavelength region at 770 to 780 nm and 830 to 840 nm. Therefore, dyestuffs having a maximum absorption wavelength at such wavelength regions are preferred. That is, in order to effectively absorb laser beam when a laser diode is used, it is preferred that either one of the first and second dyestuffs in a monomolecular dispersion state has a maximum absorption wavelength ($\lambda_{max}$) at 700 to 800 nm, preferably at 740 to 800 nm, and the other dyestuff in a monomolecular dispersion state has a maximum absorption wavelength ($\lambda_{max}$) at 780 to 880 nm, preferably at 800 to 850 nm.

The reason therefor is as follows. In order to carry out a photoabsorption process efficiently, it is desirable to homogeneously disperse these dyestuffs in the corresponding resins. However, when the dyestuffs are dissolved or dispersed in the resins, the absorption spectrum patterns of these dyestuffs are not necessarily equivalent to those obtained from these dyestuffs in a monomolecular dispersion state, and these spectrum patterns vary depending upon compatibility with the resins, dyestuff concentration, and the like. In such a case, with an increase in the dyestuff concentration, the spectrum patterns become broader, and that the maximum absorption wavelength ($\lambda_{max}$) of these resins is liable to shift to a longer wavelength side. When these dyestuffs are homogeneously dispersed in the resins, therefore, the absorption characteristics thereof in the resins are essential. For this reason, the following has been made clear: In the state where the dyestuffs are homogeneously dispersed, a dyestuff having absorption ($\lambda_{max}$) at 700 to 800 nm, preferably at 740 to 800 nm can be advantageously used for efficient absorption of laser diode beam at 770 to 780 nm, and a dyestuff having absorption ($\lambda_{max}$) at 780 to 880 nm, preferably at 800 to 850 nm can be advantageously used for efficient absorption of laser diode beam at 830 to 840 nm.

According to this invention, it is preferable that the first dyestuff has a maximum absorption wavelength at 780 to 880 nm, and that the second dyestuff has a maximum absorption wavelength at 700 to 800 nm. Further, it is desirable that the second dyestuff contained in the retention layer has high reflectivity to beam when reading (playback). For example, when laser beam having a wavelength of 770 to 780 nm is used for

reading, it is desirable that the second dyestuff has preferably a reflectivity of 10 to 15 % to the said laser beam while it is dispersed in the resin.

The first and second dyestuffs, desirably, has excellent dispersibility in or compatibility with the first and second resins, respectively, and are also soluble in a solvent which can dissolve these resins.

Preferred examples of the first and second dyestuffs are polymethine dyestuffs such as cyanine, pyrylium, thiapyrylium, squarilium, and croconium, azulenium dyestuffs; phthalocyanine dyestuffs such as phthalocyanine and napthalocyanine; phenylenedithiol metal complex and phenylenediamine metal complex dyestuffs; naphthoquinone and anthraquinone dyestuffs, triphenylmethane dyestuff; and aminium and imminium dyestuffs.

Of these dyestuffs, the phthalocyanine dyestuff particularly exhibits a comparatively sharp absorption at 750 to 850 nm. Examples of such a phthalocyanine dyestuff are a naphthalocyanine of the following formula (D1)

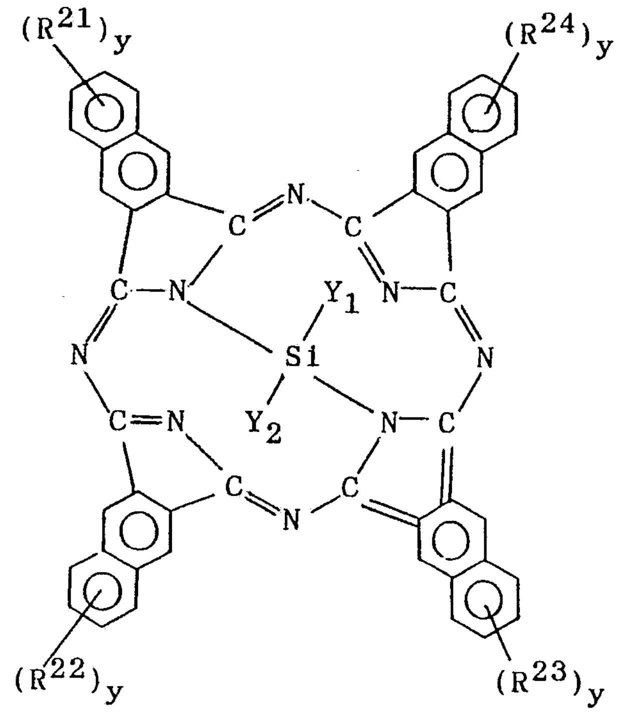

wherein $Y_1$ and $Y_2$ are identical or different and are an alkyloxy, alkenyloxy, aralkyloxy, aryloxy, alkylsiloxy, alkoxysiloxy or aryloxysiloxy group having 5 to 25 carbon atoms and optionally containing oxygen, nitrogen or silicon, $R^{21}$ to $R^{24}$ are identical or different and are a hydrogen atom, a linear or branched alkyl group or a halogen, and y's are identical or different and are an integer of 1 to 6;

a naphthalocyanine of the following formula (D2)

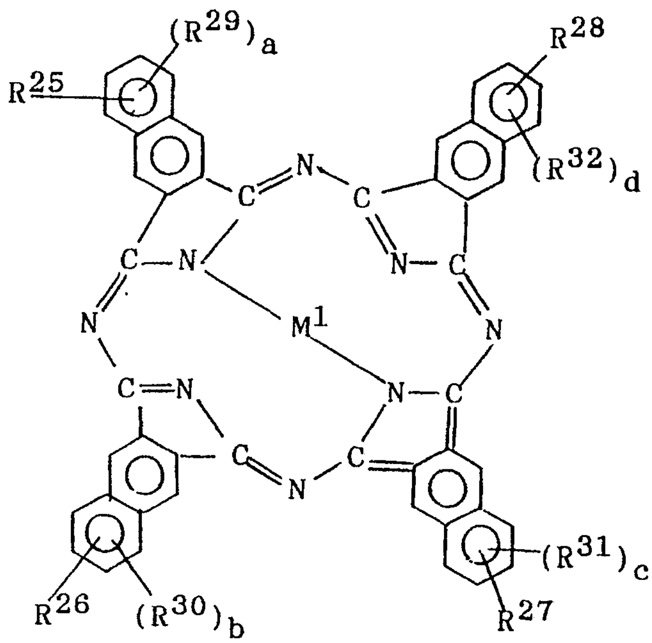

wherein $R^{25}$ to $R^{28}$ are identical or different and are a linear or branched alkyl group having 4 to 12 carbon atoms, $R^{29}$ to $R^{32}$ are identical or different and are a linear or branched alkyl group having 1 to 18 carbon atoms, each of a, b, c and d is 0 or 1 but all of a, b, c, and d cannot be zero at the same time, and $M^1$ is a metal and metal oxide or a metal halide;

a phthalocyanine of the following formula (D3)

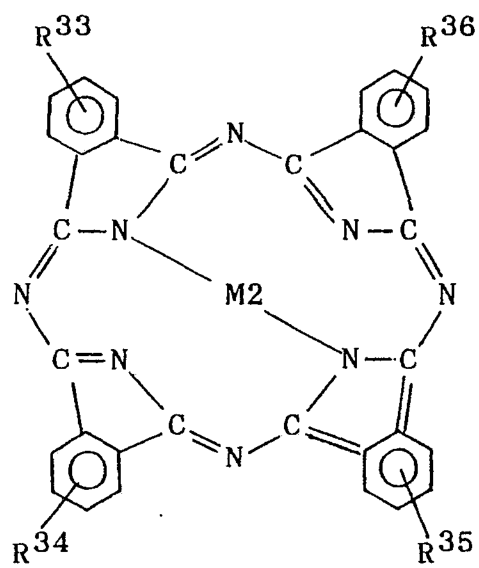

wherein $R^{33}$ to $R^{36}$ are identical or different and are a hydrogen atom or at least one nitro, halogen, phenyl or fused benzene ring group substituted on the benzene ring, and $M^2$ is a hydrogen atom, a metal oxide or a metal halide; and

a phthalo•naphthalocyanine of the following formula (D4)

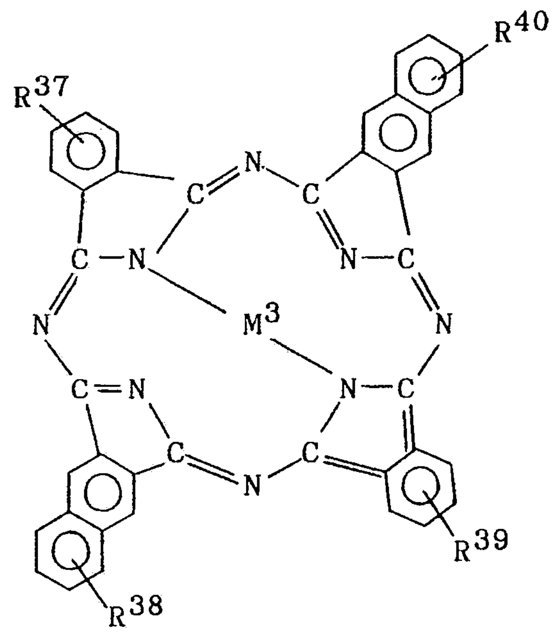

wherein $R^{37}$ to $R^{40}$ are identical or different and are a linear or branched alkyl group having 1 to 18 carbon atoms, and $M^3$ is a metal and metal oxide or a metal halide.

The above phthalocyanine dyestuffs are preferred as the second dyestuff, i.e. a dyestuff for use in the retention layer.

Dyestuffs of the above formula (D1) in which $Y^1$, $Y^2$, and $R^{21}$ to $R^{24}$ are the following substituents are preferred.

1) Preferred substituents for $Y^1$ and $Y^2$:

$-OSi(C_mH_{2m+1})_3$, $-OC_mH_{2m+1}$,

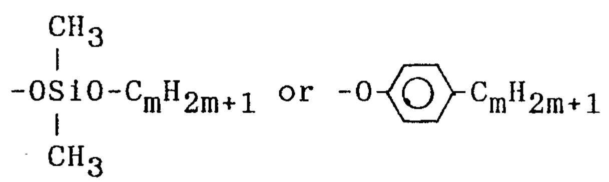

or (m = 5 to 12)

2) Preferred substituents for $R^{21}$ to $R^{24}$:

$-C_{m'}H_{2m'+1}$ ($m'$ = 1 to 12)

These dyestuffs have a bulky substituent, and therefore, cannot come close to each other. In other words, association of the dyestuffs with each other is inhibited. Furthermore, the bulky substituent has high affinity with the resin, and therefore promotes association of the dyestuff with the resin rather than with the other dyestuff. For this reason, broadening of absorption spectrum based on the association of the dyestuffs with each other is further inhibited. It is thus understood that the broadening of absorption spectrum depends on not only a dyestuff molecular structure but also a matrix resin $P_2$.

In the above formula (D2), preferred in this invention are those naphthalocyanine dyestuffs of the formula (D2) in which $R^{25}$ to $R^{28}$ and $R^{29}$ to $R^{32}$ are independently a linear or branched alkyl group having 4 to 12 carbon atoms. And, preferred are also those which have Cu, Pt, Co. VO, Mn, Zn, Ni or the like as a central metal. The absorption characteristics of these phthalocyanine dyestuffs are mainly controlled by the central metal. And, the compatibility and associability with the resin depend on substituents on the ring. That is, the association is inhibited by steric hindrance of the bulky substituent on the ring. And, in this case, too, the associability of these dyestuffs also depend on the resin, and it is therefore required to choose a suitable dyestuff in consideration of a resin to be used.

In the phthalocyanine dyestuff of the above formula (D3), preferred in this invention are those phthalocyanine dyestuffs of the formula (D3) in which $R^{33}$ to $R^{36}$ are independently a linear or branched alkyl group having 4 to 12 carbon atoms and the central metal M is selected from Cu, Pt, Co. VO, Mn, Zn and Ni.

The phthalo•naphthalocyanine of the above formula (D4) is what can be called a hybrid of phthalocyanine and naphthalocyanine. That is, the skeleton thereof is a mixture of a phthalocyanine skeleton with a phthalo•naphthalocyanine skeleton. Therefore, the skeleton structure of this phthalo•naphthalocyanine is in disorder, and its solubility hence increases. And, at the same time, its molecular symmetry is imbalanced, and it can hardly be associated with its another molecule. In the phthalo•naphthalocyanine of the above formula (D4), preferred inthis invention are those of the formula (D4) in which $R^{37}$ to $R^{40}$ are independently a linear or branched alkyl group having 4 to 12 carbon atoms and the central metal M is selected from Cu, Pt, Co. VO, Mn, Zn and Ni.

Of the above dyestuffs, the phenylene dithiol metal complex of the following formula (D5) and the phenylene diamine metal complex of the following formula (D6) have excellent light resistance and heat resistance, and preferred as the first dyestuff, i.e. a resin for use in the first, expansion layer.

Formula (D5)

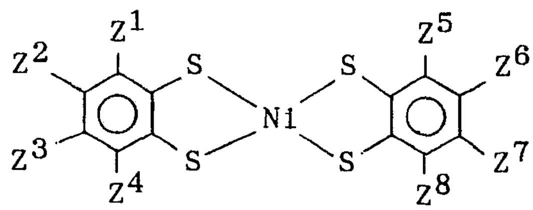

wherein $Z^1$ to $Z^8$ are independently a hydrogen atom, a halogen atom or an alkyl group having 1 to 8 carbon atoms.

Formula (D6)

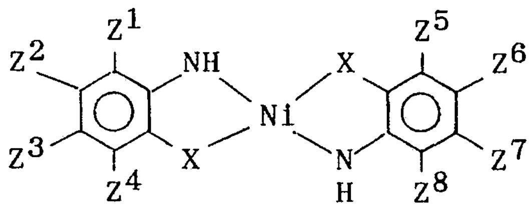

wherein $Z^1$ to $Z^8$ are as defined in the above formula (D5), and X is -S- or -NH-.

Specific examples of the dyestuffs suitable for use in this invention are as follows.

Dyestuffs particularly suitably usable with laser diode having a beam wavelength region of 770 to 780 nm.

Cyanine dyestuffs:.

(1)

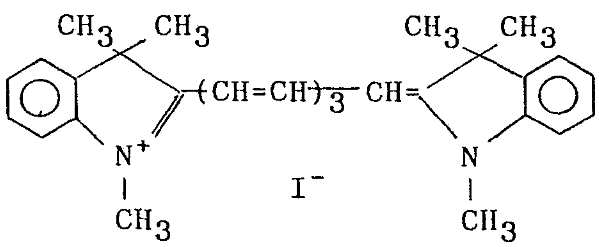

(2)

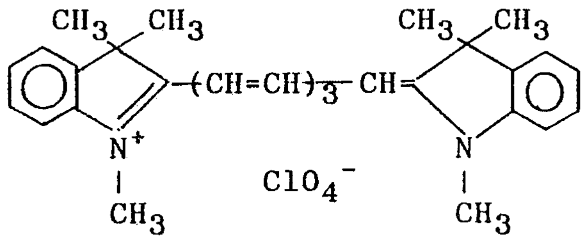

(3)

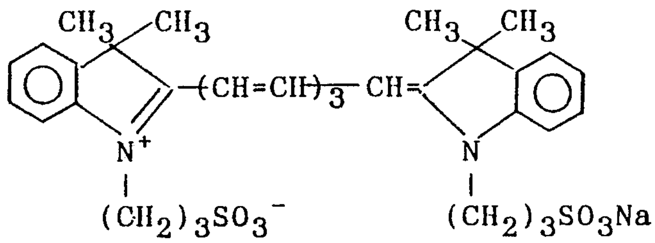

(4)

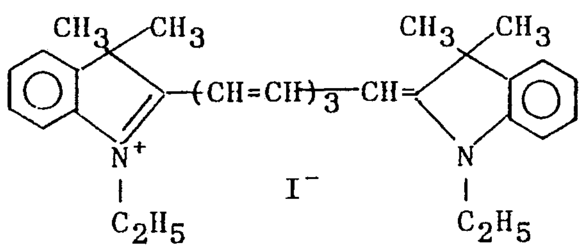

(5)

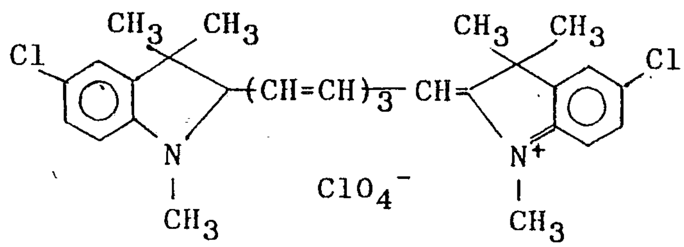

(6)

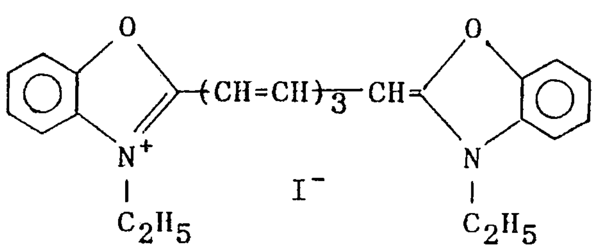

(7)

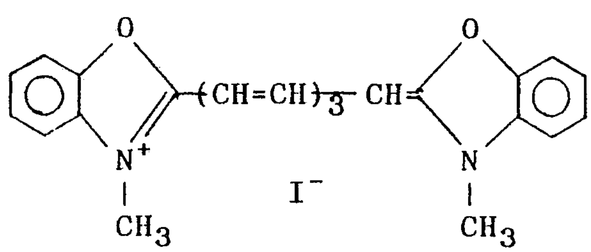

(8)

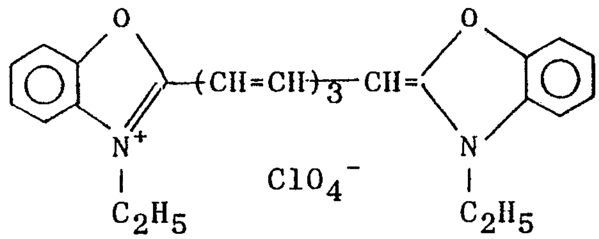

(9)

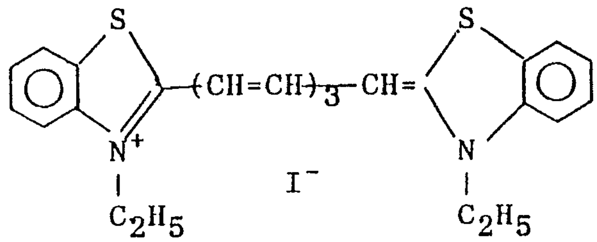

(10)

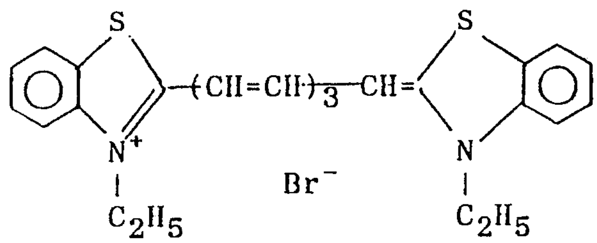

(11)

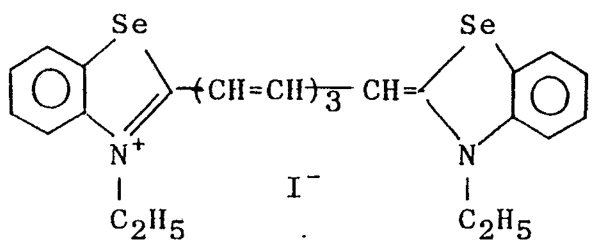

(12)

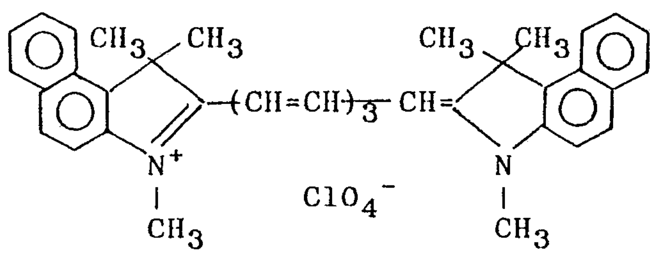

(13)

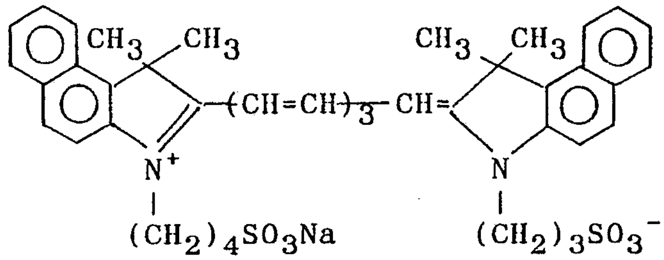

(14)

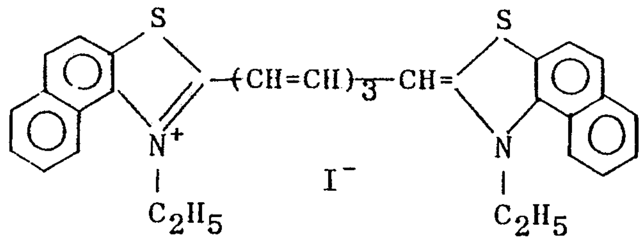

(15)

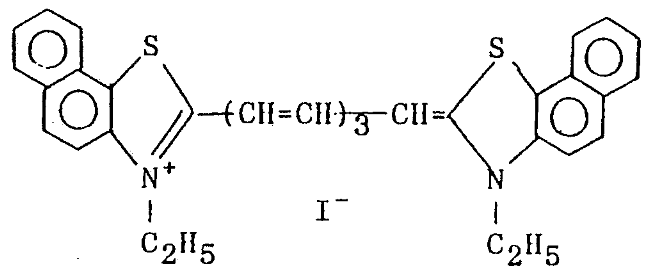

(16)

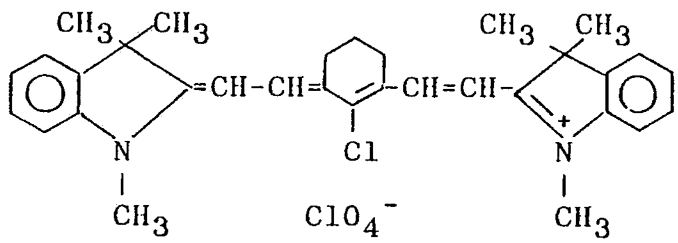

(17)

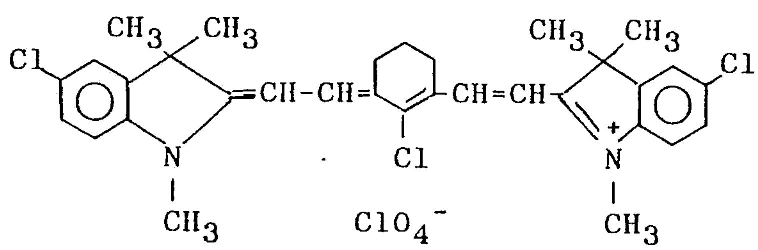

(18)

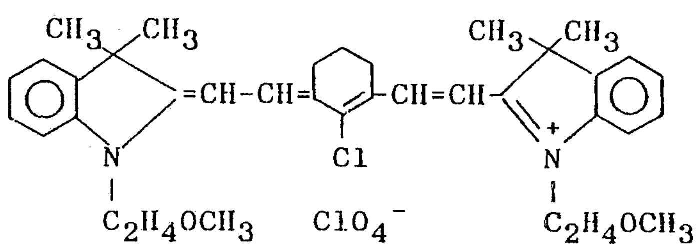

(19)

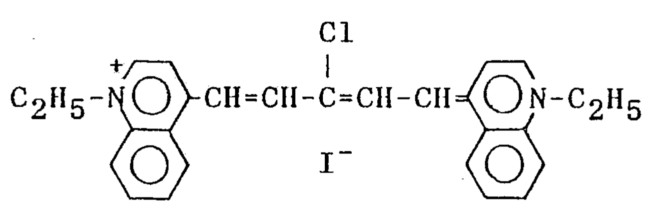

(20)

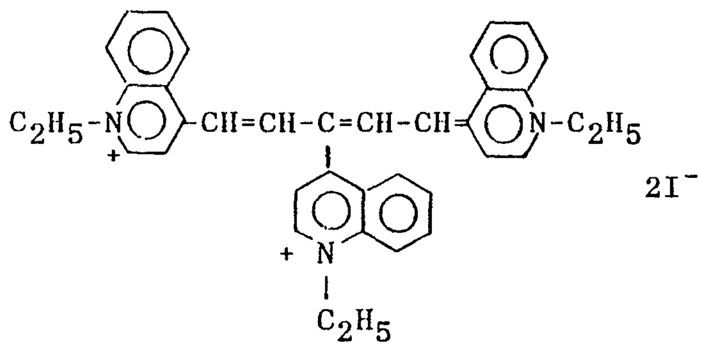

(21)

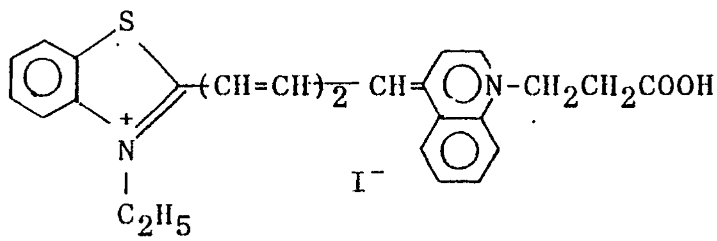

Squarilium dyestuffs

(22)

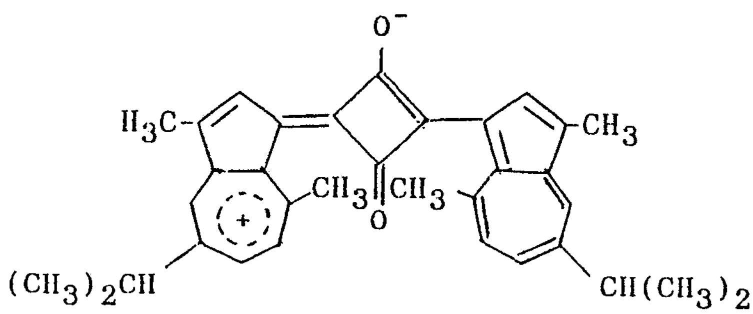

(23)

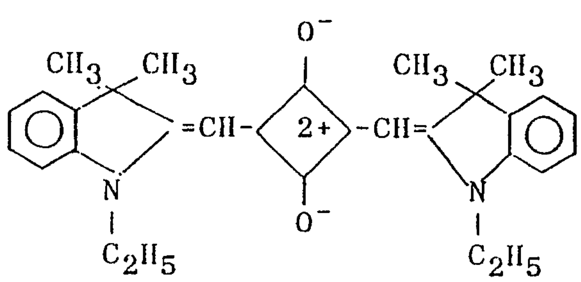

(24)

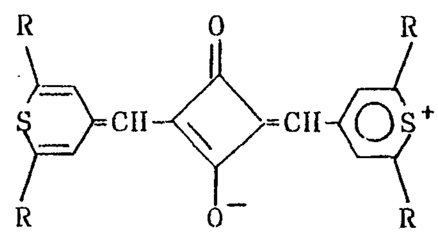

(R = tert-butyl)

Azulenium dyestuffs

(25)

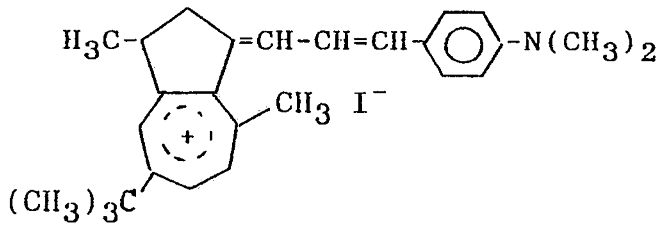

Naphthalocyanine dyestuffs

(26)

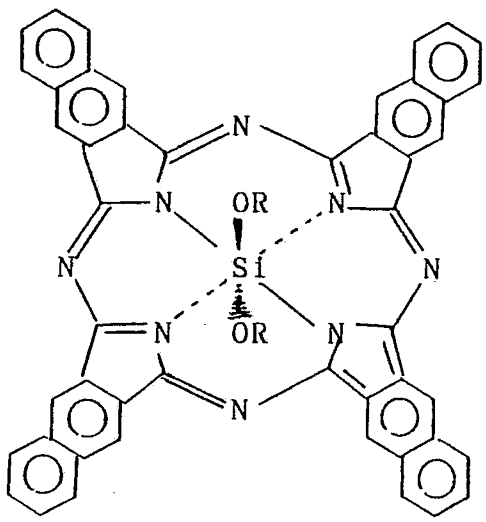

R = $Si(C_6H_{13})_3$

Pyrylium dyestuffs

(27)

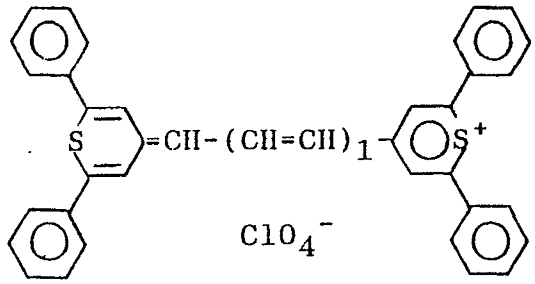

(28)

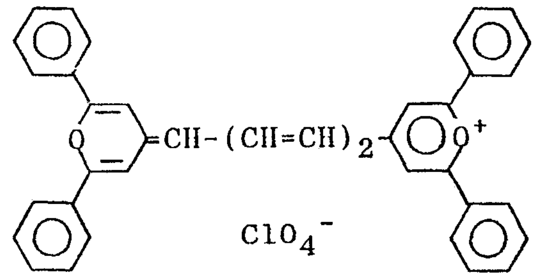

Dyestuffs particularly suitably usable with laser diode having a beam wavelength region of 830 to 840 nm.

Cyanine dyestuffs

(29)

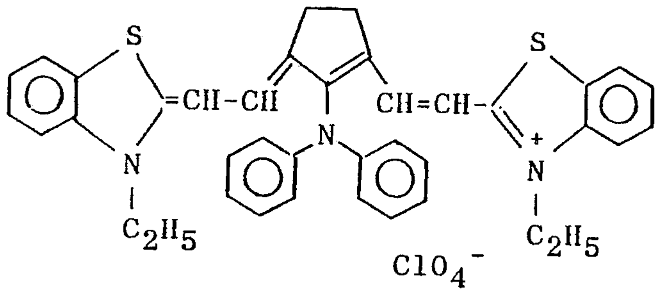

(30)

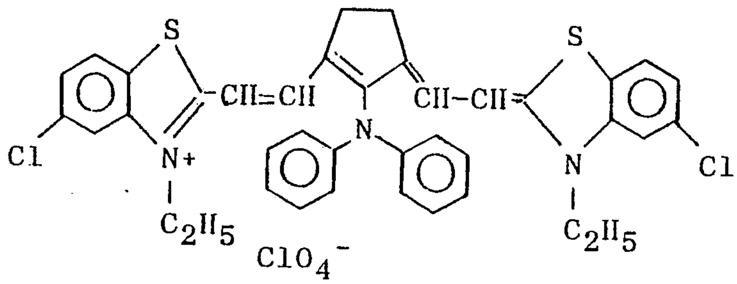

(31)

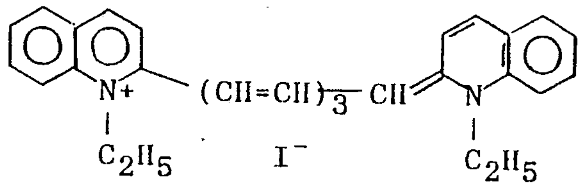

(32)

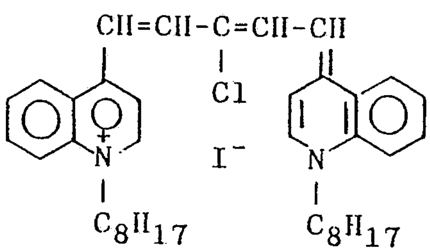

(33)

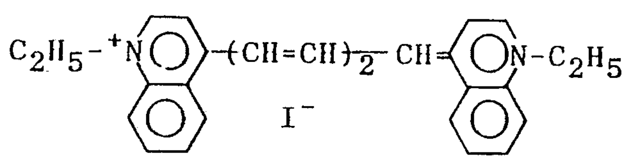

Croconium dyestuffs

(34)

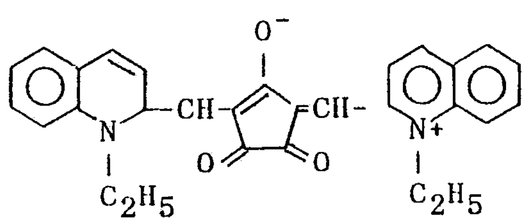

(35)

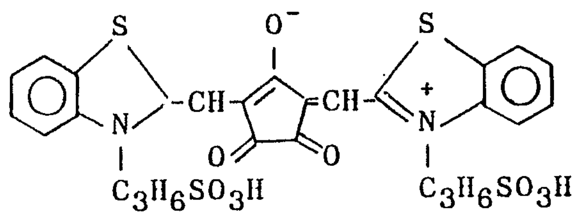

Polymethyne dyestuffs

(36)

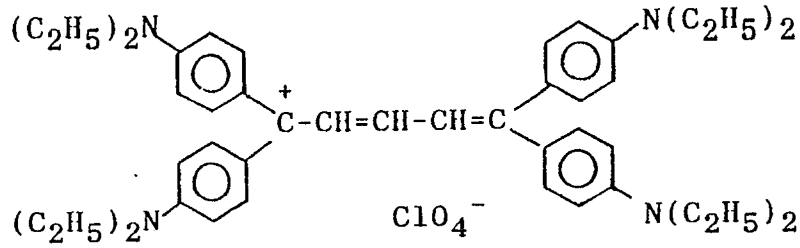

(37)

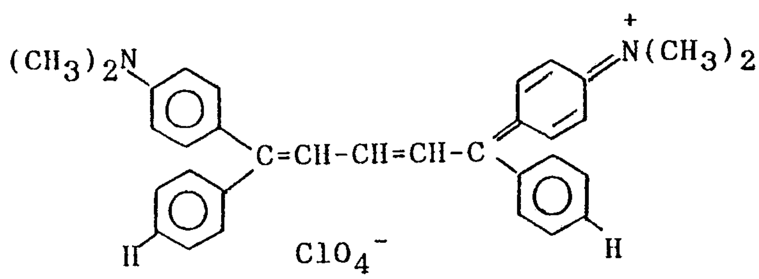

(38)

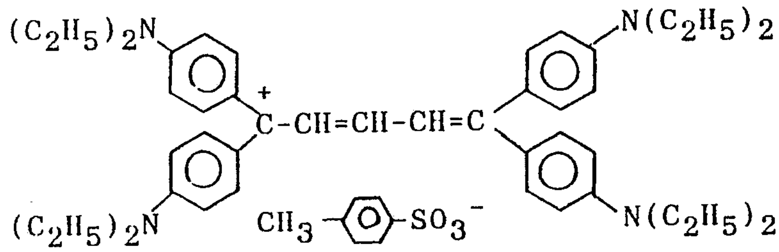

(39)

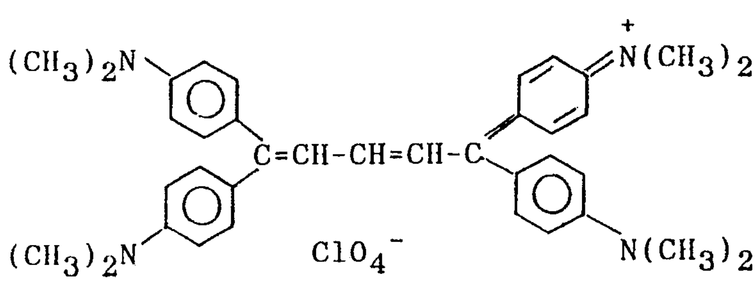

Squarilium dyestuffs

(40)

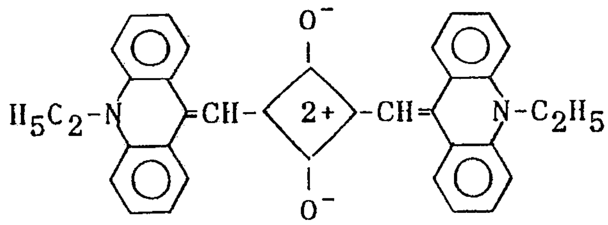

Of the above dyestuffs, preferred as the first dyestuff are the polymethiye dyestuff, particularly, in the case of the combined use thereof with a metal chelate compound, above all a nickel chelate compound, to be discussed later, and the phthalocyanine or naphthalocyanine dyestuff which is soluble in an organic solvent such as chloroform, methylene chloride, toluene or methyl ethyl ketone. And, preferred as the second dyestuff are the cyanine or naphthalocyanine dyestuff in the case of the combined use thereof with a metal chelate compound, a nickel chelate compound in particular, to be discussed later.

All of the above dyestuffs belong to a dispersion type, i.e. these are used by dispersing them in the first or second resin. When the resin is a cured product of a UV curable resin having an acryloyl or methacryloyl group, e.g. the first resin which is a cured product of a UV curable component such as a urethane or ester compound having an acryloyl or methacryloyl group, or the second resin which is one of the above UV curable resins (a) to (d), it is possible to react a dyestuff having an acryloyl or methacryloyl group with the resin.

As such a dyestuff, preferred are naphthalocyanine resin which contains an Si atom as a central metal, the Si atom being bonded to a (meth)acryl group. For example, the dyestuff of the following formula is preferred.

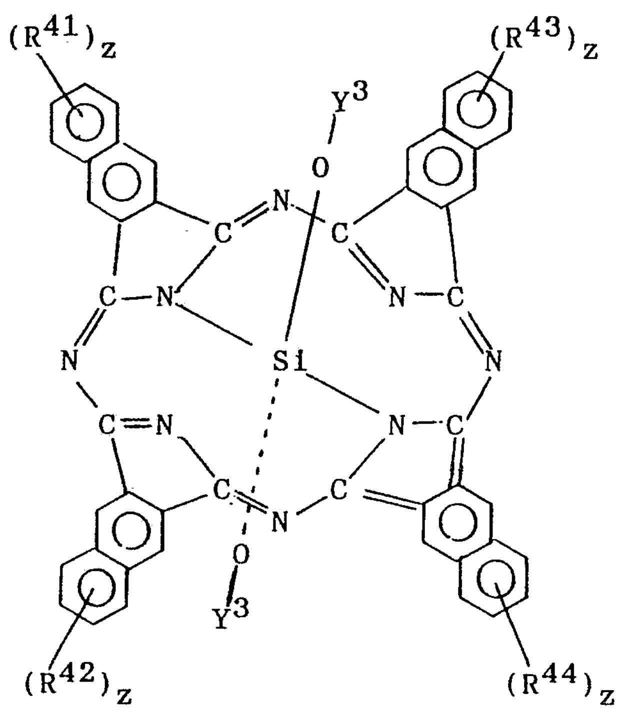

wherein two $Y^3$'s are identical or different and are

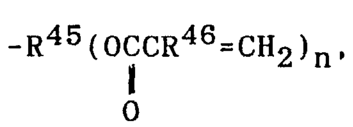, 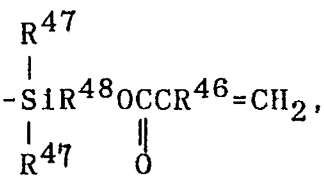,

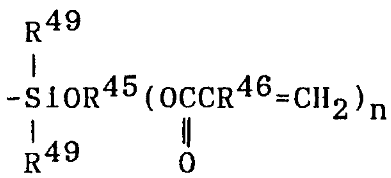 or 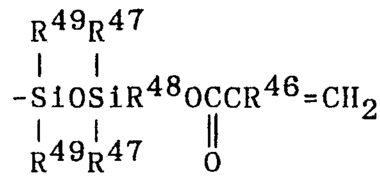

in which n is an integer of 1 to 3, $R^{45}$ is an aliphatic hydrocarbon group having 2 to 20 carbon atoms and a having valence of n+1, $R^{46}$ is a hydrogen atom or a methyl group, $R^{47}$ is an alkyl group having 1 to 4 carbon atoms or $-R^{48}OCOCR^{46}=CH_2$, $R^{48}$ is a divalent aliphatic hydrocarbon group having 2 to 6 carbon atoms, and $R^{49}$ is an alkyl group having 1 to 4 carbon atoms or $-O-R^{45}-(OCOCR^{46}=CH_2)_n$; $R^{41}$ to $R^{44}$ are independently a hydrogen atom or a linear or branched alkyl, alkoxy or silylalkyl group having not more than 18 carbon atoms;

and z is an integer of 1 to 3.

Of the dyestuff of the above formula, particularly preferred is a dyestuff having $Y^3$ in which $R^{45}$ is a linear or branched alkyl group having 2 to 20 carbon atoms and n is 1.

In this invention, the amount of each of the first dyestuff and the second dyestuff based on each of the first resin and the second resin is preferably 5 to 30 % by weight, more preferably 10 to 25 % by weight.

When the amount of the first dyestuff based on the first resin is less than 5 % by weight, the writing sensitivity is low. When this amount exceeds 30 % by weight, the resultant first layer shows a decrease in mechanical strength. When the amount of the second dyestuff based on the second resin is less than 5 % by weight, the erasing sensitivity is low, and at the same, the reading sensitivity is low due to a decrease in surface reflectivity. When this amount exceeds 30 % by weight, the second layer undesirably shows a decrease in mechanical strength although the resultant increase in surface reflectivity is advantageous for reading.

In the case of the dyestuff which reacts with the resin, as described above, however, such a dyestuff can be used beyond the above upper limit, and the amount thereof based on the resin is 5 to 50 % by weight, more preferably 10 to 40 % by weight. The reasons for setting these upper and lower limits are the same as those described above regarding the dispersion type dyestuff.

In this invention, the first, expansion layer and the second, retention layer may contain a photo-deterioration preventer to prevent photo-deterioration of the dyestuff. The photo-deterioration of the dyestuff is believed to be caused by the following mechanism. (1) The dyestuff absorbs light and is excited.

(2) The excited dyestuff exchanges energy with oxygen to form singlet oxygen.

(3) The formed singlet oxygen deteriorates the dyestuff.

Therefore, the photo-deterioration of the dyestuff can be prevented either by absorbing energy of the excited dyestuff to bring the dyestuff into a ground state, or by quenching the singlet oxygen.

The compound which is considered to function as a quencher for the singlet oxygen in this invention is a metal chelate compound in which a metal is chelated with compounds comprising double bond-forming, adjacent carbon atoms to both of which one or two groups selected from SH, OH and $NH_2$ are bonded, i.e. a metal chelate compound having the skeleton of the following formula (Q1)

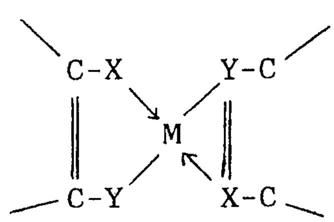

wherein X and Y are S, O, NH or $NH_2$, and M is a metal.

Examples of the above compound are orthobenzenedithiols, catechols, orthophenylene-diamines, orthoaminophenols, orthoaminobenzenethiols, orthomercaptophenols, and 1,2-ethylenedithiol derivatives. Examples of the metal are Ni, Co, Cu, Pd and Pt, and Ni is particularly preferred. These compounds may contain a variety of substituents to increase their solubility. Preferred examples thereof are listed below.

(1) 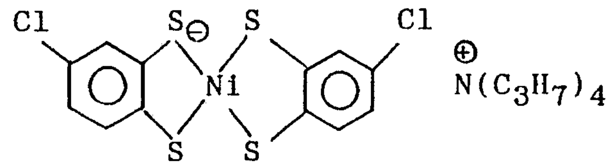 ,

(2) 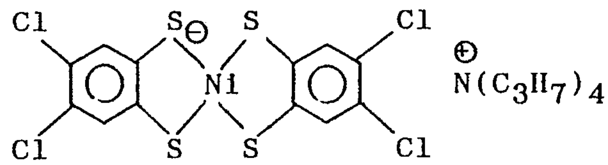 ,

(3) 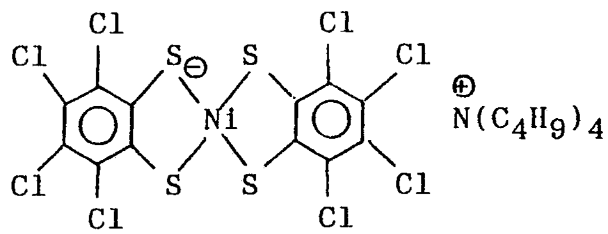

(4) 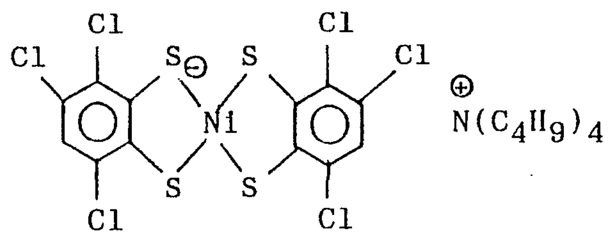 ,

(5) 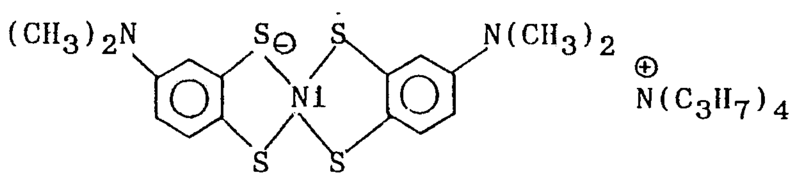 ,

(6) 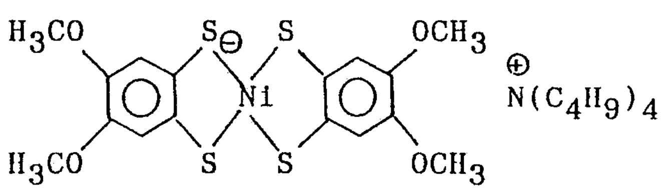 ,

(7) 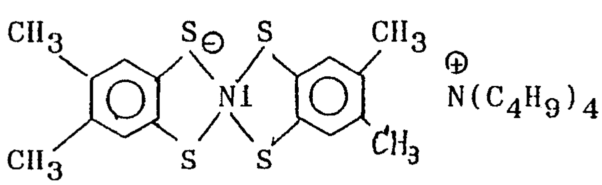 ,

(8) 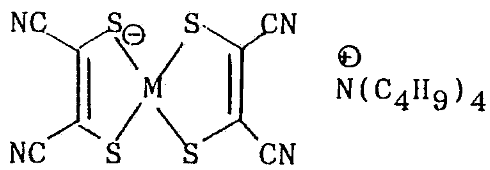 ,

(9) 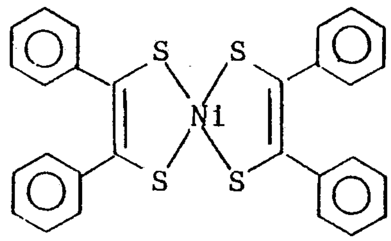 ,

(10) 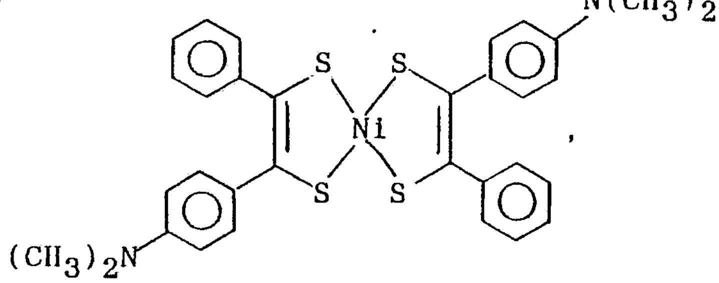 ,

(11) 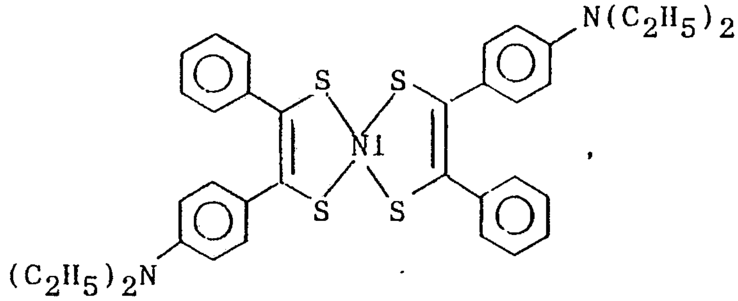 ,

(12) 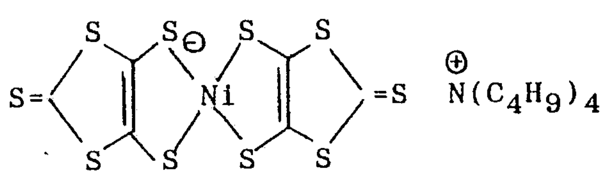 ,

(13) 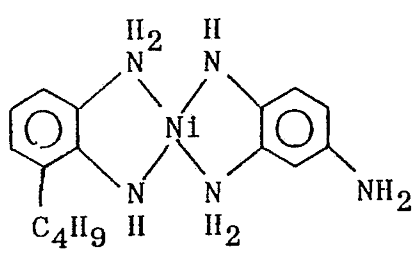

(14)

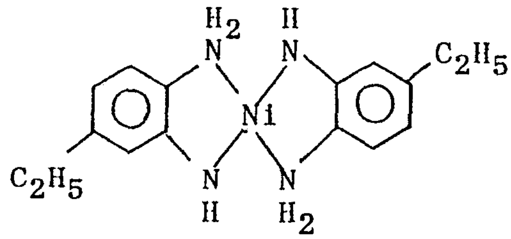

(15)

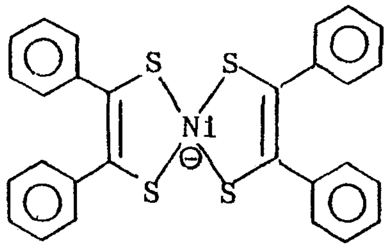

$\overset{\oplus}{N}(C_4H_9)_4$ ,

(16)

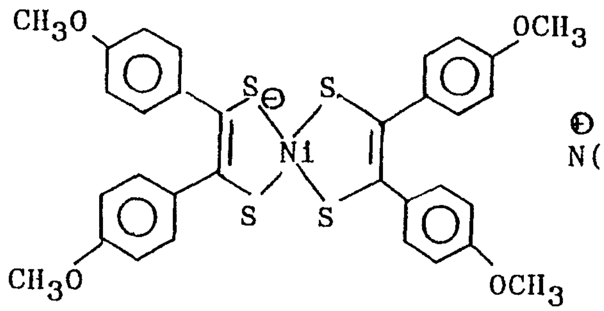

$\overset{\oplus}{N}(C_4H_9)_4$ ,

(17)

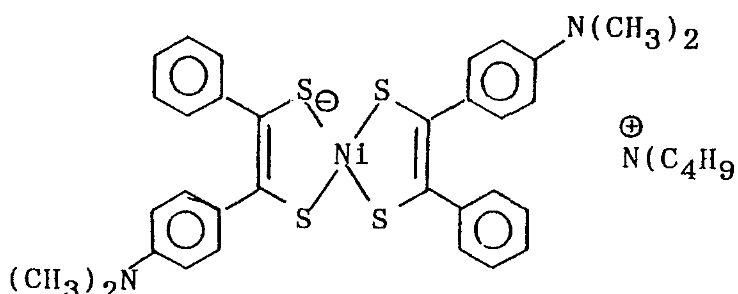

$\overset{\oplus}{N}(C_4H_9)_4$ ,

(18)

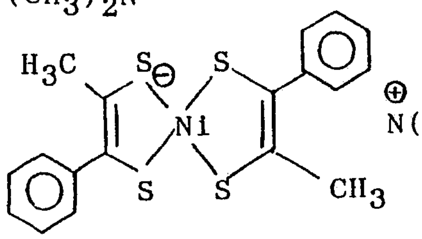

$\overset{\oplus}{N}(C_4H_9)_4$ ,

(19)

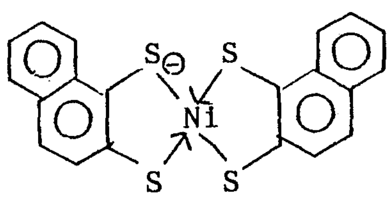

$\overset{\oplus}{N}(C_4H_9)_4$ ,

The compounds of the following formulae (Q2) to (Q4) are also considered to function as a singlet oxygen quencher. oxygen quencher.

Aminium compound of the formula (Q2)

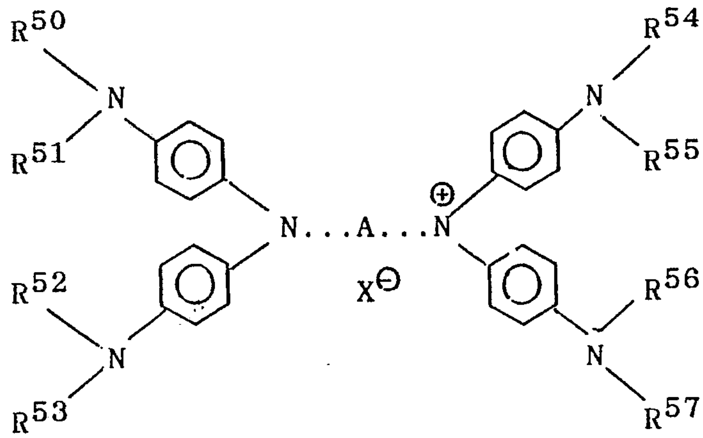

wherein A is an arylene group having 6 to 14 carbon atoms, which may be substituted with an alkyl, halogen or alkoxyl group, $X^-$ is an anion, and $R^{50}$ to $R^{57}$ are identical or different and are a substituted or nonsubstituted alkyl group having 1 to 8 carbon atoms.

Specific examples of the above aminium compound are the compounds of the following formulae (20), (21) and (22).

(20)

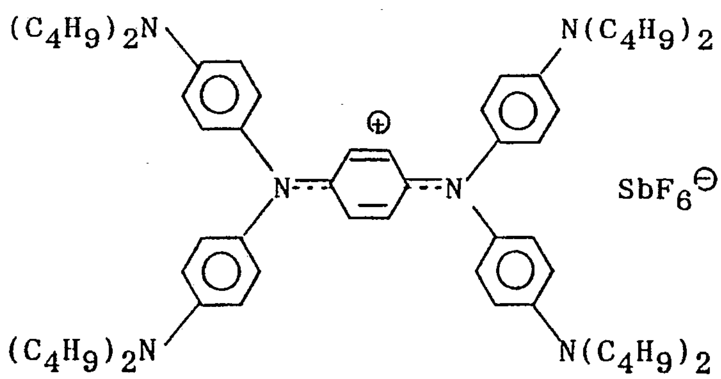

(21)

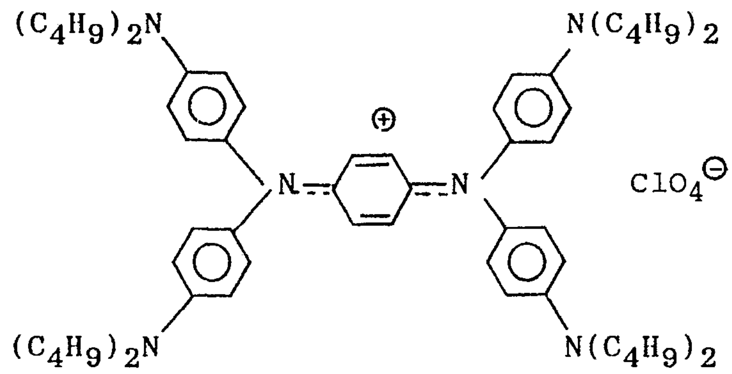

(22)

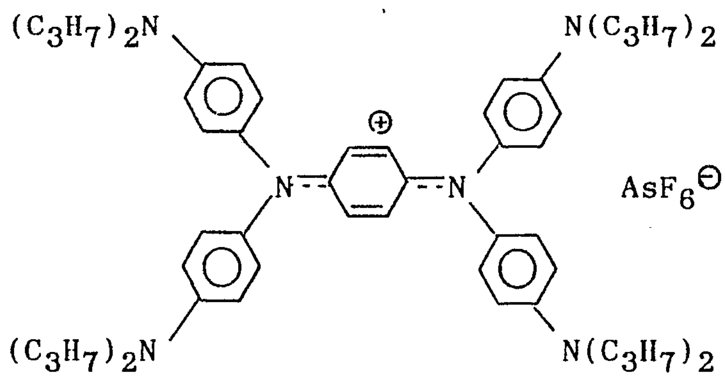

Diimonium compound of the formula (Q3)

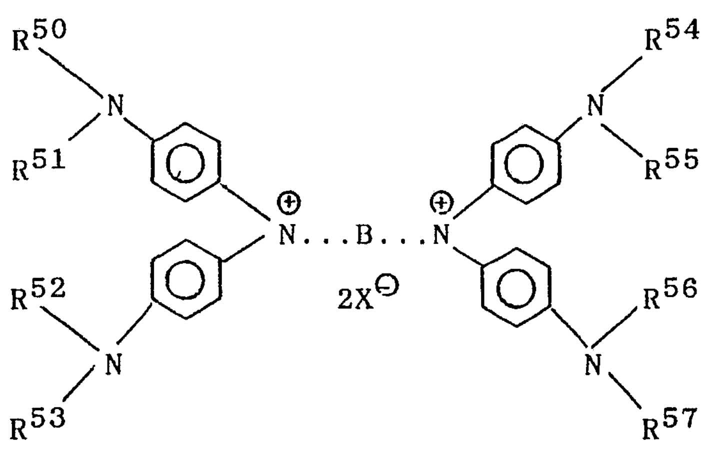

wherein $X^{\ominus}$ and $R^{50}$ to $R^{57}$ are as defined above, and B is a quinoid group having 6 to 14 carbon atoms, which may be substituted with a substituent selected from an alkyl group, an alkoxyl group and a halogen atom. Diimonium compound of the formula (Q4)

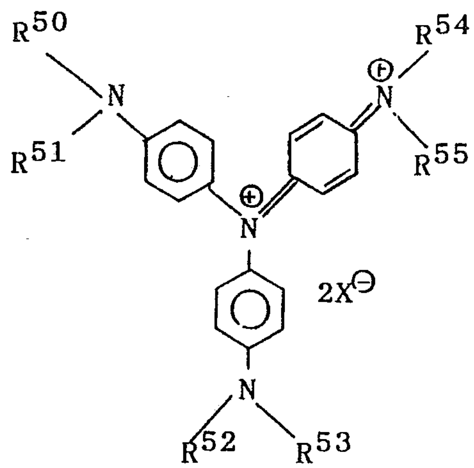

wherein $X^{\ominus}$ and $R^{50}$ to $R^{55}$ are as defined above.

One specific example of the compound of the formula (Q4) is the compound of the following formula (1).

(1) 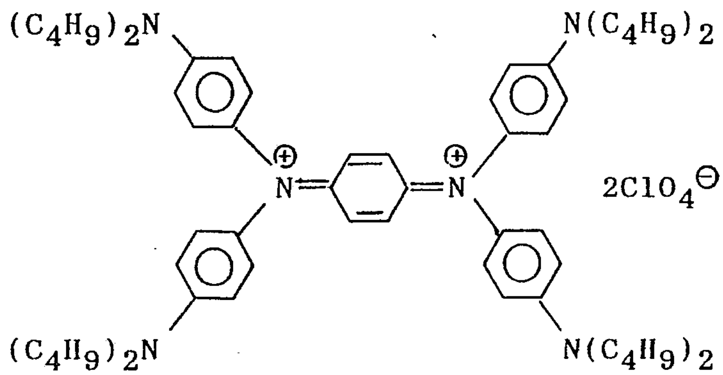

In the above formula (Q3), preferred as the arylene group is

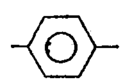 , 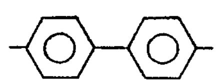 , 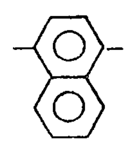 , or

10 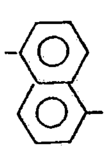 .

Preferred examples of the $X^{\ominus}$ are chloride ion, bromide ion, iodide ion, perhydrochloride ion, nitrate ion, benzenesulfonate ion, methyl nitrate ion, ethyl nitrate ion, propyl sulfate ion, tetrafluoroborate ion, tetraphenyl borate ion, hexafluorophosphate ion, benzenesulfinate ion, acetate ion, trifluoroacetate ion, propíoinc acetate ion, benzoate ion, oxalate ion, succinate ion, malonate ion, oleate ion, stearate ion, citrate ion, hydrogen diphosphate ion, dihydrogen monophosphate ion, pentachlorostannate ion, chlorosulfonate ion, trifluoromethansulfonate ion, hexafluoroaresenate ion, hexafluoroantimonate ion, hexachloroantimonate ion, molybdate ion, tungstate ion, titanate ion and zirconate ion. Further, also preferred as $X^{\ominus}$ is a metal chelate anion of the metal chelate compound of the above formula (Q1).

As described above, the photo-deterioration preventer may be incorporated in order to prevent photo-deterioration of the dyestuff. And, when the dyestuff is a polymethine dyestuff, the photo-deterioration of the polymethine dyestuff can be also prevented by forming a complex salt of the cation of the polymethine dyestuff with the anion of the singlet oxygen quencher. As a singlet oxygen quencher, the chelate compound of the above formula (Q1) is preferred. Preferred examples of the anion of the singlet oxygen quencher are those of the following formulae (Q1-1) to (Q1-6).

Formula (Q1-1)

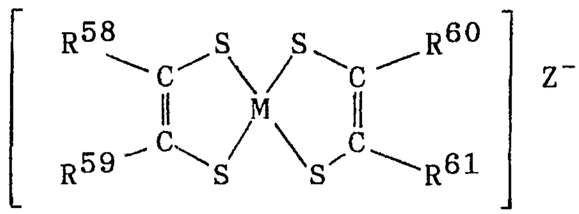

wherein $R^{58}$ to $R^{61}$ are independently a hydrogen atom, a halogen atom, an alkyl group such as methyl and ethyl, an aryl group such as phenyl, or a cyano group, M is Ni, Co, Cu, Pd or Pt, and Z is a valence of 1 or 2.

Formula (Q1-2)

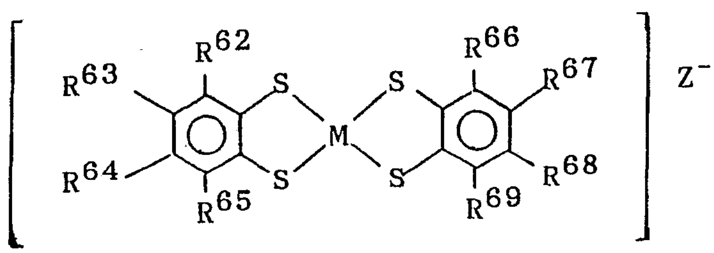

wherein M and Z are as defined above, and $R^{62}$ to $R^{69}$ are independently as defined above for $R^{58}$.

Formula (Q1-3)

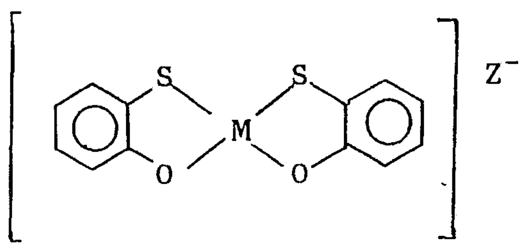

wherein M and Z are as defined above.

Formula (Q1-4)

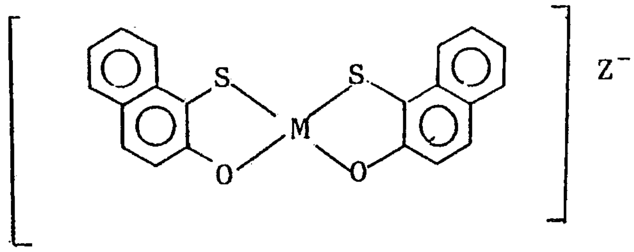

wherein M and Z are as defined above.

Formula (Q1-5)

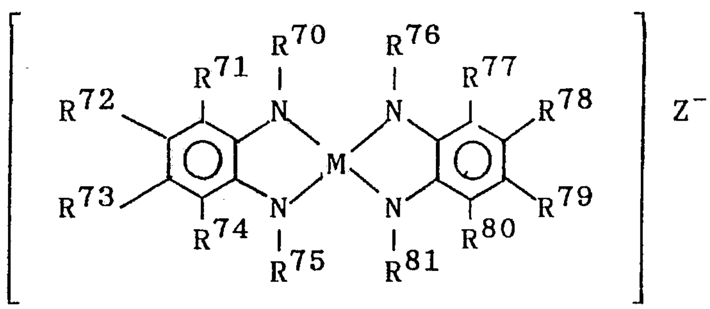

wherein M and Z are as defined above, and $R^{70}$ to $R^{81}$ are independently as defined above for $R^{58}$.

Formula (Q1-6)

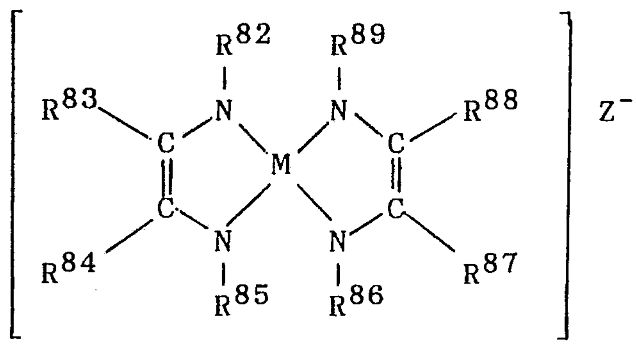

wherein M and Z are as defined in the above formula, and $R^{82}$ to $R^{89}$ are independently as defined above for $R^{58}$.

The above complex salt of the cation of the polymethine dyestuff and the anion of the singlet quencher can be easily produced by an ion exchange reaction from a neutral salt of a corresponding dyestuff and a quencher neutral salt.

In this invention, the amount of the above photo-deterioration preventer is preferably 5 to 30 % by weight, more preferably 10 to 25 % by weight based on the resin to which the preventer is incorporated.

When the amount of the photo-deterioration preventer is less than 5 % by weight, its photo-deterioration preventing cpapacity undesirably decreases. And, when this amount exceeds 30 % by weight, the resultant film shows a decrease in mechanical strength, and it is difficult to store or erase data sufficiently. In particular, when the expansion layer contains an excess amount of the preventer, the expansion layer suffers a decrease in elasticity and is hence liable to cause a decrease in C/N. When the retention layer contains an excess amount of the preventer, its capability to store data is liable to decrease

to a great extent.

And, in order not to impair the mechanical properties of the expansion layer and the retention layer, the total amount of the dyestuff and the photo-deterioration preventer based on the resin is preferably not more than 40 % by weight, more preferably not more than 30 % by weight.

## Optical data storage medium

The optical data storage medium of this invention can be produced by consecutively coating a substrate with a mixture of the curing component of the first resin with a dyestuff and a mixture of the curing component of the second resin with a dyestuff, and then curing them.

The substrate is not specially limited with regard to its material. In general, however, preferred as the substrate are a disk-formed substrate of polycarbonate, polymethyl methacrylate or glass, and a film substrate of polyester, and the like.

The above coating is carried out, for example, by a spin-coating, casting, bar-coating, doctor-knife, or gravure-coating method. Examples of a solvent used for the coating are preferably aliphatic hydrocarbons such as hexane, heptane and cyclohexane; aromatic hydrocarbons such as benzene, toluene and xylene: alcohols such as methanol, ethanol and butanol; haloalkanes such as chloroform and methylene chloride; esters such as ethyl acetate and butyl acetate; ketones such as acetone, methyl ethyl ketone, methyl isobutyl ketone and cyclohexanone; glymes such as ethylene glycol monomethyl ether and ethylene glycol monobutyl ether; ethers such as tetrahydrofuran and dioxane; nitromethane, acetonitrile, and a mixture of these.

When the curing component is a UV curable component, the curing is carried out by irradiating it with UV ray in the co-presence of a photoinitiator.

Preferred examples of the photoinitiator are benzophenone type initiators such as benzophenone and Michler's ketone; diketone type initiators such as benzyl and phenyl methoxy diketone; benzoin type initiators such as benzoin ethyl ether and benzyl dimethyl ketal; thioxanthone type initiators such as 2,4-diethyl thioxanthone; and quinone type initiators such as 2-methylanthraquinone and camphorquinone. A promoter such as an amine-based promoter may be used in combination as required. As a UV light source, there can be used a low-pressure mercury lamp, an intermediate-pressure mercury lamp, a high-pressure mercury lamp and a metal halide lamp. Such a UV ray source preferably has a power of 1 $mW/cm^2$ to 1 $kW/cm^2$. The irradiation time depends on a light source power and a photoreaction rate. However, it is preferably 1 second to 1 hour, more preferably 10 seconds to 10 minutes.

When the curing component is a UV curable component, the curing is also carried out by heating it in the co-presence of a radical initiator.

Examples of the radical initiator are azobisisobutyronitrile (AIBN), benzoyl peroxide (BPO), cumenehydroperoxide, tert-butylhydroperoxide and lauroyl peroxide. The heating temperature is generally 50 to 150° C, preferably 70 to 120° C. The heating temperature below than the above lower limit is undesirable, since the curing reaction does not proceed fully. And, the heating temperature higher than the above upper limit is also undesirable, since the substrate and dyestuff are deteriorated. The curing time is generally 5 minutes to 10 hours, preferably 10 minutes to 5 hours.

The thickness of the first expansion layer is preferably 0.5 to 10 µm, more preferably 1 to 5 µm.

The thickness of the second, retention layer is preferably 0.1 to 3 µm, more preferably 0.3 to 2 µm.

Specifically, the optical data storage medium is produced preferably by coating a first mixture on a substrate, curing the mixture, coating a second mixture thereon and curing the second mixture.

The scope of the optical data storage medium of this invention includes a so-called air-incident type medium having a structure in which the first, expansion layer is formed on the substrate and the second retention layer is formed thereon, and a so-called substrate-incident type medium having a structure in which a compression layer is formed on the substrate, the second retention layer is formed thereon and the first, expansion layer is formed thereon.

For performing writing, reading and erasing with the optical data storage medium obtained as above, irradiations with two kinds of laser beams are required.

A helium neon laser, argon laser and a laser diode can be used for the above purposes, and a small-sized and less expensive laser diode is the most preferred.

The following is an explanation of one embodiment of writing, reading and erasing with an optical data storage medium in which the first dyestuff of the first, expansion layer exhibits absorption in the vicinity of 840 nm and the second dyestuff of the second, retention layer exhibits absorption in the irradiation with a

laser beam having a wavelength of 840 nm. In the writing, the expansion layer mainly absorbs light and forms a bump. The reading is carried out by reading a reflectivity difference between a written portion and an unwritten portion with a weak laser beam having a wavelength of 840 nm. The erasing is carried out by irradiation with a laser beam having a wavelength of 780 nm. In general, the writing requires irradiation with a laser beam having a power of 5 to 30 mW, preferably 7 to 20 mW for 5 to 0.1 microsecond, the reading, with a laser beam having a power of 0.5 to 3 mW, preferably 0.7 to 2 mW for 5 to 0.1 microsecond, and the erasing, with a laser beam having a power of 1 to 20 mW, preferably 3 to 12 mW for 0.1 to 20 seconds.

According to this invention, excellent writing and erasing characteristics can be obtained for an optical data storage medium based on the principle of reading a reflectivity difference by means of formation and erasing of a bump. Further, according to this invention, layer formation can be carried out at a lower temperature at a high rate, and it is therefore made possible to achieve industrial advantages that coating and curing can be carried out without deteriorating the substrate and dyestuff and that medium cost are decreased.

This invention will be further illustrated by reference to Examples.

The compounds used in the Examples is listed below.

U-122A

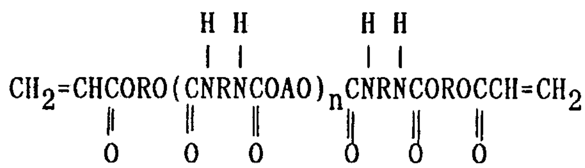

U-4HA

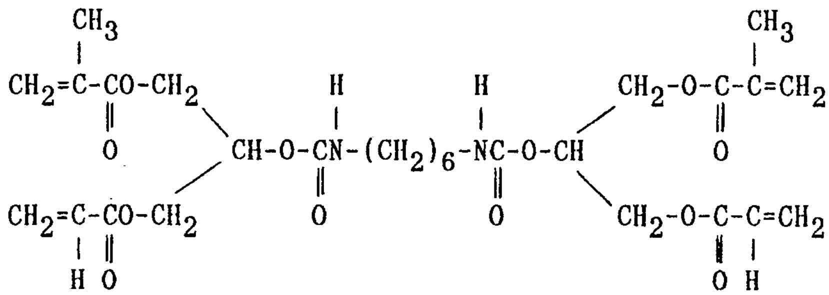

U-1084AM

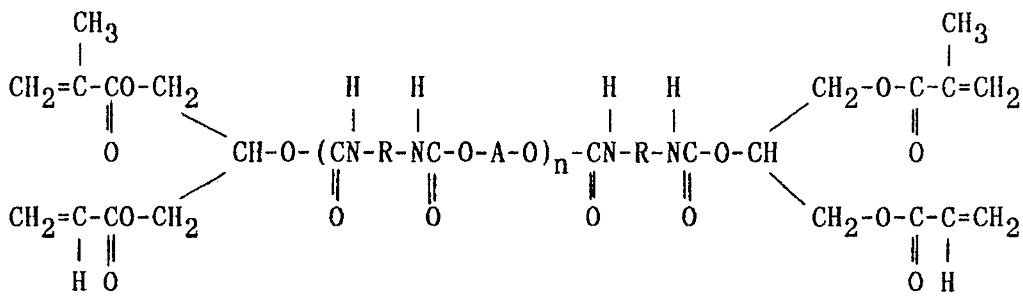

U-1226A

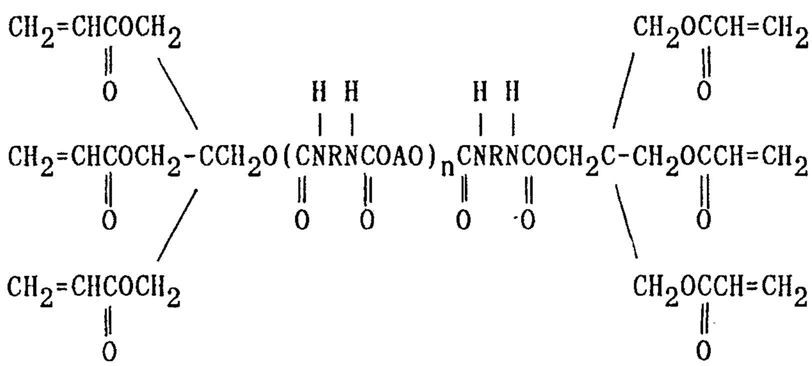

Ebecryl-220

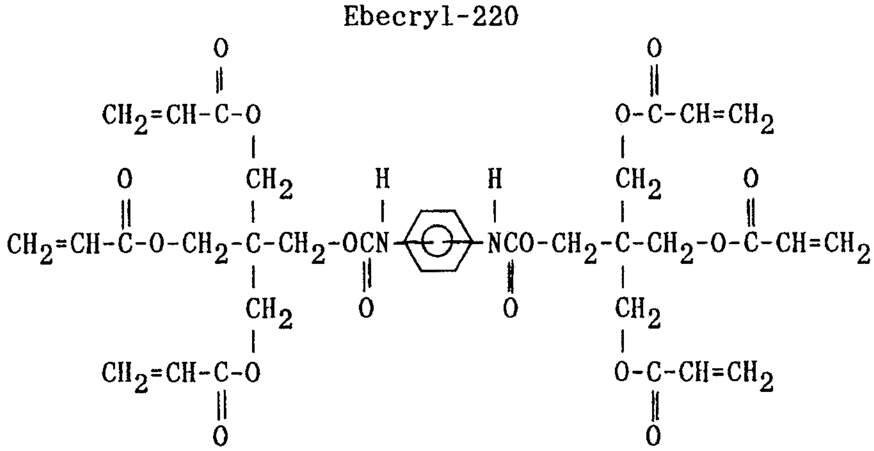

M-1100, M-1310

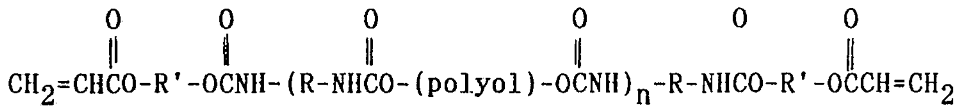

VR-60 (m=6), VR-90 (m=9)

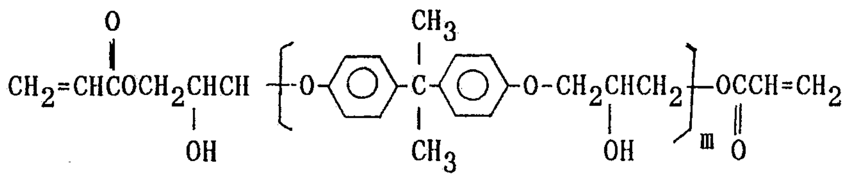

Epikote 828

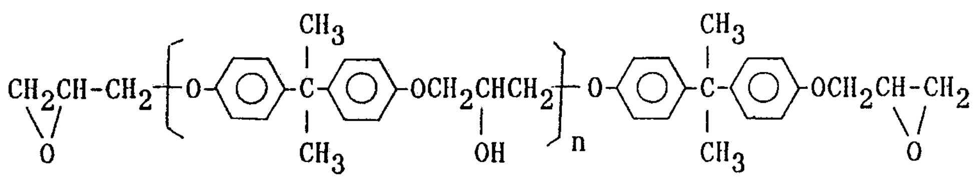

Epomate 002

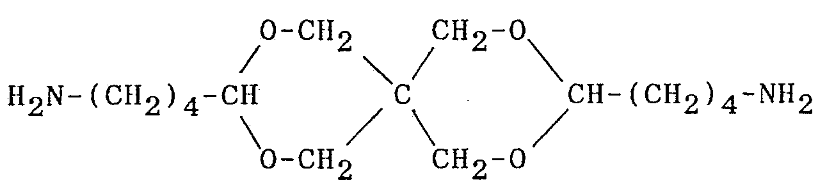

Coronate L

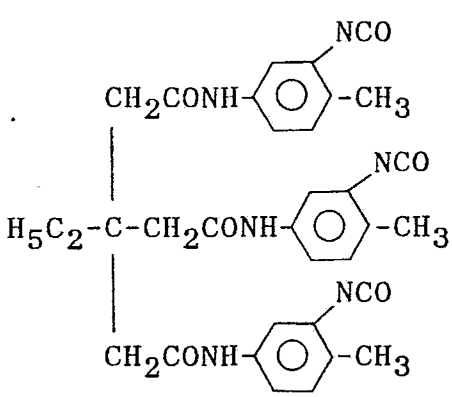

FH-050 (R=OH, Mn=5,1000)

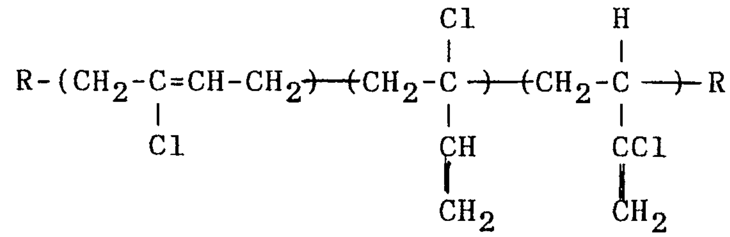

EXAMPLE 1

Three (3) phr of Irgacure 907 as a photoinitiator and 10 phr of a polymethine dyestuff (IR-820, supplied by Nippon Kayaku Co., Ltd) as a dyestuff for a 830 nm laser diode were added to urethane acrylate (U-122A, supplied by Shin Nakamura Chemical Co., Ltd.) as an expansion layer resin $P_1$, and the resultant mixture was diluted with methyl ethyl ketone as a solvent to form a coating solution for an expansion layer. The coating solution was coated on a glass substrate and dried, and then, the coating was irradiated with a 80 $W/cm^2$ high-pressure mercury lamp to carry out UV curing. The resultant expansion layer (A) had a thickness of 3 to 4 $\mu m$. Thereafter, 3 phr of Irgacure 907 and 10 phr of HITC, which is a cyanine dyestuff of the formula (2), as a dyestuff for a 780 nm laser diode were added to epoxy acrylate (VR-60, supplied by Showa Kobunshi K. K.) as a retention layer resin $P_2$, and the mixture was diluted with methyl ethyl ketone to obtain a coating solution for a retention layer (B). This solution was coated on the expansion layer (A) and dried, and then, the resultant coating was irradiated with a 80 $W/cm^2$ high-pressure mercury lamp to carry out UV curing, whereby the retention layer (B) was formed. The retention layer had a thickness of about 1 $\mu m$.

The medium obtained above was irradiated with that beam of a 830 nm laser diode which was focused into about 1 $\mu m$ to carry out writing at a writing power of 10 mW and a linear velocity of 3 m/sec. As a result, clear dome-formed projected portions (bumps) were formed, and these written data was read with a 1 mW laser beam of the above laser diode to give C/N of 50 dB. Then, the medium was irradiated with a 7 mW beam of a laser diode having a wavelength of 780 nm to erase the written data, whereby it was confirmed that written data could be erased.

EXAMPLE 2

A urethane acrylate·(U-122A, supplied by Shin Nakamura Chemical Co., Ltd.)/a urethane acrylate (U-4HA, supplied by Shin Nakamura Chemical Co., Ltd.) blend matrix having a blend ratio of 7:3 was used as an expansion layer resin, and the procedure of Example 1 was repeated to form a data storage medium comprising an expansion layer and a retention layer.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 3

A urethane acrylate (U-1084AM, supplied by Shin Nakamura Chemical Co., Ltd.) was used as an expansion layer resin, and the procedure of Example 1 was repeated to form a data storage medium comprising an expansion layer and a retention layer.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 4

A urethane acrylate (TB-3001, Sumitomo 3M Bonds) was used as an expansion layer resin, and the procedure of Example 1 was repeated to form a data storage medium comprising an expansion layer and a retention layer was formed.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 5

A urethane acrylate blend matrix (TB-3001/TB-3016, a blend ratio = 1:1, both supplied by Shin Nakamura Chemical Co., Ltd.) was used as an expansion layer resin, and the procedure of Example 1 was repeated to form a data storage medium comprising an expansion layer and a retention layer was formed.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 6

A urethane acrylate (Aronix M-1100, supplied by Toagosei Chemical Industry Co., Ltd.)/1,6-hexanediol diacrylate blend matrix having a blend ratio of 8:2 was used as an expansion layer resin, and the procedure of Example 1 was repeated to form an expansion layer on a glass substrate. Then, a methyl ethyl ketone solution of polymethyl methacrylate containing 10 phr of HITC was coated as a retention layer and dried to form a data storage medium comprising the expansion layer and the retention layer. The retention layer had a thickness of about 1 µm.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 7

A urethane acrylate blend matrix (aronix M-1310, supplied by Taogosei Chemical Industry Co., Ltd.)-/Ebecryl-220 blend ratio = 7:3, both supplied by Daicel Cheimcal Industries, Ltd.-UCB) was used as an expansion layer resin, and the procedure of Example 1 was repeated to form an expansion layer on a glass substrate. Then, a methyl ethyl ketone solution of polymethyl methacrylate containing 10 phr of HITC was coated and dried to form a data storage medium comprising an expansion layer and a retention layer. The retention layer had a thickness of about 1 µm.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 8

A urethane acrylate blend matrix (Ebecryl-230/Ebecryl-1290 blend ratio = 7:3, both supplied by Daicel Chemical Industries, Ltd-UCB) was used as an expansion layer resin, and the procedure of Example 1 was repeated to form an expansion layer on a glass substrate. Then, a toluene solution of polymethyl methacrylate containing 10 phr of silicon naphthalocyanine of the following chemical structure was coated and dried to form a data storage medium comprising an expansion layer and a retention layer. The retention layer had a thickness of about 1 µm.

Writing and reading were carried out with a 830 laser beam of a laser diode in the same way as in Example 1, and erasing, with a 780 nm laser beam of a laser diode in the same way as in Example 1 to show that data could be written, read and erased.

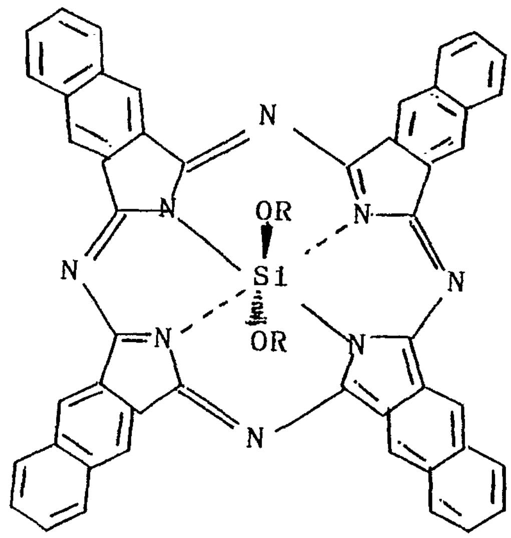

R = Si$(C_6H_{13})_3$

EXAMPLE 9

A urethane acrylate (Photomer-6008, supplied by San Nopco) was used as an expansion layer resin, and the procedure of Example 1 was repeated to form an expansion layer on a glass substrate. Then, a retention layer was formed thereon in the same way as in Example 8, whereby a data storage medium comprising an expansion layer and a retention layer was formed.

Writing and reading were carried out with a 830 laser beam of a laser diode in the same way as in Example 1, and erasing, with a 780 nm laser beam of a laser diode in the same way as in Example 1 to show that data could be written, read and erased.

EXAMPLE 10

The same expansion layer resin as that prepared in Example 5 and the same retention layer resin as that prepared in Example 8 were used, and, using these layer resins, a data storage medium comprising an expansion layer and a retention layer was formed.

Writing and reading were carried out with a 830 laser beam of a laser diode in the same way as in Example 1, and erasing, with a 780 nm laser beam of a laser diode in the same way as in Example 1 to show that data could be written, read and erased.

Physical Property Data

Table 1 summarizes physical property data of the expansion layers used in the above Examples.

Table 1

| Ex. No. | Expansion layer resin | Tg (° C) | Elastic modulus (kg/mm$^2$) | Expansion coefficient (x$10^{-5}$/° C) | Elasticity recovery ratio (%) |
|---|---|---|---|---|---|
| 1 | U-122A | 5 | 4.5 | 2.4 | 98 |
| 2 | U-122A/U-4HA | 10 | 8.3 | 1.8 | 94 |
| 3 | U-1084AM | 14 | 15 | 2.0 | 95 |
| 4 | TB-3001 | 4 | 0.20 | 1.8 | 98 |
| 5 | TB-3001/3016 | -15 | 0.11 | 4.2 | 100 |
| 6 | M-1100/HDDA | 18 | 21 | 2.7 | 96 |
| 7 | M-1310/Ebe-220 | -16 | 0.83 | 3.3 | 99 |
| 8 | Ebe-230/1290 | -8 | 1.2 | 2.4 | 97 |
| 9 | Photomer-6008 | 17 | 13 | 1.6 | 93 |

EXAMPLE 11

Three (3) phr of 4′-methylmercapto-2-morpholino- 2-methylpropiophenone and 0.5 phr of 2,4-diethylthioxanthone as a photoinitiator and 10 phr of a polymethine dyestuff of the following formula (1) as a dyestuff for a 830 nm laser diode were added to a blend resin comprising difunctional urethane acrylate (NK ester U-122) of the following formula (a) and hexafunctional urethane acrylate of the following formula (b) (a/b blend ratio = 4/6 by weight) as an expansion layer resin ($P_1$), and the mixture was diluted with methyl ethyl ketone as a solvent to form a homogeneous coating solution. The solution was coated on a glass substrate and dried such that the thickness became about 3 to 4 µm. Then, the resultant resin layers were irradiated with a 80 W/cm high-pressure mercury lamp to crosslink-cure the resins, and the resultant medium was evaluated on the following properties.

Solvent resistance:

An expansion layer which had been crosslink-cured by irradiation with a high-pressure mercury lamp at 5 J/cm$^2$ was immersed in a solvent of methyl ethyl ketone, and times until occurrence of damage (rumple, clarity loss, dyestuff extraction, etc.) were measured.

Curing speed:

Curing sensitivity when an expansion layer became tack-free was measured.

Formation of dual layer:

An expansion layer was crosslink-cured by irradiation with a high-pressure mercury lamp at 5 J/cm$^2$, and then, a methyl ethyl ketone solution containing Novolak acrylate (SP-4060, supplied by Showa Kobunshi K.K.) as a retention layer resin ($P_2$), 10 phr of HITC as a dyestuff for a 780 nm laser diode and 3 phr of 4′-methylmercapto-2-morpholino-2-methylpropiophenone as a photoinitiator was coated on the expansion layer in order to examine whether or not a retention layer having a thickness of about 1 µm could be formed without affecting the expansion layer.

Data erasing characteristics:

A medium which could be produced by the formation of a dual layer was irradiated with a 80 W/cm high-pressure mercury lamp to cure its retention layer, and writing and erasing characteristics of the resultant medium were evaluated. The writing was carried out with that 830 nm laser beam of a laser diode which was focussed into about 1 µm, and erasing was carried out with a 780 nm laser beam of a laser diode.

Formula (a)

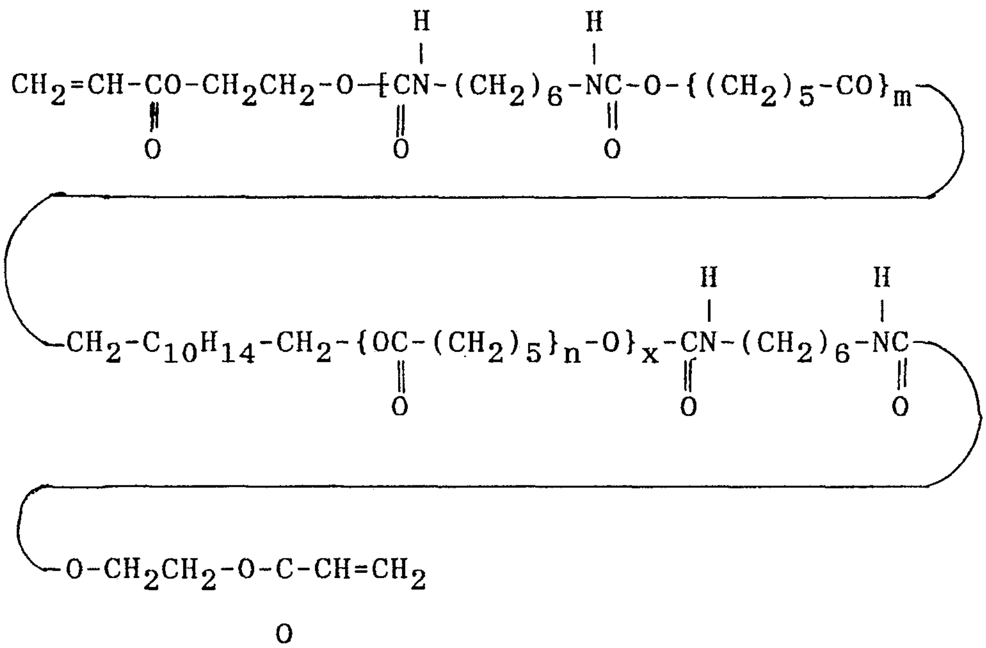

[X = 1, m+n = 2]

Formula (b)

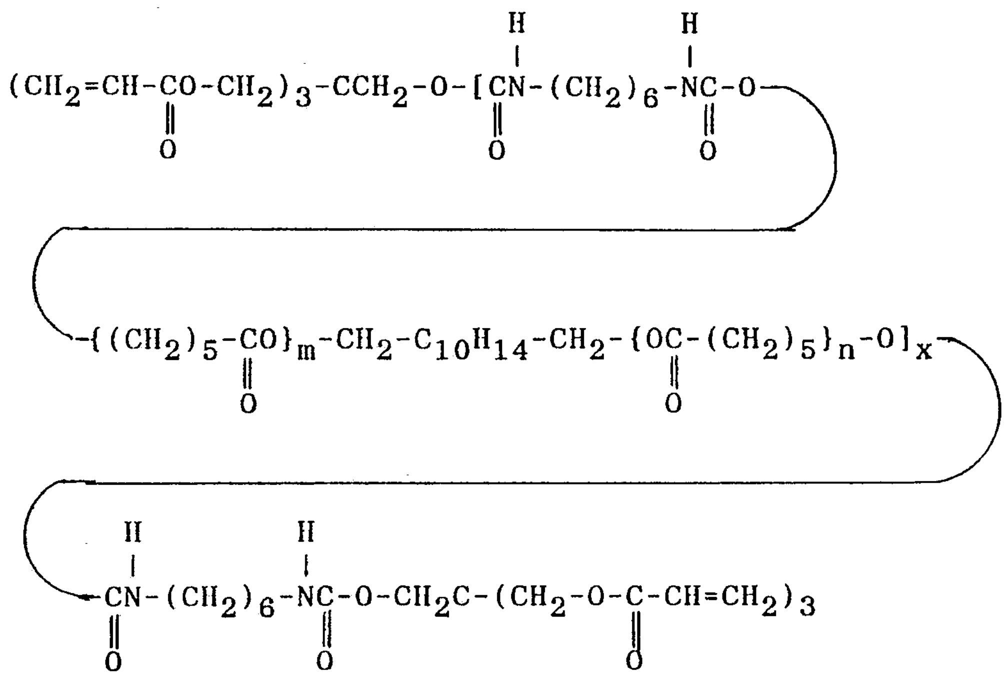

[X = 1, m+n = 2]

Formula (1)

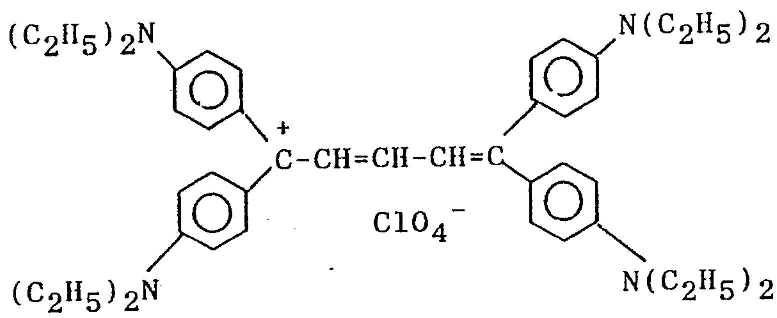

EXAMPLE 12

Example 11 was repeated except that a hexafunctional urethane acrylate of the following formula (c) was used in place of the hexafunctional urethane acrylate of the formula (b), and the resultant medium was evaluated in the same way as in Example 11.

Formula (c)

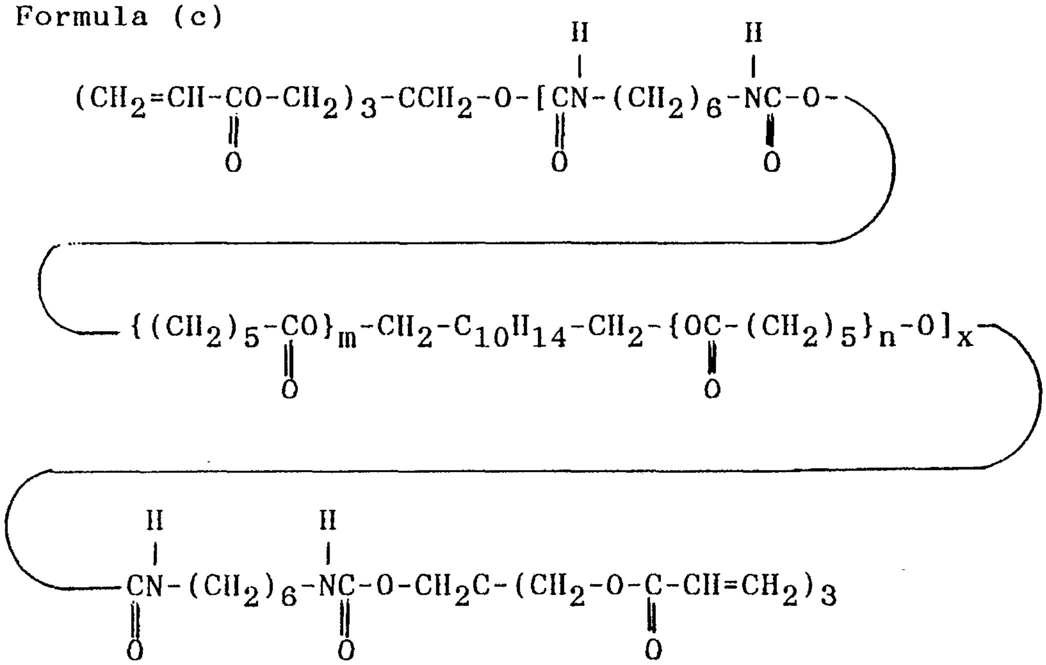

[X = 1, m+n = 4]

EXAMPLE 13

Example 11 was repeated except that a hexafunctional urethane acrylate of the following formula (d) was used in place of the hexafunctional urethane acrylate of the formula (b) and the resultant medium was evaluated in the same way as in Example 11.

Formula (d)

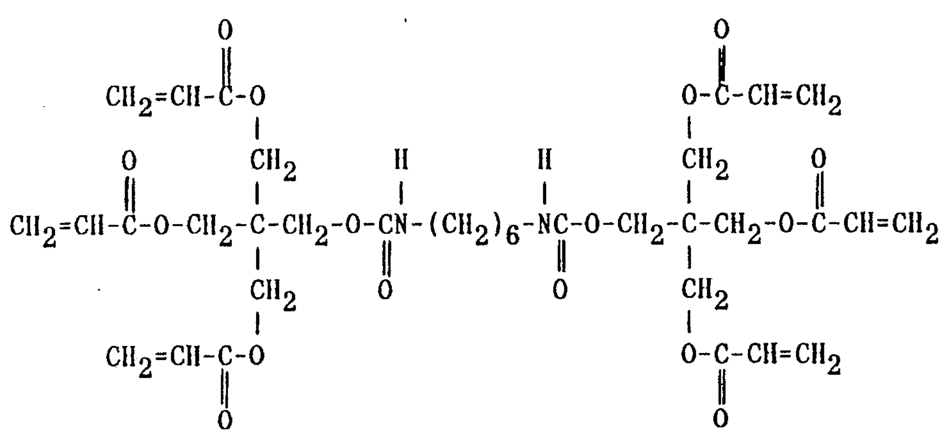

EXAMPLE 14

Example 11 was repeated except that a difunctional urethane acrylate (Aronix M-1100, supplied by Toagosei Chemical Industries, Co., Ltd) was used in place of the difunctional urethane acrylate of the formula (a), and the resultant medium was evaluated in the same way as in Example 11.

EXAMPLE 15

Example 11 was repeated by using, as an expansion layer resin, a blend resin comrising a difunctional urethane acrylate (NK Oligo U-A-102, supplied by Shin Nakamura Chemical Co., Ltd.) and a urethane acrylate of the formula (d) (U-A-102/d blend ratio = 5/5 by weight) as a hexafunctional urethane acrylate, and the resultant medium was evaluated in the same way as in Example 11.

EXAMPLE 16

Example 15 was repeated except that a hexafunctional urethane acrylate of the following formula (e) was used in place of the hexafunctional urethane acrylate of the formula (d), and the resultant medium was evaluated in the same way as in Example 11.

Formula (e)

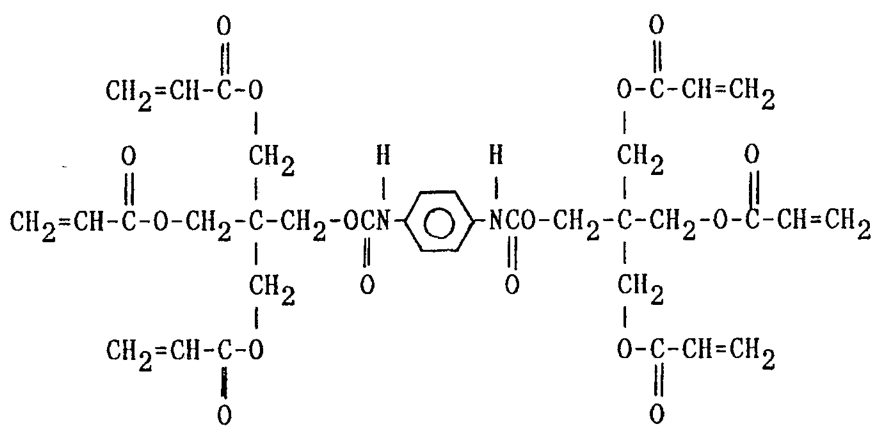

EXAMPLE 17

Example 11 was repeated except that a difunctional urethane acrylate (NK Oligo U-A-106, supplied by Shin Nakamura Chemical Co., Ltd.) was used in place of the difunctional urethane acrylate of the formula (a), and the resultant medium was evaluated in the same way as in Example 11.

Table 2

| Ex. No. | Elastic acrylate/hexafunctional acrylate | Solvent resistance (sec.) | Curing resistivity (J/cm$^2$) | Formation of dual layer | Elastic modulus (kg/mm$^2$) | Expansion coefficient (x$10^{-6}$/°C) | Elasticity recovery ratio (%) | Writing and erasing characteristics |
|---|---|---|---|---|---|---|---|---|
| 11 | a/b = 4/6 | 7 | 0.15 | ○ | 31 | 1.8 | 90 | ○ |
| 12 | a/c = 4/6 | 6 | 0.20 | ○ -Δ | 23 | 2.0 | 93 | ○ |
| 13 | a/d = 4/6 | 12 | 0.10 | ○ | 51 | 1.2 | 86 | ○ |
| 14 | M-1100/b = 4/6 | 7 | 0.18 | ○ | 35 | 2.1 | 91 | ○ |
| 15 | U-A-102/d = 5/5 | 9 | 0.25 | ○ | 46 | 1.1 | 88 | ○ |
| 16 | U-A-102/e = 5/5 | 10 | 0.21 | ○ | 55 | 1.3 | 90 | ○ |
| 17 | U-A-106/d = 4/6 | 9 | 0.12 | ○ | 40 | 1.4 | 92 | ○ |
| ○ : excellent | | | | | | | | |
| Δ : rather poor | | | | | | | | |
| x : poor | | | | | | | | |

EXAMPLE 18

A blend resin containing a difunctional urethane acrylate of the formula (a) in Example 11 and a hexafunctional urethane acrylate of the formula (b) in Example 11 (a/b blend ratio = 4/6 by weight) was used as an expansion layer resin ($P_1$). Ten (10) phr of a monomer of the following formula A as a fluorine-containing acrylate, 3 phr of 4′-methylmercapto-2-morpholino-2-methylpropiophenone and 0.5 phr of 2,4-diethylthioxanthone as a photoinitiator, and 10 phr of a polymethyne dyestuff of the formula (1) in Example 11 as a dyestuff for a 830 nm laser diode were added to the above expansion layer resin, and methyl ethyl ketone was used as a solvent to form a homogeneous coating solution. This solution was coated on a glass substrate and dried to form a coating having a thickness of about 3 to 4 µm. Then, the coating was irradiated with a 80 W/cm high-pressure mercury lamp to carry out crosslink-curing of the resin, and the resultant expansion layer was evaluated on solvent resistance, curing rate, formation of dual layer and writing and erasing characteristics in the same way as in Example 11.

Formula A:

$$CH_2=CH\underset{\underset{O}{\|}}{C}OCH_2CF_3$$

EXAMPLE 19

Example 18 was repeated except that the amount of the fluorine-containing acrylate of the formula A was changed to 20 phr, and the resultant layer was evaluated in the same way as in Example 18.

EXAMPLES 20 and 21

Example 18 was repeated except that the blend ratio between the difunctional urethane acrylate of the formula (a) and the hexafunctional urethane acrylate of the formula (b) was changed as a/b = 6/4 by weight, and that the fluorine-containing acrylate of the formula A was replaced with 5 or 10 phr of a monomer of the following formula B, and the resultant expansion layers were evaluated in the same way as in Example 18.

Formula B:

$$CH_2=CH\underset{\underset{O}{\|}}{C}OCH_2(CF_2)_4H$$

EXAMPLE 22

Ten (10) phr of a fluorine-containing monomer of the formula B in the Examples 20 and 21 was added to a resin blend containing a difunctional urethane acrylate (Aronix M-1100, supplied by Toagosei Chemical Industry Co., Ltd.) and hexafunctional urethane acrylate of the formula (b) (M-1100/b blend ratio = 6/4 by weight), and the procedure of Example 18 was repeated. The resultant expansion layer was evaluated in the same way as in Example 18.

Examples 23 and 24

Ten (10) phr of a fluorine-containing monomer of the formula B in Examples 20 and 21 or 20 phr of a

monomer of the following formula C was added to a blend resin containing a difunctional urethane acrylate (NK Oligo U-A-102, supplied by Shin Nakamura Chemical Co., Ltd.) and a hexafunctional urethane acrylate of the formula (e)(U-A-102/e blend ratio = 7/3 by weight), and the procedure of Example 18 was repeated. The resultant expansion layer was evaluated in the same way as in Example 18. 27

Formula C:

$$CH_2{=}CH\underset{\underset{O}{\|}}{C}OCH_2(CF_2)_2H$$

EXAMPLE 25

Example 18 was repeated except that β-trifluoromethyl methacrylate was used as a fluorine-containing acrylate in place of the-trifluoroethyl acrylate to form a dual layer medium. The resultant expansion layer had excellent solvent resistance to coating with a retention layer and the resultant data storage medium had excellent writing and erasing characteristics.

Table 3 summarizes the results. Table 3 clearly shows that when an elastic crosslinked product obtained by adding a fluorine-containing acrylate to an elastic urethane acrylate is used as an expansion layer, the solvent resistance to coating with the is retention layer remarkably improves and formation of the dual layer can be easily carried out. It is further shown that an optical data storage medium having excellent writing and erasing characteristics can be obtained.

Table 3

| Ex. No. | Acrylate | Fluorine monomer (phr) | Solvent resistance (sec.) | Formation of dual layer | Elastic modulus ($kg/mm^2$) | Expansion coefficient ($x10^{-5}/^{\circ}C$) | Elasticity recovery ratio (%) | Writing and erasing characteristics |
|---|---|---|---|---|---|---|---|---|
| 18 | a/b = 4/6 | A(10) | 13 | O | 29 | 1.6 | 88 | O |
| 19 | a/b = 4/6 | A(20) | 18 | O | 23 | 1.5 | 85 | O |
| 20 | a/b = 6/4 | B(5) | 21 | O | 10 | 2.8 | 94 | O |
| 21 | a/b = 6/4 | B(10) | 28 | O | 11 | 2.6 | 91 | O |
| 22 | M-1100/b = 6/4 | B(10) | 26 | O | 10 | 2.6 | 94 | O |
| 23 | U-A-102/c = 7/3 | B(10) | 22 | O | 6 | 3.0 | 96 | O |
| 24 | U-A-102/c = 7/3 | C(20) | 15 | O | 5 | 2.3 | 91 | O |
| O : excellent | | | | | | | | |
| Δ : rather poor | | | | | | | | |
| x : poor | | | | | | | | |

EXAMPLE 26

Pentaerythritol (PET) as a crosslinking agent was added to an elastic prepolymer having two isocyanate terminals (Coronate 4076, supplied by Nippon Urethane Kogyo K.K.), and 10 phr, based on the total solid content, of IR-820 was added as a dyestuff for an expansion layer. And, chloroform was added to form a homogeneous coating solution for an expansion layer. The coating solution was coated on a glass substrate, dried, and treated at 120° C for 2 hours to crosslink the prepolymer with a urea bond. The resultant expansion layer had a thickness of 3 to 4 µm. Thereafter, a methyl ethyl ketone solution of an epoxy acrylate (VR-60, supplied by Showa Kobunshi K.K.) containing 10 phr of HITC as a retention layer dyestuff and 2 phr of Irgacure 907 as a photoinitiator was coated on the expansion layer to form a layer having a thickness of about 1 µm. Then, the resultant layer was irradiated with a 80 $W/cm^2$ high-pressure mercury lamp to carry out UV curing of the layer, whereby a data storage medium comprising an expansion layer and a retention layer was obtained.

Writing and reading were carried out with a 830 laser beam of a laser diode, and erasing, with a 780 nm laser beam of a laser diode to show that data could be written, read and erased.

Physical property data

Table 4 summarizes physical property data of the expansion layer formed in Example 26.

Table 4

| Ex. No. | Expansion layer resin | Tg (° C) | Elastic modulus ($kg/mm^2$) | Expansion coefficient ($x10^{-5}$/° C) | Elasticity recovery ratio (%) |
|---|---|---|---|---|---|
| 26 | C-4076/PET | -8 | 0.93 | 3.9 | 99 |

EXAMPLE 27

A methyl ethyl ketone solution of brominated bisphenol A type epoxy acrylate S503 having the following structure and containing 1 phr of benzyldimethoxyketal (BDMK) and 1 phr of azobisisobutyronitrile (AIBN) was coated on a glass plate by a bar coating method to form a layer having a thickness of 100 µm, and the layer was irradiated with UV ray and cured by heating it in an oven at 80° C for 1 hour. The resultant thin film was peeled off the glass plate and measured for a tensile modulus by using an Instron 4302 (supplied by Instron, Inc) to show 193 $kg/mm^2$ at room temperature and 4.6 $kg/mm^2$ at 120° C. Further, the thin film had a glass transition temperature of 96° C.

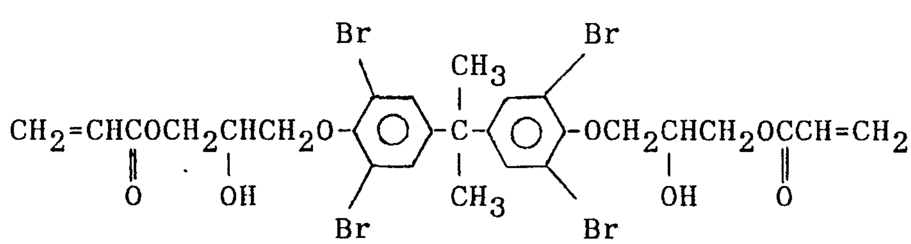

S503

A methyl ethyl ketone solution of urethane acrylate (NK ester U-122A, supplied by Shin Nakamura Chemical Co., Ltd.) containing 10 phr of a polymethyne dyestuff of formula (36) (IR820, supplied by Nippon Kayaku Co., Ltd.) and 2 phr of Irgacure 907 (supplied by Ciba Geigy) was coated on a glass substrate by a bar-coating method to form a layer having a thickness of 3 µm, and the layer was irradiated with UV ray to obtain an expansion layer. A methyl ethyl ketone solution of S-503 containing 10 phr of a cyanine dyestuff of formula (1) (NK-125, supplied by Japan Photosensitizer Research Institute) and 1 phr of BDMK was casted on the expansion layer and dried. And, the resultant layer was irradiated with UV ray in nitrogen atmosphere to form a retention layer. The resultant dual layer medium was irradiated with a laser beam having a wavelength of 840 nm, a power of 10 mW and a pulse width of 5 µ seconds to show that bumps having a diameter of 1 µm were formed. The bumps were irradiated with a defocused laser beam having a wavelength of 780 nm and a power of 7 mW for 10 µ seconds to show under microscopic observation that the bumps were erased.

EXAMPLE 28

Chloroprene having a terminal hydroxyl group (FH050, supplied by Denki Kagaku Kogyo K.K.) and a polyfunctional isocyanate, Coronate L, were mixed with each other in such amounts that the weight of the hydroxyl group was equivalent to that of the isocyanate, and 10 phr of IRD1001 (supplied by Yamamoto Kasei K.K.) was further added. The resultant mixture was coated by a bar coating method to form a layer having a thickness of 3 µm, and the layer was cured at 120° C for 1 hour to form an expansion layer. A retention layer was formed on the expansion layer in the same way as in Example 27. The resultant dual layer medium was irradiated with a laser beam having a wavelength of 840 nm, a power of 10 mW and a pulse width of 5 µ seconds to show that bumps having a diameter of 1 µm were formed. The bumps were irradiated with a defocused laser beam having a wavelength of 780 nm and a power of 7 mW to show under microscopic observation that the bumps were erased.

EXAMPLE 29

A methyl ethyl ketone solution of a bisphenol S type epoxy (n = 1) having an acrylate form in each of its terminals (to be abbreviated as "BSE-1" hereinafter) of the following formula, which contained 1 phr of benzyldimethoxyketal (BDMK) and 1 phr of azobisisobutyronitrile (AIBN), was coated on a glass plate by a bar coating method to form a layer having a thickness of 100 µm. The layer was irradiated with UV ray, and cured by heating it in an oven at 80° C for 1 hour. The resultant thin film was peeled off from the glass plate, and measured for tensile moduli with Instron 4302 (supplied by Instron, Inc.) to show 142 kg/mm$^2$ at room temperature and 3.2 kg/mm$^2$ at 120° C. Further, the thin film had a glass transition point of 88° C.

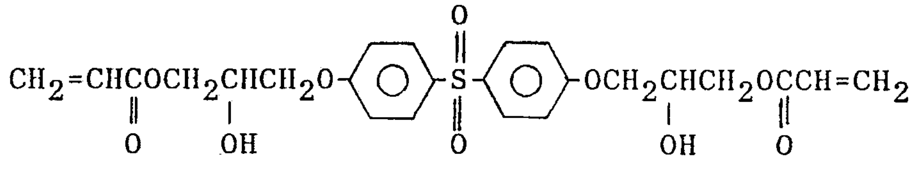

BSE-1

A methyl ethyl ketone solution of a cyanine dyestuff of the formula (1) (NK ester U-122A, supplied by Shin Nakamura Chemical Co., Ltd.) containing 10 phr of IR820, which is a polymethine dyestuff of formula (36), and 2 phr of Irgacure-907 (supplied by Ciba Geigy) was coated on a glass substrate by a bar coating method to form a layer having a thickness of 3 µm, and the layer was irradiated with UV ray to form an expansion layer. A methyl ethyl ketone solution of BSE-1 containing 10 phr of NK-125 and 1 phr of BDMK was casted on the expansion layer and dried, and the resultant layer was irradiated with UV ray in nitrogen atmosphere to form a retention layer. The resultant dual layer medium was irradiated with a laser beam having a wavelength of 840 nm, a power of 10 mW and a pulse width of 5 µ seconds to show that bumps having a diameter of 1 µm were formed. The bumps were irradiated with a defocused laser beam having a wavelength of 780 nm and a power of 7 mW for 10 microseconds to show under microscopic observation

that the bumps were erased.

EXAMPLE 30

Chloroprene having a terminal hydroxyl group (FH050, supplied by Denki Kagaku Kogyo K.K.) and a polyfunctional isocyanate, Coronate L, were mixed with each other in such amounts that the weight of the hydroxyl group was equivalent to that of the isocyanate, and further, 10 phr of a phthalocyanine dyestuff (IRD1001, supplied by Yamamoto Kasei K.K.) was added. The resultant mixture was coated by a bar coating method to form a layer having a thickness of 3 µm, and the layer was cured by heating it at 120° C for 1 hour to form an expansion layer. A retention layer was formed on the expansion layer in the same way as in Example 29. The resultant dual layer medium was irradiated with a laser beam having a wavelength of 840 nm, a power of 10 mW and a pulse width of 5 µ seconds to show that bumps having a diameter of 1 µm were formed. The bumps were irradiated with a defocussed beam having a wavelength of 780 nm and a power of 7 mW for 10 microseconds to show under microscopic observation that the bumps were erased.

EXAMPLE 31

Example 27 was repeated except that the S503 in Example 27 was replaced with Epicoat 5045-B-80 (having an acrylate in each of its two ends, supplied by Yuka Shell Epoxy K.K.) to form a dual layer medium. The dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 32

Example 27 was repeated except that the NK125 was replaced with a cyanine dye (CY-9, supplied by Nippon Kayaku Co., Ltd.) to form a dual layer medium. The dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 33

A methyl ethyl ketone solution of tetramethylbisphenol type epoxy having an acrylate in each of its two terminals (to be abbreviated as TMBAA hereinafter) of the following formula, which contained 1 phr of benzyldimethoxyketal (BDMK) and 1 phr of azobisisobutyronitrile (AIBN), was coated on a glass plate by a bar coating method to form a layer having a thickness of 100 µm, and the layer was irradiated with UV ray and cured by heating it in an oven at 80° C for 1 hour. The resultant thin layer was peeled off from the glass plate and measured for a tensile modulus with Instron 4302 (supplied by Instron Inc.) to show 142 kg/mm² at room temperature. Further, the thin layer had a glass transition temperature of 75° C.

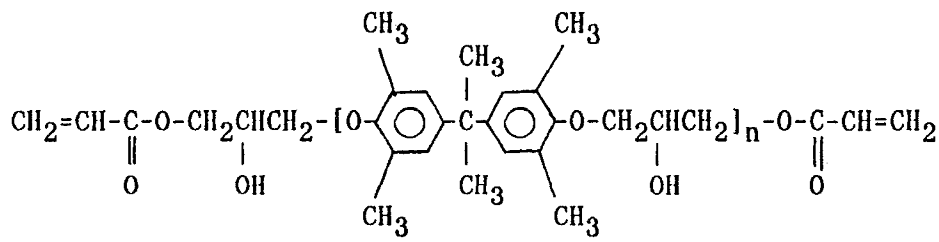

The procedure of Example 27 was repeated except that the S503 was replaced with TMBAA, whereby a dual layer medium was formed. The dual layer medium was irradiated with a laser beam having a wavelength of 840 nm, a power of 10 mW and a pulse width of 5 μ seconds to show formation of bumps having a diameter of 1 μm. The bumps were irradiated with a defocused laser beam having a wavelength of 780 nm and a power of 7 mW for 10 microseconds to show under microscopic observation that the bumps were erased.

EXAMPLE 34

A chloroform solution of a bisphenol A type epoxy acrylate resin of the following formula (to be abbreviated as BP-1 hereinafter) containing 1 phr of benzyldimethoxyketal (BDMK) and 1 phr of azobisisobutyronitrile (AIBN) was coated on a glass plate by a bar coating method to form a layer having a thickness of 100 μm, and the layer was irradiated with UV ray and cured by heating it in an oven at 80° C for 1 hour. The resultant thin film was peeled off from the glass plate and measured for tensile moduli with an Instron 4302 (supplied by Instron Inc.) to show 176 $kg.mm^2$ at room temperature and 0.5 $kg/mm^2$ at 120° C. And, the thin layer had a glass transition temperature of 72° C.

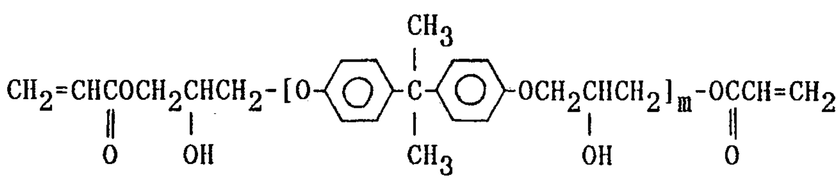

m = 6

BP-1

A methyl ethyl ketone (MEK) solution of a urethane acrylate (NK ester U-122A, supplied by Shin Nakamura Chemical Co., Ltd.) containing 10 phr of a polymethine dyestuff, IR 820, of the following formula and 2 phr of Irgacure-907 (supplied by Ciba Geigy) was coated on a glass substrate to form a layer having a thickness of 3 μm, and the layer was irradiated with UV ray to form an expansion layer. A chloroform solution of BP-1 containing 10 phr of a cyanine dyestuff (NK-125, supplied by Japan Photosensitizer Research Institute) of the following formula and 1 phr of BDMK was cast on the expansion layer and dried, and the resultant layer was irradiated with UV ray in nitrogen atmosphere to form a retention layer having a thickness of 0.8 μm.

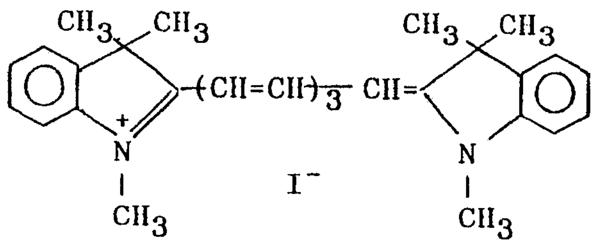

NK-125

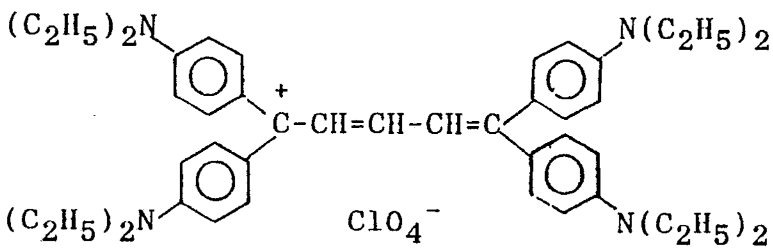

IR820

The resultant dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 35

A methyl ethyl ketone solution of an epoxy acrylate resin of the following formula (to be abbreviated as BP-2 hereinafter) containing 1 phr of benzyldimethoxyketal (BDMK) and 1 phr of azobisisobutyronitrile (AIBN) was coated on a glass plate by a bar coating method to form a layer having a thickness of 100 µm, and the layer was irradiated with UV ray and cured by heating it in an oven at 80° C for 1 hour. The resultant thin film was peeled off from the glass plate and measured for tensile moduli with an Instron 4302 (supplied by Instron Inc) to show 149 kg/mm$^2$ at room temperature and 3.2 kg/mm$^2$ at 120° C. And, the thin layer had a glass transition temperature of 70° C.

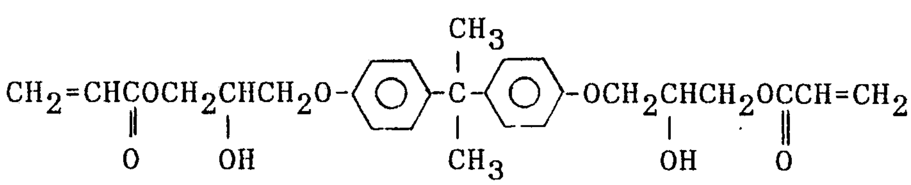

BP-2

A methyl ethyl ketone solution of a cyanine dyestuff of the formula (1) (NK ester U-122A, supplied by Shin Nakamura Chemical Co., Ltd.) containing 10 phr of IR820 which was a polymethine dyestuff of formula (36) and 2 phr of Irgacure-907 (supplied by Ciba Geigy) was coated on a glass substrate by a bar coating method to form a layer having a thickness of 3 µm, and the layer was irradiated with UV ray to form an expansion layer. A methyl ethyl ketone solution of BP-2 containing 10 phr of NK-125 which was a cyanine dyestuff of formula (1) and 1 phr of BDMK was cast on the expansion layer and dried, and the resultant layer was irradiated with UV ray in nitrogen atmosphere to form a retention layer. The resultant dual layer medium was irradiated with a laser beam having a wavelength of 840 nm, a power of 10 mW and a pulse width of 5 µ seconds to show formation of bumps having a diameter of 1 µm. The bumps were irradiated

with a defocused laser beam having a wavelength of 780 nm and a power of 7 mW for 10 microseconds to show under microscopic observation that the bumps were erased.

EXAMPLE 36

A chloroform solution of a bisphenol F type epoxy acrylate the following formula (to be abbreviated as BP-3 hereinafter) containing 1 phr of benzyldimethoxyketal (BDMK) and 1 phr of azobisisobutyronitrile (AIBN) was coated on a glass plate by a bar coating method to form a layer having a thickness of 100 µm, and the layer was irradiated with UV ray and cured by heating it in an oven at 80° C for 1 hour. The resultant thin film was peeled off from the glass plate and measured for tensile moduli with an Instron 4302 (supplied by Instron Inc) to show 102 kg/mm$^2$ at room temperature and 3.2 kg/mm$^2$ at 120° C. And, the thin layer had a glass transition temperature of 78° C.

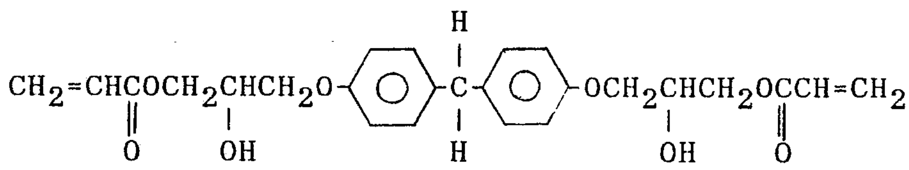

BP-3

A methyl ethyl ketone solution of NK ester U-122A (supplied by Shin Nakamura Chemical Co., Ltd.) containing 10 phr of IR820 which was a polymethine dyestuff of formula (36) and 2 phr of Irgacure-907 (supplied by Ciba Geigy) was coated on a glass substrate by a bar coating method to form a layer having a thickness of 3 µm, and the layer was irradiated with UV ray to form an expansion layer. A chloroform solution of BP-3 containing 10 phr of NK-125 which was a cyanine dyestuff of formula (1) and 1 phr of BDMK was cast on the expansion layer and dried, and the resultant layer was irradiated with UV ray in nitrogen atmosphere to form a retention layer. The resultant dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 37

A film having a thickness of 100 µm was formed by repeating Example 34 except that the BP-1 was replaced with VR 77 (supplied by Showa Kobunshi K.K.). The resultant film had a tensile modulus of 140 kg/mm$^2$ and a glass transition temperature of 71° C. Further, a dual layer medium comprising an expansion layer and a retention layer was formed by repeating Example 34 with the same exception as above. The dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 38

A dual layer medium comprising an expansion layer and a retention layer was formed by repeating Example 34 except that the BP-1 was replaced with VR-90 (supplied by Showa Kobunshi K.K.). The dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

EXAMPLE 39

A film having a thickness of 90 µm was formed by repeating Example 34 except that the BP-1 was replaced with an epoxy novolak acrylate having the following formula (to be abbreviated as BP-4 hereinafter). The resultant film had a tensile modulus of 210 kg/mm$^2$ and a glass transition temperature of 115° C. Further, a dual layer medium comprising an expansion layer and a retention layer was formed by repeating Example 34 with the same exception as above. The dual layer medium was irradiated with a laser beam having a wavelength of 840 nm, a power of 10 mW and a pulse width of 5 µ seconds to show formation of bumps having a diameter of 1 µm. The bumps were irradiated with a defocused laser beam having a wavelength of 780 nm and a power of 7 mW for 10 microseconds to show under microscopic observation that the bumps were erased.

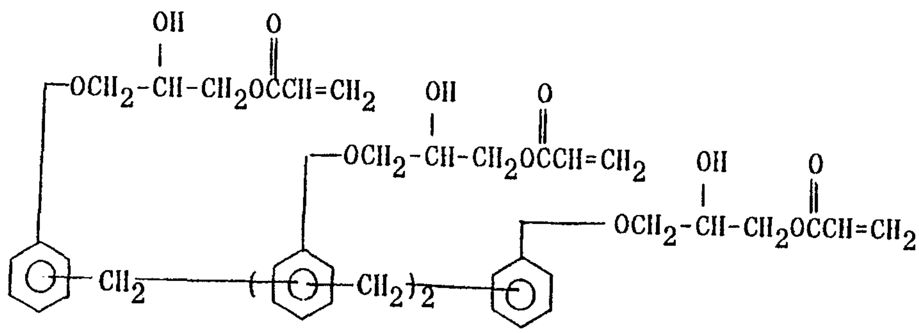

BP-4

EXAMPLE 40

A dual layer medium comprising an expansion layer and a retention layer was formed by repeating Example 34 except that the NK-125 was replaced with a naphthalocyanine dyestuff of the following formula.

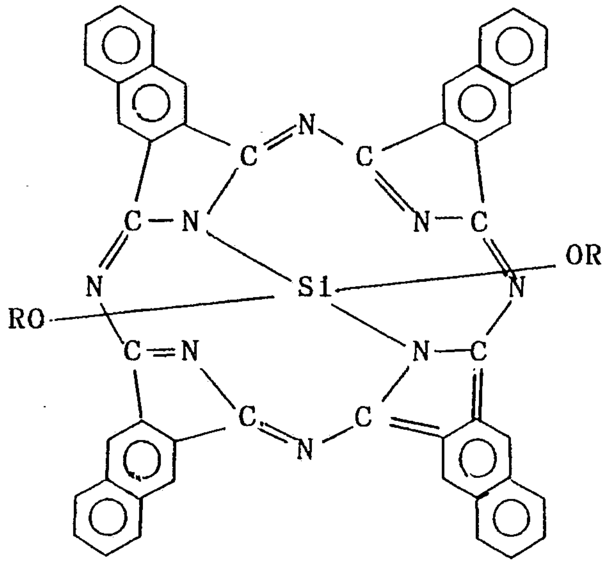

R = 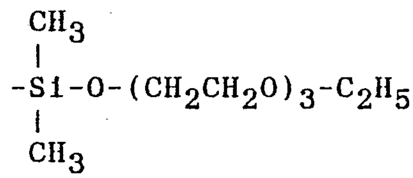

The dual layer medium was irradiated with a laser beam having a wavelength of 840 nm, a power of 10 mW and a pulse width of 5 μ seconds to show formation of bumps having a diameter of 1 μm. The bumps were irradiated with a defocused laser beam having a wavelength of 780 nm and a power of 7 mW for 10 microseconds to show under microscopic observation that the bumps were erased.

EXAMPLE 41

Chloroprene having a terminal hydroxyl group (FH050, supplied by Denki Kagaku Kogyo K.K.) and a polyfunctional isocyanate, Coronate L, were mixed with each other in such amounts that the weight of the hydroxyl group was equivalent to that of the isocyanate, and 10 phr of a phthalocyanine dyestuff IRD1001 (supplied by Yamamoto Kasei K.K.) was added. The resultant solution was coated by a bar coating method to form a layer having a thickness of 3 μm, and the layer was cured by heating it at 120° C to form an expansion layer. A chloroform solution of BP-1 containing 10 phr of NK-125 and 1 phr of BDMK was cast on the expansion layer, and dried. The resultant layer was irradiated with UV ray in nitrogen atmosphere to form a retention layer having a thickness of 8 μm. The resultant dual layer medium was irradiated with a laser beam having a wavelength of 840 nm, a power of 10 mW and a pulse width of 5 μ seconds to show formation of bumps having a diameter of 1 μm. The bumps were irradiated with a defocused laser beam having a wavelength of 780 nm and a power of 7 mW for 10 microseconds to show under microscopic observation that the bumps were erased.

EXAMPLE 42

Example 34 was repeated except that the BP-1 was replaced with ECHO-302 (supplied by Echo Resin and Laboratory), whereby a dual layer medium comprising an expansion layer and a retention layer was formed. The resultant dual layer medium was irradiated with a laser beam having a wavelength of 840 nm, a power of 10 mW and a pulse width of 5 μ seconds to show formation of bumps having a diameter of 1 μm. The bumps were irradiated with a defocused laser beam having a wavelength of 780 nm and a power of 7

mW for 10 microseconds to show under microscopic observation that the bumps were erased.

REFERENTIAL EXAMPLE 1

(Process for production of preparation of 3,3′-diallylbisphenol A - bisphenol Z copolycarbonates)

While a dry nitrogen gas was allowed to flow in a one-liter three-necked round flask provied with a stirrer, a thermometer, a gas-introducing tube and a reflux condenser, 53.7 parts by weight of a 48.5 % sodium hydroxide aqueous solution, 230.8 parts by weight of water, 31.4 parts by weight of 3,3′-diallylbisphenol A and 27.3 parts by weight of bisphenol Z were charged into the flask, and dissolved. The resultant solution was cooled to 20° C with an ice bath, and while it was stirred, 26.2 parts by weight of phosgene was gradually introduced into the flask over 1 hour. Then, 8.4 parts by weight of a 48.5 % sodium hydroxide aqueous solution was added, and further, 0.61 part by weight of p-t-butylphenol as a reaction terminator was added. And, the resultant mixture was allowed to continue a polymerization reaction at 30° C for 1 hour. After the reaction, a methylene chloride layer was separated, and the resultant reaction mixture was acidified with hydrochloric acid, and washed with water repeatedly to remove dissolved salts. Thereafter, methylene chloride was evaporated to give a solid (yield 99 %). The polymer so obtained had a specific viscosity, measured in methylene chloride at 20° C, of 0.21. The polymer was soluble in methylene chloride, chloroform, toluene, tetrahydrofuran and cyclohexanone by 10 % by weight. And, the measurement thereof by hydrogen nuclear magnetic resonance spectrum showed that it was a 2,2′-diallylbisphenol A-bisphenol Z (1:1) copolycarbonate of the following formula.

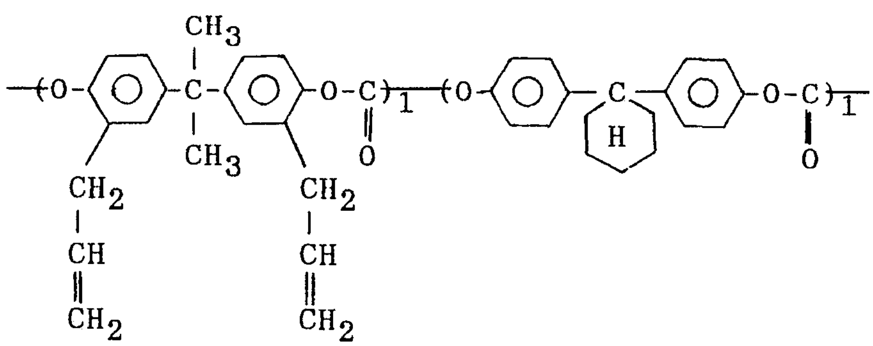

EXAMPLE 43

3 Parts by weight of Irgacure-907 (supplied by Ciba Geigy) as a photopolymerization initiator and parts by weight of a polymethine dyestuff IR-820 (supplied by Nippon Kayaku Co., Ltd) as a dyestuff for a 830 nm laser diode were added to 100 parts by weight of urethane acrylate (U-122A, supplied by Shin Nakamura Chemical Co., Ltd.) as an expansion layer resin $P_1$, and the resultant mixture was dissolved in methyl ethyl ketone as a solvent to form a coating solution. The coating solution was coated on a glass substrate to form a layer having a thickness of 3 to 4 µm, and dried. Then, the layer was UV-cured by irradiating it with a high-pressure mercury lamp at 80 $W/cm^2$ in nitrogen atmosphere for 30 minutes to form an expansion layer. Separately, 100 parts of the allyl-substituted polycarbonate copolymer obtained in Referential Example 1, 10 parts by weight of a cyanine dyestuff (NK-125, supplied by Japan Photosensitizer Research Institute), 10 parts of pentaerythritoltetra(3-mercaptopropionate) and 1 part by weight of Irgacure 907 were dissolved in chloroform to form a 10 wt.% homogeneous solution. This solution was coated on the above expansion layer to form a layer having a thickness of 1 µm, and dried at 80° C for 10 minutes. Then, the resultant layer was cured by irradiating it with a high-pressure mercury lamp having an irradiation energy of 80 $W/cm^2$ for 10 minutes while the layer was allowed to stand still. The resultant dual layer medium was irradiated with a laser beam of a laser diode having an oscillation wavelength of 830 nm and an output of 10 mW for 0.2 microsecond to show formation of clear projection portions (bumps) having a

diameter of 1.4 µm on the medium surface. When the medium was irradiated with a laser beam having a beam width of 5 µm, an oscillation wavelength of 780 nm and a power of 7 mW for 5 microseconds, the above bumps were erased to such an extent that they were unrecognizable under microscopic observation. These results show that the above data storage medium can function as a writable and erasable optical data storage medium.

EXAMPLE 44

Example 43 was repeated except that the allyl-substituted polycarbonate copolymer was replaced with an allyl-substituted polycarbonate homopolymer of the following formula, whereby a dual layer medium was obtained.

The resultant dual layer medium was irradiated with a laser beam of a laser diode having an oscillation wavelength of 830 nm and an output of 10 mW for 0.1 microsecond to show formation of clear projection portions (bumps) having a diameter of 1.4 µm on the medium surface. When the medium was irradiated with a laser beam having a beam width of 5 µm, an oscillation wavelength of 780 nm and a power of 7 mW for 4.0 microseconds, the above bumps were erased to such an extent that they were unrecognizable under microscopic observation. These results show that the above data storage medium can function as a writable and erasable optical data storage medium.

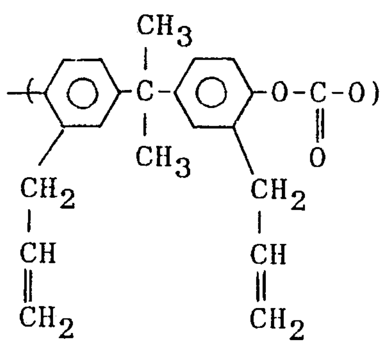

EXAMPLE 45

Example 43 was repeated except that the urethane acrylate U-122A used alone as an expansion layer was replaced with a mixture of it with a urethane acrylate oligomer (U-1226A, supplied by Shin Nakamura Chemical Co., Ltd.) as a polyfunctional crosslinking component, the mixture having a U-122A/U-1226A weight ratio of 4:6, whereby a dual layer medium was formed. The dual layer medium was irradiated with a laser beam of a laser diode having an oscillation wavelength of 830 nm and an output of 10 mW for 0.2 microsecond to show formation of clear projection portions (bumps) having a diameter of 1.6 µm on the medium surface. When the written spots of the medium were irradiated with a laser beam having a beam width of 5 µm, an oscillation wavelength of 780 nm and a power of 7 mW for 5.0 microseconds, the above bumps were erased to such an extent that they were unrecognizable under microscopic observation. These results show that the above data storage medium can function as a writable and erasable optical data storage medium.

EXAMPLE 46

Example 43 was repeated except that the pentaerythritoltetra(3-mercaptopropionate) was replaced with trimethylolpropane triacrylate, whereby a dual layer medium was formed. The dual layer medium was irradiated with a writing laser beam of a laser diode having an oscillation wavelength of 830 nm and an output of 10 mW for 0.2 microsecond in the same way as in Example 43 to show formation of clear projection portions (bumps). When the medium was irradiated with a laser beam having a beam width of 5

μm, an oscillation wavelength of 780 nm and a power of 7 mW in its written spots for 6 microseconds, the above bumps were erased to such an extent that they were unrecognizable under microscopic observation. These results show that the above medium can function as a writable and erasable optical data storage medium.

EXAMPLE 47

While the dual layer medium obtained in Example 45 was moved at a linear velocity of 2 m/second, it was irradiated with a laser beam having an oscillation wavelength of 840 nm and a power of 10 mW at 5 MHz (duty ratio 50). As a result, a line of clear bumps having a diameter of 1.2 μm was formed on the medium, and the C/N ratio thereof was 52 dB. Thereafter, when this line of formed or written bumps was continuously irradiated with the laser beam of a laser diode having an oscillation wavelength of 780 nm and a power of 7 mW, the above bumps were erased. This writing and erasing test was repeated 1,000 times to show no change in the C/N ratio. This result shows that the above data storage medium can function as an optical data storage medium having high writing and erasing repeatability characteristics.

EXAMPLE 48

Example 43 was repeated except for the use, as a retention layer, of 100 parts by weight of a polycarbonate copolymer (PC-1) of 3-butenyl and methyl-substituted p,p′-methylidenebisphenol and p,p′-cyclohexylidenebisphenol (molar ratio 1/1), represented by the following formula, whereby a dual layer medium was formed.

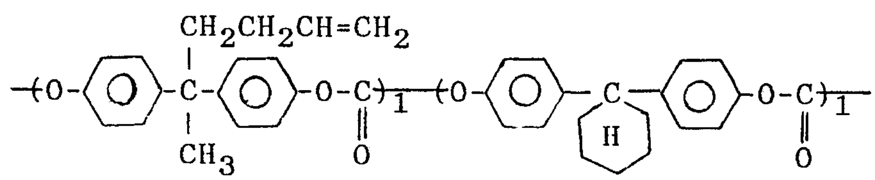

The dual layer medium was irradiated with a laser beam of a laser diode having an oscillation wavelength of 830 nm and an output of 10 mW to show formation of clear projecting portions (bumps) having a diameter of 1.4 μm on the medium surface. Thereafter, when the medium was irradiated with a laser beam having a beam diameter of 5 μm, an oscillation wavelength of 780 nm and a power of 7 mW in its written spots for 5 microseconds, the above bumps were erased to such an extent that they were unrecognizable under microscopic observation. These results show that the above medium can function as a writable and erasable optical data storage medium.

Further, while the above medium was turned at a linear velocity of 2 m/second, it was irradiated with a laser beam having an oscillation wavelength of 840 nm and a power of 10 mW at a cycle of 5 MHz (duty ratio 50). As a result, clear bumps having a diameter of 1.2 μm were formed on the medium, and the C/N ratio thereof was 55 dB. Thereafter, when these formed or written bumps were continuously irradiated with the laser beam of a laser diode having an oscillation wavelength of 780 nm and a power of 7 mW, the above bumps were erased. This writing and erasing test for operational evaluation was repeated 1,000 times to show almost no decrease in the C/N ratio.

EXAMPLE 49

Example 48 was repeated except that the PC-1 for a retention layer was replaced with a polycarbonate homopolymer (PC-2) of 3-butenyl and methyl-substituted p,p′-methylidenebisphenol, represented by the following formula, whereby a dual layer medium was obtained.

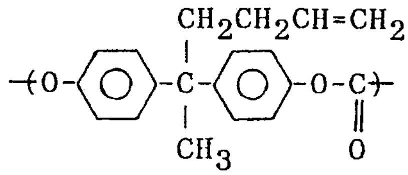

The dual layer medium obtained above was irradiated with a laser beam of a laser diode having an oscillation wavelength of 830 nm and an output of 10 mW for 1 microsecond to show formation of clear projecting portions (bumps) having a diameter of 1.4 µm on the medium surface. Thereafter, when these written spots of the medium were irradiated with a laser beam having a beam diameter of 5 µm, an oscillation wavelength of 780 nm and a power of 7 mW for 10 microseconds, the above bumps were erased to such an extent that they were unrecognizable under microscopic observation. These results show that the above medium can function as a writable and erasable optical data storage medium.

Further, while the above medium was turned at a linear velocity of 2 m/second, it was irradiated with a laser beam having an oscillation wavelength of 840 nm and a power of 10 mW at a cycle of 5 MHz (duty ratio 50). As a result, clear bumps having a diameter of 1.2 µm were formed on the medium, and the C/N ratio thereof was 50 dB. Thereafter, these formed or written bumps were continuously irradiated with the laser beam of a laser diode having an oscillation wavelength of 780 nm and a power of 7 mW to show that the above bumps were erased.

EXAMPLE 50

Example 48 was repeated except that a urethane acrylate U-122A/polyfunctional crosslinking component urethane acrylate oligomer (U-1226A, supplied by Shin Nakamura Chemical Co., Ltd.) mixture having a U-122A/U-1226A weight ratio of 4:6 was used for an expansion layer in place of the urethane acrylate U-122A used alone, whereby a dual layer medium was formed.

The dual layer medium obtained above was irradiated with a laser beam of a laser diode having an oscillation wavelength of 830 nm and an output of 10 mW for 1 microsecond to show formation of clear projecting portions (bumps) having a diameter of 1.6 µm on the medium surface. Thereafter, when these written spots of the medium were irradiated with a laser beam having a beam diameter of 5 µm, an oscillation wavelength of 780 nm and a power of 7 mW for 10 microseconds, the above bumps were erased to such an extent that they were unrecognizable under microscopic observation. These results show that the above medium can function as a writable and erasable optical data storage medium. Further, the medium was subjected to an operation test in the same way as in Example 48 to give a high C/N ratio of as high as 55 dB.

EXAMPLE 51

Example 48 was repeated except that the pentaerythritol tetra(3-mercaptopropionate) was replaced with trimethylolpropane triacrylate, whereby a dual layer medium was formed.

This dual layer medium was irradiated with a writing laser beam of a laser diode having an oscillation wavelength of 830 nm and an output of 10 mW in the same way as in Example 48 to show formation of clear projecting portions (bumps). Thereafter, when these written spots of the medium were irradiated with a laser beam having a beam diameter of 5 µm, an oscillation wavelength of 780 nm and a power of 7 mW for 6 microseconds, the above bumps were erased to such an extent that they were unrecognizable under microscopic observation. These results show that the above medium can function as a writable and erasable optical data storage medium.

EXAMPLE 52

Example 48 was repeated except that the PC-1 for the retention layer was replaced with a polycarbonate copolymer (PC-3) of the following formula, which was obtained from 3-butenyl and methyl-substituted p,p′-methylidene bisphenol and bisphenol A (molar ratio: 1:1), whereby a dual layer medium was obtained. The so-obtained dual layer medium was irradiated with a laser beam of a laser diode having an oscillation wavelength of 830 nm and an output of 10 mW for 1 microsecond to show formation of clear projecting portions (bumps) having a diameter of 1.4 μm on the medium surface.

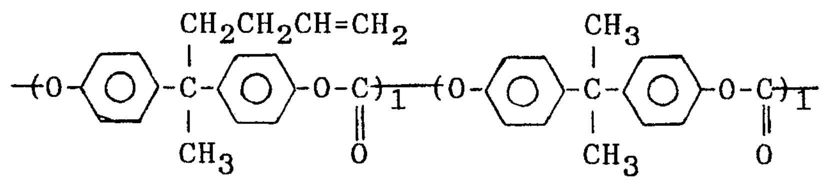

Thereafter, when these written spots of the medium were irradiated with a laser beam having a beam width of 5 μm, an oscillation wavelength of 780 nm and a power of 7 mW for 10 microseconds, the above bumps were erased to such an extent that they were unrecognizable under microscopic observation. These results show that the above medium can function as a writable and erasable optical data storage medium.

Further, while the above medium was turned at a linear velocity of 2 m/second, it was irradiated with a laser beam having an oscillation wavelength of 840 nm and a power of 10 mW at a cycle of 5 MHz (duty ratio 50). As a result, clear bumps having a width 1.2 μm were formed on the medium, and the C/N ratio thereof was 55 dB. Thereafter, these formed or written bumps were continuously irradiated with the laser beam of a laser diode having an oscillation wavelength of 780 nm and a power of 7 mW to show that the above bumps were erased. And, this writing and erasing test was repeated 500 times to show no appreciable change in the C/N ratio.

EXAMPLE 53

Example 48 was repeated except that the PC-1 for the retention layer was replaced with a polycarbonate copolymer (PC-4) of the following formula, which was obtained from vinyl-substituted p,p′-methylidene bisphenol and p,p′-cyclohexylidene bisphenol (molar ratio: 7/3), whereby a dual layer medium was obtained.

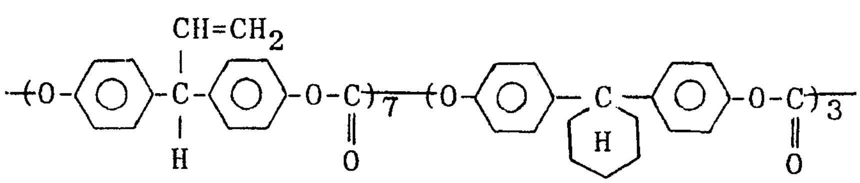

The so-obtained dual layer medium was irradiated with a laser beam of a laser diode having an oscillation wavelength of 830 nm and an output of 10 mW for 1 microsecond to show formation of clear projecting portions (bumps) having a diameter of 1.4 μm on the medium surface. Thereafter, when these written spots of the medium were irradiated with a laser beam having a beam diameter of 5 μm, an oscillation wavelength of 780 nm and a power of 7 mW for 10 microseconds, the above bumps were erased to such an extent that they were unrecognizable under microscopic observation. These results show that the above medium can function as a writable and erasable optical data storage medium. while the above medium was turned at a linear velocity of 2 m/second, it was irradiated with a laser beam having an oscillation wavelength of 840 nm and a power of 10 mW at a cycle of 5 MHz (duty ratio 50). As a result, clear bumps having a width 1.2 μm were formed on the medium, and the C/N ratio thereof was 57 dB. Thereafter, these formed or written bumps were continuously irradiated with the laser beam of a laser diode having an oscillation wavelength of 780 nm and a

EXAMPLE 54

Example 48 was repeated except that the PC-1 for the retention layer was replaced with a polycarbonate copolymer (PC-5) of the following formula, which was obtained from p,p′-(2-cyclohexenylidene) bisphenol and bisphenol A (molar ratio: 7/3), whereby a dual layer medium was obtained. The dual layer medium was subjected to an operation test in the same way as in Example 48 to give a C/N ratio of 48.

REFERENTIAL EXAMPLE 2

Synthesis of cinnamic acid-esterified phenoxy resin:

12.0 Grams of a phenoxy resin (supplied by General Science Corporation) was added to a mixture of 300 ml of preliminarily dehydrated N,N-dimethylacetamide (DMAc) and 100 ml of pyridine, and dissolved therein by stirring the resultant mixture at 50 to 55° C for 2 hours. The resultant solution was cooled to room temperature, and then, a solution of 3.5 g of cinnamic acid ohloride in 50 ml of DMAc was added dropwise over 15 minutes. The resultant mixture was stirred at room temperature for 2 hours, and further stirred at 55° C for 3 hours. The reaction mixture was allowed to stand overnight to cool it, and then poured into 1 liter of a hydrochloride aqueous solution having pH of 4.0 to precipitate a white polymer. The polymer was filtered, and then washed with water three times. Then, the washed polymer was immersed in ethanol, and the mixture was stirred for 2 hours to remove unreacted cinnamic acid chloride and by-product cinnamic acid. The polymer washed with ethanol was filtered by absorption, and dried under vacuum at 50° C for 3 hours.

The polymer so obtained had infrared absorption spectrum in which absorption ($\nu_{c=0}$) based on stretching vibration of carbonyl groups appeared at 1,710 $cm^{-1}$ and absorption based on stretching vibration of C=C double bonds appeared at 1,637 $cm^{-1}$. Further, on the basis of the ratio between the number of unsaturated double bond hydrogen atoms of cinnamoyl groups and the number of phenyl group hydrogen atoms in the phenoxy resin in proton nuclear magnetic resonance ($H^1$-NMR) spectrum, the polymer had a cinnamoyl group-introduction rate of 37 mol%.

The polymer (resin) was subjected to differential thermal analysis (DSC) to show an endothermic peak at a temperature of from 88.4° C to 95.0° C and a glass transition temperature at 92.5° C. This resin was easily soluble in chloroform, dimethylacetamide, tetrahydrofuran, and the like. Further, this resin gave a transparent uniform film by a casting method.

EXAMPLE 55

A liquid chloroprene rubber having a hydroxyl group in the terminal of its molecular chain (number average molecular weight: 5,100, FH-050, supplied by Denki Kagaku Kogyo K.K.) and a polyisocyanate (Coronate L, supplied by Nippon Urethane Kogyo K.K.) were mixed with each other in such amounts that the hydroxyl group/isocyanate group ratio was 1.0, and the mixture was diluted with chloroform whose amount was 5 times as large as that of the mixture. Then, 9 phr, based on the solid content of the resultant solution, of a polymethine dyestuff (IR820, supplied by Nippon Kayaku Co., Ltd.) was dissolved in the solution to prepare a coating solution. The coating solution was coated on a glass substrate, and the solvent was dried off. Thereafter, the formed layer was heat-treated in a drier at 120° C for 1 hour to carry out a crosslinking reaction of the polymer to give a layer having a thickness of 1.0 μm. A solution prepared by dissolving the modified phenoxy resin obtained in Referential Example 2 and 17 phr, based on the resin, of a cyanine dye (NK-125, supplied by Japan Photosensitizer Research Institute) in tetrahydrofuran was coated on the above layer, and then dried at 100° C for 10 minutes to give a layer. The layer so obtained was irradiated with UV ray having an intensity of 80 $mW/cm^2$ for 10 minutes to crosslink the modified phenoxy resin. The resultant medium was irradiated with the beam of a laser diode having an oscillation wavelength of 830 nm and output of 10 mW for 1 microsecond to show formation of clear projecting portions (bumps) having a diameter of 2.0 μm on the medium surface. Thereafter, when these written spots were irradiated with the beam of a laser diode having an oscillation wavelength of 780 nm and output of 5 mW for 7 microseconds, the bumps were erased to such an extent that they were unrecognizable under microscopic observation. This result shows that the above data storage medium can function as a writable and erasable optical data storage medium.

EXAMPLE 56

A liquid chloroprene rubber having a hydroxyl group in its molecular chain terminal (number average molecular weight: 5,100, FH-050, supplied by Denki Kagaku Kogyo K.K.) and a polyisocyanate (Coronate L, supplied by Nippon Urethane Kogyo K.K.) were mixed with each other in such amounts that the hydroxyl group/isocyanate group weight ratio was 1.0, and the mixture was diluted with chloroform whose amount was 5 times as large as that of the mixture. Then, 10 parts by weight, based on the solid content of the resultant solution, of a soluble vanadyl phthalocyanine (IRD-1001, supplied by Yamamoto Kagaku Gosei K.K.) was dissolved in the solution to prepare a coating solution. The coating solution was coated on a glass substrate, and the solvent was dried off. Thereafter, the formed layer was heat-treated in a drier at 120° C for 1 hour to carry out a crosslinking reaction of the polymer to give a layer having a thickness of 1.2 µm. A 5 wt.% tetrahydrofuran solution of the modified phenoxy resin of Referential Example 2 containing 10 % by weight, based on the resin, of ω-cyanopropyl-dimethylsiloxysilicon naphthalocyanine was coated on the above layer to form a layer having a thickness of about 0.7 µm. The resultant medium was irradiated with the beam of a laser diode having an oscillation wavelength of 830 nm and output of 10 mW for 1 microsecond to show formation of clear projecting portions (bumps) having a diameter of 1.5 µm on the medium surface. Thereafter, when these written spots were irradiated with the beam of a laser diode having an oscillation wavelength of 780 nm and output of 5 mW for 7 microseconds, the above bumps were erased to such an extent that they were unrecognizable under microscopic observation. This result shows that the above data storage medium can function as a writable and erasable optical data storage medium.

EXAMPLE 57

Example 55 was repeated except that the cyanine dyestuff (NK-125) was replaced with a tetra-t- amyl-substituted vanadylphthalocyanine (TY-IR-4, supplied by Yamamoto Kasei K.K.), whereby a dual layer medium was obtained. The dual layer medium was irradiated with the beam of a laser diode having an oscillation wavelength of 830 nm and a power of 10 mW for 1 microsecond to show formation of clear bumps. These bumps were erasable by irradiating them with a laser beam having a wavelength of 780 nm and a power of 7 mW for 10 microseconds.

EXAMPLE 58

Example 55 was repeated except that the cyanine dyestuff (NK-125) was replaced with a salt prepared by mixing the cyanine dye (NK-215, supplied by Japan Photosensitizer Research Institute) with a nickel dithiol complex (PA-1001, supplied by Mitsui Toatsu Fine Co., Ltd) in a mixing ration of 1:1, whereby a medium was obtained. The dual layer medium was irradiated with the beam of a laser diode having a power of 10 mW for 1 microsecond in the same way as in Example 55 to show formation of bumps having diameter of 1.6 µm. These bumps were so erasable as not to be recognizable under microscopic observation by irradiating them with a laser beam a power of 5 mW for 7 microseconds. When the written spots were continuously irradiated with the same laser beam (output 7 mW), the above bumps were erased to such an extent that they were unrecognizable under microscopic observation.

EXAMPLE 59

Ten (10) phr of an expansion layer dyestuff, which is a dyestuff (36), was added to an expansion layer resin, urethane acrylate (U-122A, supplied by Shin Nakamura Chemical Co., Ltd.) containing 2 % by weight of photoinitiator (Irgacure 907), and the resultant mixture was diluted with chloroform to form a homogeneous coating solution for an expansion layer. The solution was coated on a glass substrate, and dried. Then, the resultant layer was irradiated with a high-pressure mercury lamp having a power of 80 W/cm$^2$ to cure the resin. The resultant expansion layer had a thickness of 3 to 4 µm. Then, a methyl ethyl ketone solution of a polymethyl methacrylate containing a dyestuff (1) as a retention layer resin was coated on the expansion layer to form a layer having a thickness of about 1 µm, whereby a data storage medium comprising an expansion layer and a retention layer was formed.

When the data storage data medium was irradiated with that beam of a 830 nm laser diode which was focussed into a width of about 1 µm at a linear velocity of 3 m/sec at a cycle of 1 MHz and at a power of

10 mW, clear bumps (dome-formed projections) were formed, which formation shows that data storage is possible. Thereafter, these written data was read with the beam of a laser diode having a wavelength of 830 nm and a power of 1 mW to give a C/N of 50 dB. Then, the medium was irradiated with the beam of a laser diode having a wavelength of 780 nm to show that the data was erased.

EXAMPLE 60

Example 59 was repeated except that the retention layer dyestuff was replaced with a dyestuff (12) to form a data storage medium comprising an expansion layer and retention layer.

The above medium was used to write and read data with a 830 nm laser diode and erase data with a 780 nm laser diode in the same way as in Example 59 to show that writing, reading and erasing were possible.

EXAMPLE 61

Example 59 was repeated except that the expansion layer dyestuff was replaced with a dyestuff (38) to form a data storage medium comprising an expansion layer and retention layer.

The above medium was used to write and read data with a 830 nm laser diode and erase data with a 780 nm laser diode in the same way as in Example 59 to show that writing, reading and erasing were possible.

EXAMPLE 62

Example 59 was repeated except that the expansion layer dyestuff was replaced with a dyestuff (37) and that the retention layer dyestuff was replaced with a dyestuff (18) to form a data storage medium comprising an expansion layer and retention layer.

The above medium was used to write and read data with a 830 nm laser diode and erase data with a 780 nm laser diode in the same way as in Example 59 to show that writing, reading and erasing were possible.

EXAMPLE 63

Example 59 was repeated except that the retention layer dyestuff was replaced with a naphthalocyanine dyestuff (26) and that chloroform was used as a solvent for the coating solution for the retention layer, whereby a data storage medium comprising an expansion layer and retention layer was formed on a glass substrate.

The above medium was used to write and read data with a 830 nm laser diode and erase data with a 780 nm laser diode in the same way as in Example 59 to show that writing, reading and erasing were possible.

EXAMPLE 64

Example 59 was repeated except that the expansion layer dyestuff was replaced with a dyestuff (31) and that the retention layer dyestuff was replaced by a dyestuff (22) to form a data storage medium comprising an expansion layer and retention layer.

The above medium was used to write and read data with a 830 nm laser diode and erase data with a 780 nm laser diode in the same way as in Example 59 to show that writing, reading and erasing were possible.

EXAMPLE 65

Example 59 was repeated except that the retention layer dyestuff was replaced with a dyestuff (22) to

form a data storage medium comprising an expansion layer and retention layer.

The above medium was used to write and read data with a 830 nm laser diode and erase data with a 780 nm laser diode in the same way as in Example 59 to show that writing, reading and erasing were possible.

EXAMPLE 66

A urethane acrylate (U-122A, supplied by Shin Nakamura Chemical Co., Ltd.) which contained 2 % by weight of a photoinitiator (Irgacure 907) was mixed with a urethanen acrylate (U-1226A, supplied by Shin Nakamura Chemical Co., Ltd.) in a weight ratio of 4:6 to prepare an expansion layer resin. Ten (10) phr of a dyestuff (36) was added to the expansion layer resin, and the resultant mixture was diluted with chloroform to form a homogeneous coating solution for an expansion layer. This coating solution was coated on a glass substrate, and dried to form a layer. Then, the layer was irradiated with a 80 $W/cm^2$ high-pressure mercury lamp to cure the resin. The resultant expansion layer had a thickness of 3 to 4 $\mu$m. A 5 wt.% toluene solution of polymethyl methacrylate (PMMA) containing 10 % by weight of tri-n-hexylsilicon naphthalocyanine was coated on the expansion layer to form a layer having a thickness of about 1 $\mu$m. The resultant dual layer medium had a surface reflectivity, at 840 nm, of 12 %. The dual layer medium was set in a dynamic tester having a turning mechanism, and while it was turned at 1,800 rpm, it was irradiated with the beam of a laser diode having an oscillation wavelength of 830 nm and output of 10 mW as a pulse signal of 1 MHz to show formation of clear projecting portions (bumps) having a diameter of 1.5 $\mu$m on the medium surface. Thereafter, these written spots were irradiated with the beam, as a continuous beam, of a laser diode having an oscillation wavelength of 780 nm and output of 7 mW to show that the above bumps were erased to such an extent that they were unrecognizable under microscopic observation. This result shows that the above medium can function as a writable and erasable optical data storage medium. Further, even after this writing and erasing test was repeated $10^4$ times, the medium still retained sufficient bump-forming capability.

EXAMPLE 67

A 5 % chloroform solution was prepared by repeating the procedure for the formation of the coating solution for an expansion layer in Example 66 except that the crosslinking polyurethane was replaced with a polyurethane having an acrylate group in the molecular chain terminal (Photopolymerizable resin 3052C, supplied by Sumitomo 3M Bonds) and that 10 % by weight of a soluble vanadylphthalocyanine (IRD-1001, supplied by Yamamoto Kagaku Gosei K.K.) was incorporated into the polyurethane. This coating solution was coated on a glass substrate and the solvent was evaporated. The resultant layer was irradiated with a high-pressure mercury lamp under nitrogen atmosphere for 10 minutes to cure the polymer. A retention layer was formed on the resultant layer in the same way as in Example 66 to form a dual layer medium. While the medium was turned at 1,800 rpm, it was irradiated with the beam of a laser diode having an oscillation wavelength of 830 nm and output of 10 mW as a pulse signal of 1 MHz in the same way as in Example 66 to show formation of projecting portions (bumps) having a diameter of 1.3 $\mu$m on the medium surface. Thereafter, while this medium was turned at 1,800 rpm, it was continuously irradiated with the same laser beam (output 7 mW) for 10 microseconds. As a result, the above bumps were erased to such an extent that they were unrecognizable under microscopic observation.

EXAMPLE 68

Example 66 was repeated except that the PMMA was replaced with a mixture containing equivalent weights of an epoxy resin (Epicoat 828, supplied by Shell Chemical Co., Ltd.) and an alicyclic difunctional amine (Epomate-002, supplied by Shell Chemical Co., Ltd.) to form a 5 % chloroform solution and that a layer formed by coating this chloroform solution was heat-treated in an oven at 100° C for 10 minutes to cure the resin. The resultant dual layer medium was irradiated with the beam of a laser diode having an oscillation wavelength of 830 nm and output of 10 mW as a pulse signal of 1 MHz in the same way as in Example 66 to show formation of projecting portions (bumps) having a diameter of 1.4 $\mu$m on the medium surface. Thereafter, these written spots were irradiated with a continuous beam having an oscillation wavelength of 780 nm and an output of 7 mW to show that the above bumps were erased to such an extent

that they were unrecognizable under microscopic observation. This result shows that the above medium functions as a writable and erasable optical data storage medium.

SYNTHESIS EXAMPLE 1

0.25 Gram of NK-125 (supplied by Japan Photosensitizer Research Institute) of the following formula

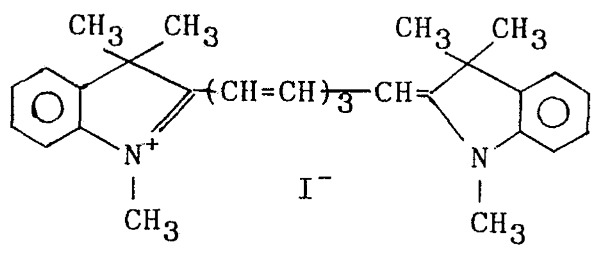

and 0.32 g of PA1001 (supplied by Mitsui Toatsu Fine Co., Ltd.)

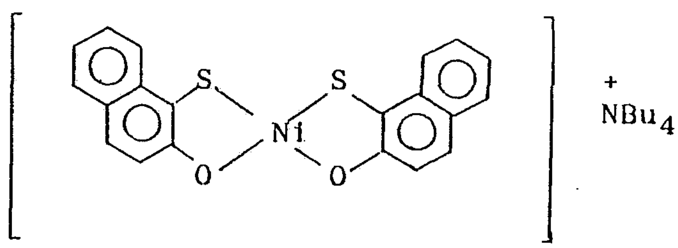

were dissolved in 30 ml of N,N-dimethylformamide (DMF), and after the resultant mixture was maintained at 80° C for 4 hours, it was poured into ice water. The resultant precipitate was filtered, washed with water, and dried under reduced pressure. The resultant powder was recrystallized from a mixed solution of DMF and ethanol to give 0.21 g of a brown crystal having metallic gloss. Elemental analysis thereof showed that the crystal was a complex salt of NK-125 cation and PA1001 anion. Yield: 53 %, m.p. 205° C.

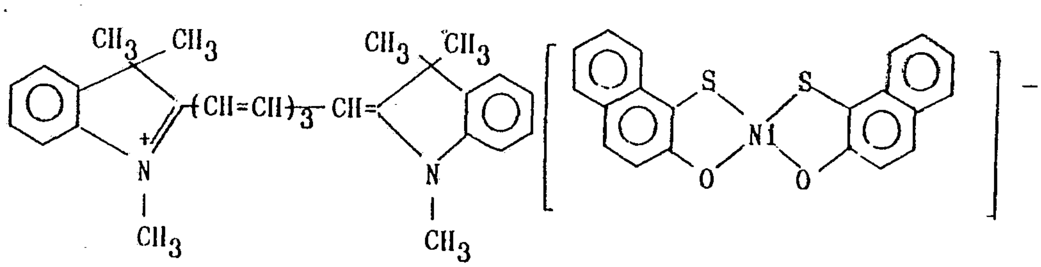

| Elemental analysis | | | |
|---|---|---|---|
| | H | C | N |
| Theoretical value | 5.69 | 74.34 | 3.54 |
| Found | 5.79 | 73.63 | 3.41 |

SYNTHESIS EXAMPLE 2

0.25 Gram of NK-125 (supplied by Japan Photosensitizer Research Institute) and 0.39 g of PA-1006 (supplied by Mitsui Toatsu Fine Co., Ltd.) were dissolved in 30 ml of N,N-dimethylformamide (DMF), and after the resultant mixture was maintained at 80° C for 4 hours, it was poured into ice water. The resultant precipitate was filtered, washed with water, and dried under reduced pressure. The resultant powder was recrystallized from a mixed solution of DMF and ethanol to give 0.18 g of a crystal. Elemental analysis of the crystal showed that it was a complex salt of NK-125 cation and PA1006 anion. Yield: 40 %, m.p. 205° C.

| Elemental analysis | | | |
|---|---|---|---|
| | H | C | N |
| Theoretical value | 3.78 | 53.07 | 3.02 |
| Found | 3.60 | 52.79 | 3.33 |

SYNTHESIS EXAMPLE 3

35 Milligram of NK-125 (supplied by Japan Photosensitizer Research Institute) and 50 mg of MIR1031 (supplied by Midori Chemicals Inc.) were dissolved in 10 ml of N,N-dimethylformamide (DMF), and after the resultant mixture was maintained at 80° C for 5 hours, it was poured into ice water. The resultant precipitate was filtered, washed with water, and dried under reduced pressure. The resultant powder was recrystallized from a mixed solution of DMF and ethanol to give 60 mg of a crystal. Elemental analysis of the crystal showed that it was a complex salt of NK-125 cation and MIR1031 anion. Yield: 97 %, m.p. 205° C.

| Elemental analysis | | | |
|---|---|---|---|
| | H | C | N |
| Theoretical value | 6.24 | 69.47 | 3.18 |
| Found | 5.85 | 65.05 | 2.81 |

SYNTHESIS EXAMPLE 4

0.29 Gram of CY-9 (supplied by Nippon Kayaku Co. Ltd.) and 0.32 g of PA1001 (supplied by Mitsui Toatsu Fine Co., Ltd.) were dissolved in 30 ml of N,N-dimethylformamide (DMF), and after the resultant mixture was maintained at 70° C for 4 hours, it was poured into ice water. The resultant precipitate was filtered, washed with water, and dried under reduced pressure. The resultant powder was recrystallized from a mixed solution of MEK and ethanol to give 0.30 g of a crystal. Elemental analysis of the crystal showed that it was a complex salt of CY-9 cation and PA1001 anion. Yield: 61 %, m.p. 130-150° C.

| Elemental analysis | | | |
|---|---|---|---|
| | H | C | N |
| Theoretical value<br>Found | 5.73<br>6.16 | 68.78<br>70.85 | 2.86<br>3.36 |

SYNTHESIS EXAMPLE 5

0.75 gram of IR820 (supplied by Nippon Kayaku Co., Ltd.) and 0.78 g of PA1006 (supplied by Mitsui Toatsu Fine Co., Ltd.) were dissolved in 60 ml of methyl ethyl ketone (MEK), and after the resultant mixture was maintained at 70° C for 3 hours, it was poured into ice water. The resultant precipitate was filtered, washed with water, and dried under reduced pressure. The resultant powder was recrystallized from a mixed solution of MEK and ethanol to give 0.75 g of a crystal. Elemental analysis of the crystal showed that it was a complex salt of IR820 cation and PA1006 anion. Yield: 40 %, m.p. 205° C.

| Elemental analysis | | | |
|---|---|---|---|
| | H | C | N |
| Theoretical value<br>Found | 5.10<br>5.34 | 57.14<br>57.15 | 4.68<br>4.47 |

EXAMPLE 69

A methyl ethyl ketone solution of NK ester U-122A (supplied by Shin Nakamura Chemical Co., Ltd.) containing 10 phr of IR820 and 2 phr of Irgacure 907 (supplied by Ciba Geigy) was coated on a glass substrate by a bar coating method to form a layer having a thickness of 3 μm, and the layer was irradiated with UV ray to form an expansion layer. A chloroform solution of an epoxy acrylate (SP4010CL-3x, supplied by Showa Kobunshi K.K.) containing 10 phr of the complex salt of NK-125 with PA1001 and 1 phr of benzoin ethyl ether was cast on the expansion layer and dried, and the resultant layer was irradiated with UV ray in nitrogen atmosphere to form a retention layer. The resultant dual layer medium was irradiated with a laser beam having a wavelength of 840 nm, a power of 10 mW and a pulse width of 5 microseconds to show formation of bumps having a diameter of 1 μm. While that portion of the medium which formed no bump was irradiated with a continuous pulse of a laser beam having a cycle of 1 microsecond, a pulse width of 500 nanoseconds, a wavelength of 840 nm and a power of 2 mW, the intensity of reflected light was continuously monitored with a laser irradiation microscope (supplied by Japan Science Engineering Co., Ltd.). Even in $10^6$ times, little decrease in reflectivity was observed.

EXAMPLE 70

An expansion layer was formed in the same way as in Example 69. A chloroform solution of SP4010CL-3x (supplied by Showa Kobunshi K.K.) containing 10 phr of a complex salt of a cyanine dye (NK-125, supplied by Japan Photosensitizer Research Institute) with a nickel complex (PA1006, supplied by Mitsui Toatsu Fine Co., Ltd.) and 1 phr of benzoin ethyl ether was cast on the expansion layer, and dried. The resultant layer was irradiated with UV ray in nitrogen atmosphere to form a retention layer. While the resultant mediumwas irradiated with a pulse of a laser beam having a cycle of 1 microsecond, a pulse width of 500 nanoseconds, a wavelength of 840 nm and a power of 2 mW, the intensity of reflected light was continuously monitored with a laser irradiation microscope (supplied by Japan Science Engineering Co., Ltd.). Even in $10^6$ times, little decrease in reflectivity was observed.

EXAMPLE 71

An expansion layer was formed in the same way as in Example 69. A chloroform solution of SP4010CL-3x (supplied by Showa kobunshi K.K.) containing 10 phr of a complex salt of NK-125 with a nickel complex (MIR1031 supplied by Midori Chemicals Inc.) and 1 phr of benzoin ethyl ether was cast on the expansion layer, and dried. The resultant layer was irradiated with UV ray in nitrogen atmosphere to form a retention layer. While the resultant medium was irradiated with a pulse of a laser beam having a cycle of 1 microsecond, a pulse width of 500 nanoseconds, a wavelength of 840 nm and a power of 2 mW, the intensity of reflected light was continuously monitored with a laser irradiation microscope (supplied by Japan Science Engineering Co., Ltd.). Even in $10^6$ times, little decrease in reflectivity was observed.

EXAMPLE 72

An expansion layer was formed in the same way as in Example 69. A chloroform solution of SP4010CL-3x (supplied by Showa Kobunshi K.K.) containing 10 phr of a complex salt of NK-125 with a cyanine dyestuff (CY-9, supplied by Nippon Kayaku Co., Ltd.) and 1 phr of benzoin ethyl ether was casted on the expansion layer, and dried. The resultant layer was irradiated with UV ray in nitrogen atmosphere to form a retention layer. While the resultant medium was irradiated with a pulse of a laser beam having a cycle of 1 microsecond, a pulse width of 500 nanoseconds, a wavelength of 840 nm and a power of 2 mW, the intensity of reflected light was continuously monitored with a laser irradiation microscope (supplied by Japan Science Engineering Co., Ltd.). Even in $10^6$ times, little decrease in reflectivity was observed.

EXAMPLE 73

A methyl ethyl ketone solution of NK ester U-122A containing 10 phr of the complex salt of IR820 with PA1006 and 2 phr of Irgacure 907 (supplied by Ciba Geigy) was coated on a glass substrate by a bar coating method to form a layer having a thickness of 3 $\mu$m, and the layer was irradiated with UV ray to form an expansion layer. A chloroform solution of epoxy acrylate SP4010CL-3x (supplied by Showa Kobunshi K.K.) containing 10 phr of a complex salt of NK-125 with PA1001 and 1 phr of benzoin ethyl ether was cast on the expansion layer and dried. The resultant layer was irradiated with UV ray in nitrogen atmosphere to form a retention layer. While the resultant medium was irradiated with a pulse of a laser beam having a cycle of 1 microsecond, a pulse width of 500 nanoseconds, a wavelength of 840 nm and a power of 2 mW, the intensity of reflected light was continuously monitored with a laser irradiation microscope (supplied by Japan Science Engineering Co., Ltd.). Even in $10^6$ times, little decrease in reflectivity was observed.

EXAMPLE 74

A homogeneous coating solution for an expansion layer was prepared by adding 10 phr of a polymethine dyestuff of the formula (36) and 5 phr of a diimonium compound (1) as an expansion layer dyestuff and 3 phr of Irgacure 907 as a photoinitiator to urethane acrylate U-122A (supplied by Shin Nakamura Chemical Co., Ltd.), and diluting the resultant mixture with methyl ethyl ketone as a solvent. The above coating solution was coated on a glass substrate and dried. And, the resultant layer was irradiated with a high-pressure mercury lamp having a power of 80 W/cm$^2$ to cure the resin, whereby an expansion layer was formed. The expansion layer had a thickness of 3.4 $\mu$m. Then, a methyl ethyl ketone solution of polymethyl methacrylate containing 10 phr of a cyanine dyestuff of formula (1) and 5 phr of an aminium compound (1) was coated on the expansion layer to form a layer having a thickness of about 1$\mu$m, whereby a data storage medium comprising an expansion layer and a retention layer was formed.

The above medium was irradiated with that beam of a 830 nm laser diode which was focussed into about 1 $\mu$m at a power of 10 mW, at a cycle of 1 MHz and a linear speed of 3 m/sec to show formation of clear bumps (dome-formed projections), which formation shows that writing is possible. This data was read with the beam of a laser diode having a wavelength of 830 nm and a power of 1 mW to give a C/N of 50 dB, which shows that writing is possible.

Further, the above data signal hardly decreased even when reading was carried out $10^5$ times. And, the above medium was irradiated with the beam of a 780 nm laser diode to show that the data could be erased.

EXAMPLE 75

Example 74 was repeated except that the dyestuff for the retention layer in Example 74 was replaced with a cyanine dyestuff of the formula (18), whereby a data storage medium comprising an expansion layer and a retention layer was formed.

Writing, reading and erasing were carried out in the same way as in Example 74 to show that the medium was writable, readable and erasable. And, the data signal hardly decreased even when the data reading was repeated $10^5$ times.

EXAMPLE 76

A homogeneous coating solution for an expansion layer was prepared by adding 10 phr of a polymethine dyestuff of the formula (36) as an expansion layer dyestuff, 5 phr of a quencher of formula (4) and 3 phr of Irgacure 907 as a photoinitiator to urethane acrylate U-122A (supplied by Shin Nakamura Chemical Co., Ltd.) and diluting the resultant mixture with methyl ethyl ketone as a solvent. The coating solution was coated on a glass substrate and dried. The resultant layer was irradiated with a high-pressure mercury lamp having a power of 80 W/cm$^2$ to optically cure the resin and form an expansion layer. The expansion layer had a thickness of 3.4 $\mu$m. Then, a methyl ethyl ketone solution of polymethyl methacrylate containing 10 phr of a cyanine dyestuff of the formula (1) and a quencher of the formula (9) was coated on the expansion layer to form a layer having a thickness of about 1 $\mu$m, and a data storage medium comprising an expansion layer and a retention layer was formed.

The above medium was irradiated with that beam of a 830 nm laser diode which was focussed into about 1 $\mu$m at a power of 10 mW, at a cycle of 1 MHz and a linear velocity of 3 m/sec to show formation of clear bumps (dome-formed projections), which formation shows that writing is possible. This data was read with the beam of a laser diode having a wavelength of 830 nm and a power of 1 mW to give a C/N of 50 dB, which shows that writing is possible.

Further, the above data signal hardly decreased even when reading was carried out $10^5$ times. And, the above medium was irradiated with the beam of a 780 nm laser diode to show that the data could be erased.

EXAMPLE 77

Example 76 was repeated except that the dyestuff for the retention layer in Example 76 was replaced with a cyanine dyestuff of the formula (12), whereby a data storage medium comprising an expansion layer and a retention layer was formed.

Writing, reading and erasing were carried out in the same way as in Example 76 to show that the medium was writable, readable and erasable. And, the data signal hardly decreased even when the data reading was repeated $10^5$ times.

EXAMPLE 78

A chloroform solution was prepared by dissolving 5 % by weight of a commercially available urethane acrylate (Ebecryl-220, Daicel-UCB) in chloroform, and 10 phr, based on the solid content of the solution, of a polymethine dyestuff (IR-8205, supplied by Nippon Kayaku Co., Ltd.) and 3 phr, based on the solid content of the solution, of benzoin ethyl ether as a photoinitiator were dissolved in the solution. The resultant solution was coated on a polyethylene terephthalate film (75 $\mu$m), and then, the solvent was dried off. And, the resultant layer was irradiated with a high-pressure mercury lamp (80 mW/cm$^2$) for 10 minutes to carry out a crosslinking reaction of the film-forming polymer, whereby a layer having a thickness of 3.3 $\mu$m was obtained. A 5 wt.% MEK solution of bisphenol-S-epoxy acrylate (supplied by Shin Nakamura Chemical Co., Ltd.) containing 17 phr of a cyanine dyestuff (NK-125, supplied by Japan Photosensitizer Research Institute) and 3 phr of benzoin ethyl ether was coated on the above layer to form a retention layer having a thickness of about 0.7 $\mu$m. The resultant dual layer medium had a reflectivity of 15 %. The medium was irradiated with the beam of a laser diode having an oscillation wavelength of 830 nm and output of 10 mW for 1 microsecond to show formation of clear projecting portions (bumps) having a diameter of 2.0 $\mu$m on the medium surface. Thereafter, these written spots were irradiated with the beam of a laser diode having an oscillation wavelength of 750 nm and output of 5 mW for 7 microseconds to show

that the above bumps were erased to such an extent that they were unrecognizable under microscopic observation. This result shows that the above medium can function as a writable and erasable optical data storage medium.

EXAMPLE 79

Example 78 was repeated except that the NK-215 as a dyestuff and the bisphenol-S-epoxy acrylate as a retention layer resin were replaced with polymethyl methacrylate containing 10 % by weight of tri-n-hexylsilicon naphthalocyanine and that a 5 % toluene solution of the polymethyl methacrylate was used to form a retention layer having a thickness of about 1.1 µm. The resultant dual layer medium had a reflectivity of 23 %. The medium was irradiated with the beam of a laser diode having an oscillation wavelength of 830 nm and output of 10 mW for 1 microsecond to show formation of clear projecting portions (bumps) having a diameter of 2.0 µm on the medium surface. Thereafter, these written spots were irradiated with the beam of a laser diode having an oscillation wavelength of 780 nm and output of 5 mW for 7 microseconds to show that the above bumps were erased to such an extent that they were unrecognizable under microscopic observation. This result shows that the above medium can function as a writable and erasable optical data storage medium.

EXAMPLE 80

Example 78 was repeated except that the bisphenol-S-epoxy acrylate was replaced with 1,1-cyclohexylene bisphenol-A-polycarbonate. The resultant dual layer medium was irradiated with a writing laser beam having an oscillation wavelength of 830 nm and a power of 10 mW in the same way as in Example 78 to show formation of clear bumps. Further, the bumps were erasable by irradiating them with a laser beam having a wavelength of 780 nm and a power of 7 mW for 10 microseconds.

EXAMPLE 81

An expansion layer was formed by repeating Example 78 except that the polymethine dyestuff (IR-820) as an expansion layer dyestuff was replaced with tetra-tert-amylvanadyloxyphthalocyanine.

Further, the procedure for formation of a retention layer in Example 78 was repeated as follows. A 5 wt.% chloroform solution was prepared by using a mixture of equivalent weights of bisphenol-A-diglycidyl ether and triethylenetetramine in place of the bisphenol-S-epoxy acrylate, and ω-cyanopropylsilicon naphthalocyanine was added to the chloroform solution such that its content was 20 phr based on the resin solid content. The resultant solution was coated on the above expansion layer, and the resultant layer was treated in the same way as in Example 78 to form a dual layer medium. The medium was irradiated with the beam of a laser diode having an oscillation wavelength of 830 nm and output of 10 mW under the same conditions as in Example 78 to show formation of clear projecting portions (bumps) having a diameter of 1.8 µm on the medium surface. Further, these written spots were continuously irradiated with the same laser beam (output 7 mW) to show that the above bumps were erased to such an extent that they were unrecognizable under microscopic observation. And, the spots were irradiated with a continuous beam having a wavelength of 780 nm and an output of 7 mW to show that the above bumps were erased to such an extent that they were unrecognizable under microscopic observation. This result shows that the above medium can function as a writable and erasable optical data storage medium.

EXAMPLE 82

Instead of forming an expansion layer directly on a reflective substrate as in Example 78, a 2.5 µm thick layer of polyurethane acrylate (Sumitomo 3M Bonds, T-3016) was formed on a reflective substrate and irradiated with a UV ray (82 mW/cm$^2$, 15 minutes) to crosslink the resin. Then, a 5 wt.% toluene solution of polymethyl methacrylate containing tri-n-hexylsilicon naphthalocyanine, used in Example 79, was coated on the above layer, and the resultant layer was dried in an oven at 100° C for 10 minutes. Thereafter, an expansion layer was formed on the above layer in the same way as in Example 78. The resultant medium had a reflectivity of 20.5 %. The medium was irradiated with a laser beam under the same conditions as

those in Example 78 to show formation of pits having a diameter of 1.6 µm. And, the pits were irradiated with a laser beam having a power of 7 mW to show that the pits were erased to such an extent that they were unrecognizable under microscopic observation. These results show that the above medium can function as a writable and erasable optical data storage medium.

EXAMPLE 83

A 2 to 3 µm thick layer of polyurethane acrylate (Sumitomo 3M Bonds) was formed on a reflective substrate formed by evaporating aluminum (120 µm thick) on a polyethylene terephthalate film (75 µm), and the polyurethane acrylate was crosslinked under irradiation with UV ray. Then, a mixed solution of an epoxy resin (DEN-444) and a trimellitic anhydride cyanine dyestuff (NR-21S) was coated on the layer, and subjected to a curing reaction to form a layer. And, further, an expansion layer was formed on the layer in the following manner to give a medium.

That is, a liquid chloroprene rubber having a hydroxyl group in its molecular chain terminal (number average molecular weight: 5,100, FH-050, supplied by Denki Kagaku Kogyo K.K.) and a polyisocyanate (Coronate, supplied by Nippon Urethane Kogyo K.K.) were mixed in such amounts that the hydroxyl group/isocyanate group molar ratio was 1.0, and the resultant mixture was diluted with chloroform whose amount was four times as large as that of the mixture. Five (5) phr, based on the solid content of the resultant solution, of a polymethine dyestuff (IR-820, supplied by Nippon Kayaku Co., Ltd.) was dissolved in the solution, the resultant solution was coated on the above layer, and the solvent was dried off. Thereafter, the resultant layer was heat-treated in a dryer at 120° C for 1 hour to crosslink the polymer to form the expansion layer having a thickness of 1.0 µm. The resultant medium had a reflectivity of 20.5 %. The medium was irradiated with a laser beam under the same conditions as those in Example 78 to form pits having a diameter of 1.6 µm. The pits were irradiated with a laser beam having a power of 7 mW to show that the pits were erased to such an extent that they were unrecognizable under microscopic observation.

Therefore, embodiments of this invention are as follows.

1. An erasable and highly reflective optical data storage medium comprising a substrate [b] provided with a layer [a] having high reflectivity to a writing laser beam and a writing layer [c] formed on the substrate [b], the writing layer [c] being constituted of a laminate of an expansion layer [d] and a retention layer [e] which are reversibly transformable with exothermic heat under laser beam irradiation, the expansion layer and retention layer containing near infrared absorbing dyestuffs [D1] and [D2] whose absorption wavelength regions do not overlap with each other completely, all of the contents of the above dyestuffs, the thickness of the writing layer [c] and the reflectivity of the reflection layer [a] being adjusted such that the above writing layer has a reflectivity of at least 15 % to writing and reading laser beams.

2. An optical data storage medium according to the above embodiment 1, wherein the expansion layer [d] of the writing layer [c] is formed on a highly reflective substrate [b] directly or through other transparent layer, a resin layer [e] is formed on the layer [d], and optionally, a transparent protective layer is formed on the resin layer [e].

3. An optical data storage medium according to the above embodiment 1, wherein a transparent, low-elasticity resin layer [h], a resin layer [e] and the expansion layer [d] are formed on a highly reflective layer [b] in this order and, optionally, a transparent protective layer is formed on the expansion layer [d].

4. An optical data storage medium according to the above embodiment 3, wherein the resin layer [h] is formed of a thermoplastic, low-elasticity rubber.

5. An optical data storage medium according to the above embodiment 1, wherein the writing layer [c] is provided with a second, highly reflective layer [h] thereon.

6. An optical data storage medium according to the above embodiment 1, wherein the high reflection layer [a] is a metal thin film.

7. An optical data storage medium according to the above embodiment 1, wherein the substrate [b] is a polymer film.

8. An optical data storage medium according to the above embodiment 1, wherein the substrate [b] is provided with a servotrack for writing signal thereon.

9. A method using the optical data storage medium recited in the above embodiment 1 for writing, reading and erasing optical data, which comprises a writing step i) of irradiating the writing layer [c] with a high-intensity laser beam which oscillates at a wavelength [λ1] corresponding to a maximum absorption wavelength of a dyestuff contained in the expansion layer of the writing layer [c] thereby to rapidly heat and quench irradiated spots partially or form projecting portions (bumps) in the expansion layer and the

retention layer laminated contiguously thereto, a reading step ii) of reading written data on the basis of a difference in reflectivity to writing and reading laser beams between a portion of the bumps formed in the above step i) and an unwritten portion, and a erasing step iii) of irradiating the bumps formed on the retention layer with a low-intensity laser beam having an oscillation wavelength [λ2] different from the above wavelength [λ1] to heat and gradually cool the bumps and reduce the bumps.

## Claims

1. An erasable optical data storage medium comprising a substrate and a dual layer formed on the substrate, the dual layer having characteristic features that:

(A) one layer of the dual layer is a first layer comprising a first resin which exhibits rubbery elasticity at 20° C and a first dyestuff having absorption in a visible light or near infrared ray region;

(B) the other layer of the dual layer is a second layer comprising a second resin which exhibits a glass state at 20° C, exhibits a rubbery state at an elevated temperature and can be reversibly transformed between the glass state and the rubbery state and a second dyestuff having absorption in a visible light or near infrared ray region; and

(C) one of the above first resin and the above second resin is a UV curable resin and the other of these two resins is a different UV curable resin or a thermosetting resin.

2. The optical data storage medium of claim 1, wherein the first resin has an elastic modulus, at 20° C, of 0.01 to 10 $kg/mm^2$.

3. The optical data storage medium of claim 1, wherein the first resin has an elasticity recovery ratio of at least 80 %.

4. The optical data storage medium of claim 1, wherein the first resin has a volume expansion coefficient of at least $1 \times 10^{-5}/°$ C.

5. The optical data storage medium of claim 1, wherein the first resin has a glass transition temperature of not more than 20° C.

6. The optical data storage medium of claim 1, wherein the first resin is a UV curable resin.

7. The optical data storage medium of claim 6, wherein the first resin is a UV curable resin of a UV curable component which mainly comprises an acryloyl or methacryloyl-terminated polyurethane.

8. The optical data storage medium of claim 1, wherein the first resin is a thermosetting resin.

9. The optical data storage medium of claim 8, wherein the first resin is a thermosetting resin of a thermosetting component which mainly comprises a thermosetting polyurethane or a polyurea.

10. The optical data storage medium of claim 1, wherein the second resin has a glass transition temperature of between 60° C and 150° C.

11. The optical data storage medium of claim 1, wherein the second resin has an elastic modulus, at 20° C, of at least 50 $kg/mm^2$.

12. The optical data storage medium of claim 1, wherein the second resin has an elastic modulus, at 20° C, of at least 80 $kg/mm^2$.

13. The optical data storage medium of claim 1, wherein the second resin is a UV curable resin.

14. The optical data storage medium of claim 13, wherein the second resin is a UV curable resin of a UV curable component which mainly comprises an acryloyl or methacryloyl-terminated epoxy oligomer.

15. The optical data storage medium of claim 13, wherein the second resin is a UV curable resin of a UV curable component which mainly comprises a modified epoxy novolak having an acryloyl or methacryloyl group.

16. The optical data storage medium of claim 13, wherein the second resin is a UV curable resin of a UV curable component which mainly comprises a polycarbonate having an unsaturated hydrocarbon group.

17. The optical data storage medium of claim 13, wherein the second resin is a UV curable resin of a UV curable component which mainly comprises a modified phenoxy resin having an unsaturated hydrocarbon group.

18. The optical data storage medium of claim 1, wherein the second resin is a cured product of a thermosetting resin.

19. The optical data storage medium of claim 18, wherein the second resin is a cured product of an epoxy resin.

20. The optical data storage medium of claim 1, wherein the first layer has a thickness of about 0.5 to about 10 μm.

21. The optical data storage medium of claim 1, wherein the second layer has a thickness of about 0.1 to about 3.0 μm.

22. The optical data storage medium of claim 1, wherein one of the first dyestuff and the second dyestuff has a maximum absorption wavelength at 700 to 800 nm and the other has a maximum absorption wavelength at 780 to 880 nm.

23. The optical data storage medium of claim 1, wherein the first dyestuff has a maximum absorption wavelength at 780 to 880 nm and the second dyestuff has a maximum absorption wavelength at 700 to 800 nm.

24. The optical data storage medium of claim 1, wherein the first dyestuff and the second dyestuff are independently selected from the group consisting of polymethine, phthalocyanine, naphthoquinone, anthraquinone, triphenylmethane, aminium and diimonium dyestuffs.

25. The optical data storage medium of claim 1, wherein the first dyestuff and the second dyestuff are independently used as a salt of cation of a polymethine dyestuff with anion of a singlet oxygen quencher.

26. The optical data storage medium of claim 1, wherein the first layer and the second layer further and independently contains a singlet oxygen quencher together with the first dyestuff and the second dyestuff.

27. The optical data storage medium of claim 1, wherein the dyestuff is a naphthalocyanine dyestuff containing an acryloyl or methacryloyl group, the resin is a UV curable resin having an acryloyl or methacryloyl group and the dyestuff is reacted with the resin.

28. The optical data storage medium of claim 1, wherein the first layer contains 5 to 30 phr, based on the first resin, of the first dyestuff.

29. The optical data storage medium of claim 1, wherein the second layer contains 5 to 30 phr, based on the second resin, of the second dyestuff.

30. A process for the production of an optical data storage medium comprising a substrate and a dual layer formed on the substrate, which comprises:

preparing a substrate having a first layer comprising a first resin which exhibits rubbery elasticity at 20° C and a first dyestuff which has absorption in a visible light or near infrared ray region,

coating on the first layer a curable mixture comprising a curable component capable of giving a second resin which exhibits a glass state at 20° C and which can be reversibly transformed between the glass state and a rubber state and a second dyestuff having absorption in a visible or near infrared ray region, and

curing the curable mixture.

31. The process of claim 30, wherein the curable component of the second resin is UV curable and the curable mixture is cured with UV irradiation.

32. The process of claim 30, wherein the substrate having the first layer is prepared by coating a curable mixture comprising the curable component of the first resin capable of giving the first layer and the first dyestuff having absorption in a visible or near infrared ray region, and curing the curable mixture.

33. The process of claim 32, wherein the curable component of the first resin is UV curable and the curable component is cured with UV irradiation.